(19) Europäisches Patentamt
European Patent Office
Office européen des brevets

(11) **EP 3 248 060 B1**

(12) **EUROPEAN PATENT SPECIFICATION**

(45) Date of publication and mention of the grant of the patent:
**02.09.2020 Bulletin 2020/36**

(21) Application number: **15820046.9**

(22) Date of filing: **30.12.2015**

(51) Int Cl.:
*G02F 1/1343* (2006.01) *G02F 1/137* (2006.01)
*C09K 19/00* (2006.01) *G02F 1/139* (2006.01)

(86) International application number:
**PCT/EP2015/002615**

(87) International publication number:
**WO 2016/116124 (28.07.2016 Gazette 2016/30)**

# (54) LIGHT MODULATION ELEMENT

LICHTMODULATIONSELEMENT

ÉLÉMENT DE MODULATION DE LUMIÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.01.2015 EP 15000198**
**02.07.2015 EP 15001979**

(43) Date of publication of application:
**29.11.2017 Bulletin 2017/48**

(73) Proprietor: **Merck Patent GmbH**
**64293 Darmstadt (DE)**

(72) Inventors:
- **CHEN, Kuan-Yu**
  **Zhongli 320 (TW)**
- **WU, Ming-Chou**
  **Zhongli 320 (TW)**
- **FIEBRANZ, Bernd**
  **64839 Münster (DE)**
- **SEIBERT, Harald**
  **64354 Reinheim (DE)**

(56) References cited:
- **GARDINER DAMIAN J ET AL: "Spontaneous induction of the uniform lying helix alignment in bimesogenic liquid crystals for the flexoelectro-optic effect", APPLIED PHYSICS LETTERS, AMERICAN INSTITUTE OF PHYSICS, 2 HUNTINGTON QUADRANGLE, MELVILLE, NY 11747, vol. 100, no. 6, 6 February 2012 (2012-02-06), pages 63501-63501, XP012157088, ISSN: 0003-6951, DOI: 10.1063/1.3682305 [retrieved on 2012-02-06]**
- **SEUNG-WON OH ET AL: "Fast bistable switching of a cholesteric liquid crystal device induced by application of an in-plane electric field", APPLIED OPTICS, OPTICAL SOCIETY OF AMERICA, WASHINGTON, DC; US, vol. 53, no. 31, 1 November 2014 (2014-11-01), pages 7321-7324, XP001592670, ISSN: 0003-6935, DOI: 10.1364/AO.53.007321 [retrieved on 2014-10-27]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 248 060 B1

## Description

The invention relates to a light modulation element as defined in appended claim 1.

The invention is further related to a method of production of said light modulation element and to the use of said light modulation element in various types of optical and electro-optical devices, such as electro-optical displays, liquid crystal displays (LCDs), non-linear optic (NLO) devices, and optical information storage devices. Liquid Crystal Displays (LCDs) are widely used to display information. LCDs are used for direct view displays, as well as for projection type displays. The electro-optical mode, which is employed for most displays, still is the twisted nematic (TN)-mode with its various modifications. Besides this mode, the super twisted nematic (STN)-mode and more recently the optically compensated bend (OCB)-mode and the electrically controlled birefringence (ECB)-mode with their various modifications, as e. g. the vertically aligned nematic (VAN), the patterned ITO vertically aligned nematic (PVA)-, the polymer stabilized vertically aligned nematic (PSVA)-mode and the multi domain vertically aligned nematic (MVA)-mode, as well as others, have been increasingly used. All these modes use an electrical field, which is substantially perpendicular to the substrates, respectively to the liquid crystal layer. Besides these modes there are also electro-optical modes employing an electrical field substantially parallel to the substrates, respectively the liquid crystal layer, like e.g. the In Plane Switching (short IPS) mode (as disclosed e.g. in DE 40 00 451 and EP 0 588 568) and the Fringe Field Switching (FFS) mode. Especially the latter mentioned electro-optical modes, which have good viewing angle properties and improved response times, are increasingly used for LCDs for modern desktop monitors and even for displays for TV and for multimedia applications and thus are competing with the TN-LCDs.

Further to these displays, new display modes using cholesteric liquid crystals having a relatively short cholesteric pitch have been proposed for use in displays exploiting the so-called "flexoelectric" effect, which is described inter alia by Meyer et al., Liquid Crystals 1987, 58, 15; Chandrasekhar, "Liquid Crystals", 2nd edition, Cambridge University Press (1992); and P.G. deGennes et al., "The Physics of Liquid Crystals", 2nd edition, Oxford Science Publications (1995).

Displays exploiting flexoelectric effect are generally characterized by fast response times typically ranging from 500 $\mu$s to 3 ms and further feature excellent grey scale capabilities.

In these displays, the cholesteric liquid crystals are e.g. oriented in the "uniformly lying helix" arrangement (ULH), which also give this display mode its name. For this purpose, a chiral substance, which is mixed with a nematic material, induces a helical twist whilst transforming the material into a chiral nematic material, which is equivalent to a cholesteric material.

The uniform lying helix texture is realized using a chiral nematic liquid crystal with a short pitch, typically in the range from 0.2 $\mu$m to 2 $\mu$m, preferably of 1.5 $\mu$m or less, in particular of 1.0 $\mu$m or less, which is unidirectional aligned with its helical axis parallel to the substrates of a liquid crystal cell. In this configuration, the helical axis of the chiral nematic liquid crystal is equivalent to the optical axis of a birefringent plate.

If an electrical field is applied to this configuration normal to the helical axis, the optical axis is rotated in the plane of the cell, similar as the director of a ferroelectric liquid crystal rotate as in a surface stabilized ferroelectric liquid crystal display.

The field induces a splay bend structure in the director, which is accommodated by a tilt in the optical axis. The angle of the rotation of the axis is in first approximation directly and linearly proportional to the strength of the electrical field. The optical effect is best seen when the liquid crystal cell is placed between crossed polarizers with the optical axis in the unpowered state at an angle of 22.5° to the absorption axis of one of the polarizers. This angle of 22.5° is also the ideal angle of rotation of the electric field, as thus, by the inversion the electrical field, the optical axis is rotated by 45° and by appropriate selection of the relative orientations of the preferred direction of the axis of the helix, the absorption axis of the polarizer and the direction of the electric field, the optical axis can be switched from parallel to one polarizer to the center angle between both polarizers. The optimum contrast is then achieved when the total angle of the switching of the optical axis is 45°. In that case, the arrangement can be used as a switchable quarter wave plate, provided the optical retardation, i.e. the product of the effective birefringence of the liquid crystal and the cell gap, is selected to be the quarter of the wavelength. In this context, the wavelength referred to is 550 nm, the wavelength for which the sensitivity of the human eye is highest.

The angle of rotation of the optical axis ($\Phi$) is given in good approximation by formula (1)

$$\tan \Phi = \bar{e} \; P_0 \, E \,/\, (2 \pi K) \qquad (1)$$

wherein

$P_0$ is the undisturbed pitch of the cholesteric liquid crystal,
$\bar{e}$ is the average [$\bar{e} = ½ (e_{splay} + e_{bend})$] of the splay flexoelectric coefficient ($e_{splay}$) and the bend flexoelectric

coefficient ($e_{bend}$),
E is the electrical field strength and
$K$ is the average [$K$ = ½ ($k_{11}$ + $k_{33}$)] of the splay elastic constant ($k_{11}$) and the bend elastic constant ($K_{33}$) and wherein
$\bar{e}$ / $K$ is called the flexo-elastic ratio.

This angle of rotation is half the switching angle in a flexoelectric switching element.

The response time ($\tau$) of this electro-optical effect is given in good approximation by formula (2)

$$\tau = [P_0/(2\pi)]^2 \cdot \gamma / K \qquad (2)$$

wherein

$\gamma$ is the effective viscosity coefficient associated with the distortion of the helix.

There is a critical field ($E_c$) to unwind the helix, which can be obtained from equation (3)

$$E_c = (\pi^2 / P_0) \cdot [k_{22}/(\varepsilon_0 \cdot \Delta\varepsilon)]^{1/2} \qquad (3)$$

wherein

$k_{22}$ is the twist elastic constant,
$\varepsilon_0$ is the permittivity of vacuum and
$\Delta\varepsilon$ is the dielectric anisotropy of the liquid crystal.

However, the main obstacle preventing the mass production of a ULH display is that its alignment is intrinsically unstable and no single surface treatment (planar, homeotropic or tilted) provides an energetically stable state. Due to this, obtaining a high quality dark state is difficult as a large amount of defects are present when conventional cells are used.

Attempts to improve ULH alignment mostly involving polymer structures on surfaces or bulk polymer networks, such as, for example described in, Appl. Phys. Lett. 2010, 96, 113503 " Periodic anchoring condition for alignment of a short pitch cholesteric liquid crystal in uniform lying helix texture*";*
Appl. Phys. Lett. 2009, 95, 011102, "Short pitch cholesteric electro-optical device based on periodic polymer structures*";*
J. Appl. Phys.2006, 99, 023511, "Effect of polymer concentration on stabilized large-tilt-angle flexoelectro-optic switching*";*
J. Appl. Phys. 1999, 86, 7, "Alignment of cholesteric liquid crystals using periodic anchoring*";*
Jap. J. Appl. Phys. 2009, 48, 101302, "Alignment of the Uniform Lying Helix Structure in Cholesteric Liquid Crystals*" or* US 2005/0162585 A1. Another attempt to improve ULH alignment was suggested by Carbone et al. in Mol. Cryst. Liq. Cryst. 2011, 544, 37 - 49. The authors utilized a surface relief structure created by curing an UV curable material by a two-photon excitation laser-lithography process in order to promote the formation of a stable ULH texture.

However, all above-described attempts require unfavorable processing steps, which are especially not compatible with the commonly known methods for mass production of LC devices.

Another attempt to improve ULH alignment was suggested by Gardiner et al. in Applied. Phys. Lett. 2012, 100, 063501. The authors utilized an IPS electrode structure in order to promote the formation of a stable ULH texture. By using an IPS electrode as alignment and driving electrode, the alignment voltage need to be much higher than utilizing a FFS like alignment electrode to provide same electric field strength, and cannot fully switch the display, where as a consequence, the transmittance is unfavorable lower.

Thus, one aim of the invention is to provide an alternative or preferably improved flexoelectric light modulation element of the ULH mode, which does not have the drawbacks of the prior art, and preferably have the advantages mentioned above and below.

These advantages are amongst others favourable high switching angles, favorable fast response times, favorable low voltage required for addressing, compatible with common driving electronics, and finally, a favorable really dark "off state", which should be achieved by an long term stable alignment of the ULH texture.

Other aims of the present invention are immediately evident to the person skilled in the art from the following detailed description.

Surprisingly, the inventors have found out that one or more of the above-defined aims can be achieved by

providing a light modulation element as defined in claim 1.

In particular, the stability of the ULH texture of the cholesteric liquid crystal material in the light modulation element of the present invention is significantly improved and finally results in an improved dark "off" state compared to devices of the prior art.

Terms and Definitions

The term "liquid crystal", "mesomorphic compound", or "mesogenic compound" (also shortly referred to as "mesogen") means a compound that under suitable conditions of temperature, pressure and concentration can exist as a mesophase (nematic, smectic, etc.) or in particular as a LC phase. Non-amphiphilic mesogenic compounds comprise for example one or more calamitic, banana-shaped or discotic mesogenic groups.

The term "mesogenic group" means in this context, a group with the ability to induce liquid crystal (LC) phase behaviour. The compounds comprising mesogenic groups do not necessarily have to exhibit an LC phase themselves. It is also possible that they show LC phase behaviour only in mixtures with other compounds. For the sake of simplicity, the term "liquid crystal" is used hereinafter for both mesogenic and LC materials.

Throughout the application, the term "aryl and heteroaryl groups" encompass groups, which can be monocyclic or polycyclic, i.e. they can have one ring (such as, for example, phenyl) or two or more rings, which may also be fused (such as, for example, naphthyl) or covalently linked (such as, for example, biphenyl), or contain a combination of fused and linked rings. Heteroaryl groups contain one or more heteroatoms, preferably selected from O, N, S and Se. Particular preference is given to mono-, bi- or tricyclic aryl groups having 6 to 25 C atoms and mono-, bi- or tricyclic heteroaryl groups having 2 to 25 C atoms, which optionally contain fused rings, and which are optionally substituted. Preference is furthermore given to 5-, 6- or 7-membered aryl and heteroaryl groups, in which, in addition, one or more CH groups may be replaced by N, S or O in such a way that O atoms and/or S atoms are not linked directly to one another. Preferred aryl groups are, for example, phenyl, biphenyl, terphenyl, [1,1':3',1"]terphenyl-2'-yl, naphthyl, anthracene, binaphthyl, phenanthrene, pyrene, dihydropyrene, chrysene, perylene, tetracene, pentacene, benzopyrene, fluorene, indene, indenofluorene, spirobifluorene, more preferably 1,4-phenylene, 4,4'-biphenylene, 1, 4-tephenylene.

Preferred heteroaryl groups are, for example, 5-membered rings, such as pyrrole, pyrazole, imidazole, 1,2,3-triazole, 1,2,4-triazole, tetrazole, furan, thiophene, selenophene, oxazole, isoxazole, 1,2-thiazole, 1,3-thiazole, 1,2,3-oxadiazole, 1,2,4-oxadiazole, 1,2,5-oxadiazole, 1,3,4-oxadiazole, 1,2,3-thiadiazole, 1,2,4-thiadiazole, 1,2,5-thiadiazole, 1,3,4-thiadiazole, 6-membered rings, such as pyridine, pyridazine, pyrimidine, pyrazine, 1,3,5-triazine, 1,2,4-triazine, 1,2,3-triazine, 1,2,4,5-tetrazine, 1,2,3,4-tetrazine, 1,2,3,5-tetrazine, or condensed groups, such as indole, isoindole, indolizine, indazole, benzimidazole, benzotriazole, purine, naphthimidazole, phenanthrimidazole, pyridimidazole, pyrazinimidazole, quinoxalinimidazole, benzoxazole, naphthoxazole, anthroxazole, phenanthroxazole, isoxazole, benzothiazole, benzofuran, isobenzofuran, dibenzofuran, quinoline, isoquinoline, pteridine, benzo-5,6-quinoline, benzo-6,7-quinoline, benzo-7,8-quinoline, benzoisoquinoline, acridine, phenothiazine, phenoxazine, benzopyridazine, benzopyrimidine, quinoxaline, phenazine, naphthyridine, azacarbazole, benzocarboline, phenanthridine, phenanthroline, thieno[2,3b]thiophene, thieno[3,2b]thiophene, dithienothiophene, isobenzothiophene, dibenzothiophene, benzothiadiazothiophene, or combinations of these groups. The heteroaryl groups may also be substituted by alkyl, alkoxy, thioalkyl, fluorine, fluoroalkyl or further aryl or heteroaryl groups.

In the context of this application, the term "(non-aromatic) alicyclic and heterocyclic groups" encompass both saturated rings, i.e. those that contain exclusively single bonds, and partially unsaturated rings, i.e. those that may also contain multiple bonds. Heterocyclic rings contain one or more heteroatoms, preferably selected from Si, O, N, S and Se. The (non-aromatic) alicyclic and heterocyclic groups can be monocyclic, i.e. contain only one ring (such as, for example, cyclohexane), or polycyclic, i.e. contain a plurality of rings (such as, for example, decahydronaphthalene or bicyclooctane). Particular preference is given to saturated groups. Preference is furthermore given to mono-, bi- or tricyclic groups having 3 to 25 C atoms, which optionally contain fused rings and that are optionally substituted. Preference is furthermore given to 5-, 6-, 7- or 8-membered carbocyclic groups in which, in addition, one or more C atoms may be replaced by Si and/or one or more CH groups may be replaced by N and/or one or more non-adjacent $CH_2$ groups may be replaced by -O- and/or -S-. Preferred alicyclic and heterocyclic groups are, for example, 5-membered groups, such as cyclopentane, tetrahydrofuran, tetrahydrothiofuran, pyrrolidine, 6-membered groups, such as cyclohexane, silinane, cyclohexene, tetrahydropyran, tetrahydrothiopyran, 1,3-dioxane, 1,3-dithiane, piperidine, 7-membered groups, such as cycloheptane, and fused groups, such as tetrahydronaphthalene, decahydronaphthalene, indane, bicyclo[1.1.1]-pentane-1,3-diyl, bicyclo[2.2.2]octane-1,4-diyl, spiro[3.3]heptane-2,6-diyl, octahydro-4,7-methanoindane-2,5-diyl, more preferably 1,4-cyclohexylene 4,4'- bicyclohexylene, 3,17-hexadecahydro-cyclopenta[a]phenanthrene, optionally being substituted by one or more identical or different groups L. Especially preferred aryl-, heteroaryl-, alicyclic- and heterocyclic groups are 1,4-phenylene, 4,4'-biphenylene, 1, 4-terphenylene, 1,4-cyclohexylene, 4,4'- bicyclohexylene, and 3,17-hexadecahydro-cyclopenta[a]-phenanthrene, optionally being substituted by one or more identical or different groups L.

Preferred substituents (L) of the above-mentioned aryl-, heteroaryl-, alicyclic- and heterocyclic groups are, for

example, solubility-promoting groups, such as alkyl or alkoxy and electron-withdrawing groups, such as fluorine, nitro or nitrile. Particularly preferred substituents are, for example, F, Cl, CN, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$ or $OC_2F_5$.

Above and below "halogen" denotes F, Cl, Br or I.

Above and below, the terms "alkyl", "aryl", "heteroaryl", etc., also encompass polyvalent groups, for example alkylene, arylene, heteroarylene, etc. The term "aryl" denotes an aromatic carbon group or a group derived there from. The term "heteroaryl" denotes "aryl" in accordance with the above definition containing one or more heteroatoms.

Preferred alkyl groups are, for example, methyl, ethyl, n-propyl, isopropyl, n-butyl, isobutyl, s-butyl, t-butyl, 2-methylbutyl, n-pentyl, s-pentyl, cyclopentyl, n-hexyl, cyclohexyl, 2-ethylhexyl, n-heptyl, cycloheptyl, n-octyl, cyclooctyl, n-nonyl, n-decyl, n-undecyl, n-dodecyl, dodecanyl, trifluoromethyl, perfluoro-n-butyl, 2,2,2-trifluoroethyl, perfluorooctyl, perfluorohexyl, etc.

Preferred alkoxy groups are, for example, methoxy, ethoxy, 2-methoxy-ethoxy, n-propoxy, i-propoxy, n-butoxy, i-butoxy, s-butoxy, t-butoxy, 2-methylbutoxy, n-pentoxy, n-hexoxy, n-heptoxy, n-octoxy, n-nonoxy, n-decoxy, n-undecoxy, n-dodecoxy.

Preferred alkenyl groups are, for example, ethenyl, propenyl, butenyl, pentenyl, cyclopentenyl, hexenyl, cyclohexenyl, heptenyl, cycloheptenyl, octenyl, cyclooctenyl.

Preferred alkynyl groups are, for example, ethynyl, propynyl, butynyl, pentynyl, hexynyl, octynyl.

Preferred amino groups are, for example, dimethylamino, methylamino, methylphenylamino, phenylamino.

The term "chiral" in general is used to describe an object that is non-superimposable on its mirror image.

"Achiral" (non- chiral) objects are objects that are identical to their mirror image.

The terms "chiral nematic" and "cholesteric" are used synonymously in this application, unless explicitly stated otherwise.

The pitch induced by the chiral substance ($P_0$) is in a first approximation inversely proportional to the concentration (c) of the chiral material used. The constant of proportionality of this relation is called the helical twisting power (HTP) of the chiral substance and defined by equation (4)

$$HTP \equiv 1 / (c \cdot P_0) \qquad (4)$$

wherein

c is concentration of the chiral compound.

The term "bimesogenic compound" relates to compounds comprising two mesogenic groups in the molecule. Just like normal mesogens, they can form many mesophases, depending on their structure. In particular, bimesogenic compound may induce a second nematic phase, when added to a nematic liquid crystal medium. Bimesogenic compounds are also known as "dimeric liquid crystals".

The term "alignment" or "orientation" relates to alignment (orientation ordering) of anisotropic units of material such as small molecules or fragments of big molecules in a common direction named "alignment direction". In an aligned layer of liquid-crystalline material, the liquid-crystalline director coincides with the alignment direction so that the alignment direction corresponds to the direction of the anisotropy axis of the material.

The term "planar orientation/alignment", for example in a layer of an liquid-crystalline material, means that the long molecular axes (in case of calamitic compounds) or the short molecular axes (in case of discotic compounds) of a proportion of the liquid-crystalline molecules are oriented substantially parallel (about 180°) to the plane of the layer.

The term "homeotropic orientation/alignment", for example in a layer of a liquid-crystalline material, means that the long molecular axes (in case of calamitic compounds) or the short molecular axes (in case of discotic compounds) of a proportion of the liquid-crystalline molecules are oriented at an angle θ ("tilt angle") between about 80° to 90° relative to the plane of the layer.

The wavelength of light generally referred to in this application is 550 nm, unless explicitly specified otherwise.

The birefringence Δn herein is defined in equation (5)

$$\Delta n = n_e - n_o \qquad (5)$$

wherein $n_e$ is the extraordinary refractive index and $n_o$ is the ordinary refractive index, and the average refractive index $n_{av.}$ is given by the following equation (6).

$$n_{av.} = [(2\, n_o^2 + n_e^2)/3]^{1/2} \qquad (6)$$

The extraordinary refractive index ne and the ordinary refractive index $n_o$ can be measured using an Abbe refractometer. $\Delta n$ can then be calculated from equation (5).

In the present application the term "dielectrically positive" is used for compounds or components with $\Delta\varepsilon > 3.0$, "dielectrically neutral" with $-1.5 \leq \Delta\varepsilon \leq 3.0$ and "dielectrically negative" with $\Delta\varepsilon < -1.5$. $\Delta\varepsilon$ is determined at a frequency of 1 kHz and at 20 °C. The dielectric anisotropy of the respective compound is determined from the results of a solution of 10 % of the respective individual compound in a nematic host mixture. In case the solubility of the respective compound in the host medium is less than 10 % its concentration is reduced by a factor of 2 until the resultant medium is stable enough at least to allow the determination of its properties. Preferably, the concentration is kept at least at 5 %, however, in order to keep the significance of the results a high as possible. The capacitance of the test mixtures are determined both in a cell with homeotropic and with homogeneous alignment. The cell gap of both types of cells is approximately 20 μm. The voltage applied is a rectangular wave with a frequency of 1 kHz and a root mean square value typically of 0.5 V to 1.0 V, however, it is always selected to be below the capacitive threshold of the respective test mixture.

$\Delta\varepsilon$ is defined as $(\varepsilon_{\parallel} - \varepsilon_{\perp})$, whereas $\varepsilon_{av.}$ is $(\varepsilon_{\parallel} + 2\,\varepsilon_{\perp}) / 3$.

The dielectric permittivity of the compounds is determined from the change of the respective values of a host medium upon addition of the compounds of interest. The values are extrapolated to a concentration of the compounds of interest of 100 %. The host mixture is disclosed in H.J. Coles et al., J. Appl. Phys. 2006, 99, 034104 and has the composition given in the table 1.

Table 1: Host mixture composition

| Compound | Concentration |
|---|---|
| F-PGI-ZI-9-ZGP-F | 25 % |
| F-PGI-ZI-11-ZGP-F | 25 % |
| FPGI-O-5-O-PP-N | 9.5 % |
| FPGI-O-7-O-PP-N | 39 % |
| CD-1 | 1.5 % |

The term "substantially parallel" encompasses also stripe patterns having small deviations in their parallelism to each other, such as deviations less than 10°, preferably less than 5°, in particular less than 2° with respect to their orientation to each other.

The term "stripes" relates in particular to stripes having a straight, curvy or zig-zag- pattern but is not limited to this. Furthermore, the outer shape or the cross-section of the stripes encompasses but is not limited to triangular, circular, semi-circular, or quadrangular shapes.

The term "substrate array" relates in particular to an ordered layer structure such as, in this order, substrate layer, 1st electrode layer, dielectric layer, 2nd electrode layer, and optionally alignment layer, or substrate layer, electrode layer, optionally alignment layer, or substrate layer electrode layer.

Furthermore, the definitions as given in C. Tschierske, G. Pelzl and S. Diele, Angew. Chem. 2004, 116, 6340-6368 shall apply to non-defined terms related to liquid crystal materials in the instant application.

## Brief Description of Drawings

Fig. 1 shows a schematically drawing of a light modulation element according to the present invention. It shows in detail the two substrates (1), one provided with the common electrode structure (2) and the other provided with the driving electrode structure (3), wherein the substrate with the driving electrode structure is additionally provided with an alignment electrode structure (4) which is separated from the electrode structure on by a dielectric layer (5).

Fig. 2 shows a schematically drawing of a light modulation element according to the present invention. It shows in detail a setup of the assembled cell according to Fig. 1,but the alignment electrode structure is on the common electrode side and separated by the dielectric layer.

Fig. 3 shows a schematically drawing of a light modulation element according to the present invention. It shows in detail the two substrate arrays comprising each a substrate (1), each provided with the driving (2) or common electrode structure (3), which are each additionally provided with an alignment electrode structure (4) which is separated from the driving (2) or common electrode structure (3)electrode structure on by a dielectric layer (5).

Fig. 4 shows a schematic drawing of a preferred embodiment of the electric circuit utilized in an electro-optical or optical device in accordance with the present invention.

Fig. 5 shows a schematically drawing of a light modulation element according to the present invention. It shows in detail the two substrates (1), one provided with the common electrode structure (2) and the other provided with the driving electrode structure (3), wherein the substrate with the driving electrode structure is additionally provided with an alignment electrode structure (4) which is separated from the electrode structure on by a dielectric layer (5) and wherein the alignment electrode structure is additionally provided with the alignment layer.

## Detailed Description

In a preferred embodiment of the invention the utilized substrates are substantially transparent. Transparent materials suitable for the purpose of the present invention are commonly known by the skilled person. In accordance with the invention, the substrates may consist, inter alia, each and independently from another of a polymeric material, of metal oxide, for example ITO and of glass or quartz plates, preferably each and independently of another of glass and/or ITO, in particular glass/glass.

Suitable and preferred polymeric substrates are for example films of cyclo olefin polymer (COP), cyclic olefin copolymer (COC), polyester such as polyethyleneterephthalate (PET) or polyethylene-naphthalate (PEN), polyvinylalcohol (PVA), polycarbonate (PC) or triacetylcellulose (TAC), very preferably PET or TAC films. PET films are commercially available for example from DuPont Teijin Films under the trade name Melinex ®. COP films are commercially available for example from ZEON Chemicals L.P. under the trade name Zeonor ® or Zeonex ®. COC films are commercially available for example from TOPAS Advanced Polymers Inc. under the trade name Topas ®.

The substrate layers can be kept at a defined separation from one another by, for example, spacers, or projecting structures in the layer. Typical spacer materials are commonly known to the expert and are selected, for example, from plastic, silica, epoxy resins, etc.

In a preferred embodiment, the substrates are arranged with a separation in the range from approximately 1 $\mu$m to approximately 50 $\mu$m from one another, preferably in the range from approximately 1 $\mu$m to approximately 25 $\mu$m from one another, and more preferably in the range from approximately 1 $\mu$m to approximately 15 $\mu$m from one another. The layer of the cholesteric liquid-crystalline medium is thereby located in the interspace.

The light modulation element in accordance with the present invention comprises a common electrode structure (2) and driving electrode structure (3) each provided directly on the opposing substrates (1), which are capable to allow the application of an electric field, which is substantially perpendicular to the substrates or the cholesteric liquid-crystalline medium layer.

Additionally, the light modulation element comprises an alignment electrode structure (4) and a driving electrode structure (3) each provided on the same substrate and separated from each other by a dielectric layer (5), which are capable to allow the application of an electric fringe field.

The common electrode structure is provided as an electrode layer on the entire substrate surface of one substrate.

Suitable transparent electrode materials are commonly known to the expert, as for example electrode structures made of metal or metal oxides, such as, for example transparent indium tin oxide (ITO), which is preferred according to the present invention.

Thin films of ITO are commonly deposited on substrates by physical vapor deposition, electron beam evaporation, or sputter deposition techniques.

The light modulation element comprises at least one dielectric layer, which is provided either only on the driving electrode structure, or on the common electrode structure, or both on the driving electrode structure and the common electrode structure.

Typical dielectric layer materials are commonly known to the expert, such as, for example, SiOx, SiNx, Cytop, Teflon, and PMMA.

The dielectric layer materials can be applied onto the substrate or electrode layer by conventional coating techniques like spin coating, roll-coating, blade coating, or vacuum deposition such as PVD or CVD. It can also be applied to the substrate or electrode layer by conventional printing techniques which are known to the expert, like for example screen printing, offset printing, reel-to-reel printing, letter press printing, gravure printing, rotogravure printing, flexographic printing, intaglio printing, pad printing, heat-seal printing, ink-jet printing or printing by means of a stamp or printing plate.

The light modulation element in accordance with the present invention comprises at least one alignment electrode structure (4), which is provided on the dielectric layer (5), which separates the driving electrode structure from the alignment electrode structure.

However it is likewise preferred, that the light modulation element in accordance with the present invention comprises at least two alignment electrode structures (4), which are provided on each of the dielectric layers (5) provided on the driving electrode layer and the common electrode layer.

Thus, the resulting structured substrate, comprising the substrate itself, the driving electrode structure, the dielectric layer and the alignment electrode structure forms a substrate array, preferably a FFS-type structured substrate array as it is commonly known by the expert.

Preferably, the alignment electrode structure comprises a plurality of substantially parallel stripe electrodes wherein the gap between the stripe electrodes is in a range of approximately 500 nm to approximately 10 μm, preferably in a range of approximately 1 μm to approximately 5 μm, the width of each stripe electrode is in a range of approximately 500 nm to approximately 10 μm, preferably in a range of approximately 1 μm to approximately 5 μm, and wherein the height of each stripe electrode is preferably in a range of approximately 10 nm to approximately 10 μm, preferably in a range of approximately 40 nm to approximately 2 μm.

Thus, the resulting structured substrate, comprising the substrate itself, the driving electrode structure, the dielectric layer and the alignment electrode structure forms a substrate array, preferably a FFS-type structured substrate array as it is commonly known by the expert.

Suitable electrode materials are commonly known to the expert, as for example electrode structures made of metal or metal oxides, such as, for example transparent indium tin oxide (ITO), which is preferred according to the present invention.

Thin films of ITO are commonly deposited on substrates by physical vapor deposition, electron beam evaporation, or sputter deposition techniques.

The light modulation element comprises at least one alignment layer which is provided on the common electrode layer.
In further preferred embodiment the alignment layer is provided on the alignment electrode structure.
In another preferred embodiment at least one alignment layer is provided on the alignment electrode structure and at least one alignment layer is provided on the common electrode structure.
In another preferred embodiment at least one alignment layer is provided on the alignment electrode structure and at least one alignment layer is provided on the opposing the alignment electrode structure.

Preferably the alignment layer induces a homeotropic alignment, tilted homeotropic or planar alignment to the adjacent liquid crystal molecules, and which is provided on the common electrode structure and/or alignment electrode structure as described above.

Preferably, the alignment layer(s) is/are made of planar alignment layer materials, which are commonly known to the expert, such as, for example, layers made of polyimides, such as, AL-3046, commercially available for example from JSR Corporation.

The alignment layer materials can be applied onto the substrate array or electrode structure by conventional coating techniques like spin coating, roll-coating, dip coating or blade coating. It can also be applied by vapour deposition or conventional printing techniques which are known to the expert, like for example screen printing, offset printing, reel-to-reel printing, letter press printing, gravure printing, rotogravure printing, flexographic printing, intaglio printing, pad printing, heat-seal printing, ink-jet printing or printing by means of a stamp or printing plate.

In a preferred embodiment, the alignment layer are preferably rubbed by rubbing techniques known to the skilled person in the art.

If only one alignment layer is present, the rubbing direction is preferably in the range of +/- 45°, more preferably in the range of +/- 20°, even more preferably in the range of +/-10, and in particular in the range of the direction +/- 5° with respect to the longitudinal axis of the stripe pattern of the alignment electrode structure or the length of the stripes.

If at least two alignment layers are present, which are each provided on opposing common electrode structure and/or alignment electrode structures, the rubbing direction of one of the alignment layers is preferably in the range of +/- 45°, more preferably in the range of +/- 20°, even more preferably in the range of +/-10, and in particular in the range of the direction +/- 5° with respect to the longitudinal axis of the stripe pattern of the alignment electrode structure or the length of the stripes and the other, opposing alignment layer is not treated by any rubbing technique.

If two alignment layers are present, which are each provided on opposing common electrode structure and/or alignment electrode structures, it is likewise preferred, that the rubbing direction of one of the alignment layers is preferably in the range of +/- 45°, more preferably in the range of +/- 20°, even more preferably in the range of +/-10, and in particular in the range of the direction +/- 5° with respect to the longitudinal axis of the stripe pattern of the alignment electrode structure or the length of the stripes and the rubbing direction of the opposing alignment layer is substantially antiparallel.

The term "substantially antiparallel" encompasses also rubbing directions having small deviations in their antiparallelism to each other, such as deviations less than 10°, preferably less than 5°, in particular less than 2° with respect

to their orientation to each other.

In a further preferred embodiment, the alignment layer substitutes the dielectric layer and no additional alignment layer is provided on the side of the alignment electrode.

In a preferred embodiment of the invention, the light modulation element comprises two or more polarisers, at least one of which is arranged on one side of the layer of the liquid-crystalline medium and at least one of which is arranged on the opposite side of the layer of the liquid-crystalline medium. The layer of the liquid-crystalline medium and the polarisers here are preferably arranged parallel to one another.

The polarisers can be linear polarisers. Preferably, precisely two polarisers are present in the light modulation element. In this case, it is furthermore preferred for the polarisers either both to be linear polarisers. If two linear polarisers are present in the light modulation element, it is preferred in accordance with the invention for the polarisation directions of the two polarisers to be crossed.

It is furthermore preferred in the case where two circular polarisers are present in the light modulation element for these to have the same polarisation direction, i.e. either both are right-hand circular-polarised or both are lefthand circular-polarised.

The polarisers can be reflective or absorptive polarisers. A reflective polariser in the sense of the present application reflects light having one polarisation direction or one type of circular-polarised light, while being transparent to light having the other polarisation direction or the other type of circular-polarised light. Correspondingly, an absorptive polariser absorbs light having one polarisation direction or one type of circular-polarised light, while being transparent to light having the other polarisation direction or the other type of circular-polarised light. The reflection or absorption is usually not quantitative; meaning that complete polarisation of the light passing through the polariser does not take place.

For the purposes of the present invention, both absorptive and reflective polarisers can be employed. Preference is given to the use of polarisers, which are in the form of thin optical films. Examples of reflective polarisers which can be used in the light modulation element according to the invention are DRPF (diffusive reflective polariser film, 3M), DBEF (dual brightness enhanced film, 3M), DBR (layered-polymer distributed Bragg reflectors, as described in US 7,038,745 and US 6,099,758) and APF (advanced polariser film, 3M).

Examples of absorptive polarisers, which can be employed in the light modulation elements according to the invention, are the Itos XP38 polariser film and the Nitto Denko GU-1220DUN polariser film. An example of a circular polariser, which can be used in accordance with the invention, is the APNCP37-035-STD polariser (American Polarizers). A further example is the CP42 polariser (ITOS).

The light modulation element may furthermore comprise filters, which block light of certain wavelengths, for example, UV filters. In accordance with the invention, further functional layers commonly known to the expert may also be present, such as, for example, protective films and/or compensation films.

Suitable cholesteric liquid crystalline media for the light modulation element according to the present invention are commonly known by the expert and typically comprise at least one bimesogenic compound and at least one chiral compound.

In view of the bimesogenic compounds for the ULH-mode, the Coles group published a paper (Coles et al., 2012 (Physical Review E 2012, 85, 012701)) on the structure-property relationship for dimeric liquid crystals. Further bimesogenic compounds are known in general from prior art (cf. also Hori, K., Limuro, M., Nakao, A., Toriumi, H., J. Mol. Struc. 2004, 699, 23-29 or GB 2 356 629).

Symmetrical dimeric compounds showing liquid crystalline behaviour are further disclosed in Joo-Hoon Park et al. "Liquid Crystalline Properties of Dimers Having o-, m- and p- Positional Molecular structures", Bill. Korean Chem. Soc., 2012, Vol. 33, No. 5, pp. 1647-1652.

Similar liquid crystal compositions with short cholesteric pitch for flexoelectric devices are known from EP 0 971 016, GB 2 356 629 and Coles, H.J., Musgrave, B., Coles, M.J., and Willmott, J., J. Mater. Chem., 11, p. 2709-2716 (2001). EP 0 971 016 reports on mesogenic estradiols, which, as such, have a high flexoelectric coefficient.

Typically, for light modulation elements utilizing the ULH mode the optical retardation d*Δn (effective) of the cholesteric liquid-crystalline medium should preferably be such that the equation (7)

$$\sin 2(\pi \cdot d \cdot \Delta n / \lambda) = 1 \qquad (7)$$

wherein

d is the cell gap and
λ is the wavelength of light

is satisfied. The allowance of deviation for the right hand side of equation is +/- 3 %.

The dielectric anisotropy (Δε) of a suitable cholesteric liquid-crystalline medium should be chosen in that way

that unwinding of the helix upon application of the addressing voltage is prevented. Typically, Δε of a suitable liquid crystalline medium is preferably higher than -5, and more preferably 0 or more, but preferably 10 or less, more preferably 5 or less and most preferably 3 or less.

The utilized cholesteric liquid-crystalline medium preferably have a clearing point of approximately 65°C or more, more preferably approximately 70°C or more, still more preferably 80°C or more, particularly preferably approximately 85°C or more and very particularly preferably approximately 90°C or more.

The nematic phase of the utilized cholesteric liquid-crystalline medium according to the invention preferably extends at least from approximately 0°C or less to approximately 65°C or more, more preferably at least from approximately -20°C or less to approximately 70°C or more, very preferably at least from approximately -30°C or less to approximately 70°C or more and in particular at least from approximately -40°C or less to approximately 90°C or more. In individual preferred embodiments, it may be necessary for the nematic phase of the media according to the invention to extend to a temperature of approximately 100°C or more and even to approximately 110°C or more.

Typically, the cholesteric liquid-crystalline medium utilized in a light modulation element in accordance with the present invention comprises one or more bimesogenic compounds which are preferably selected from the group of compounds of formulae A-I to A-III,

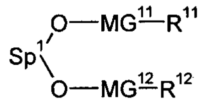

A-I

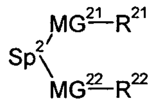

A-II

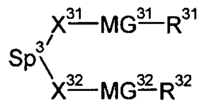

A-III

and wherein

$R^{11}$ and $R^{12}$, $R^{21}$ and $R^{22}$, and $R^{31}$ and $R^{32}$ are each independently H, F, Cl, CN, NCS or a straight-chain or branched alkyl group with 1 to 25 C atoms which may be unsubstituted, mono- or polysubstituted by halogen or CN, it being also possible for one or more non-adjacent $CH_2$ groups to be replaced, in each occurrence independently from one another, by -O-, -S-, -NH-, $-N(CH_3)-$, -CO-, -COO-, -OCO-, -O-CO-O-, -S-CO-, -CO-S-, -CH=CH-,-CH=CF-, -CF=CF- or -C≡C- in such a manner that oxygen atoms are not linked directly to one another,

$MG^{11}$ and $MG^{12}$, $MG^{21}$ and $MG^{22}$, and $MG^{31}$ and $MG^{32}$ are each independently a mesogenic group,

$Sp^1$, $Sp^2$ and $Sp^3$ are each independently a spacer group comprising 5 to 40 C atoms, wherein one or more non-adjacent $CH_2$ groups, with the exception of the $CH_2$ groups of $Sp^1$ linked to O-$MG^{11}$ and/or O-$MG^{12}$, of $Sp^2$ linked to $MG^{21}$ and/or $MG^{22}$ and of $Sp^3$ linked to $X^{31}$ and $X^{32}$, may also be replaced by -O-, -S-, -NH-, $-N(CH_3)-$, -CO-, -O-CO-, -S-CO-, -O-COO-, -CO-S-, -CO-O-, -CH(halogen)-, -CH(CN)-, -CH=CH- or -C≡C-, however in such a way that no two O-atoms are adjacent to one another, no two -CH=CH- groups are adjacent to each other, and no two groups selected from -O-CO-, -S-CO-, -O-COO-, -CO-S-, -CO-O- and -CH=CH- are adjacent to each other and

$X^{31}$ and $X^{32}$ are independently from one another a linking group selected from -CO-O-, -O-CO-, -CH=CH-, -C≡C- or-S-, and, alternatively, one of them may also be either -O- or a single bond, and, again alternatively, one of them may be -O- and the other one a single bond.

Preferably used are compounds of formulae A-I to A-III wherein

$Sp^1$, $Sp^2$ and $Sp^3$ are each independently $-(CH_2)_n-$ with

n an integer from 1 to 15, most preferably an uneven integer, wherein one or more $-CH_2-$ groups may be replaced by -CO-.

Especially preferably used are compounds of formula A-III wherein

$-X^{31}-Sp^3-X^{32}-$ is $-Sp^3-O-$, $-Sp^3-CO-O-$, $-Sp^3-O-CO-$, $-O-Sp^3-$, $-O-Sp^3-CO-O-$, $-O-Sp^3-O-CO-$, $-O-CO-Sp^3-O-$, $-O-CO-Sp^3-O-CO-$, $-CO-O-Sp^3-O-$ or $-CO-O-Sp^3-CO-O-$, however under the condition that in $-X^{31}-Sp^3-X^{32}-$ no two O-atoms are adjacent to one another, no two -CH=CH- groups are adjacent to each other and no two groups selected from -O-CO-, -S-CO-, -O-COO-, -CO-S-, -CO-O- and -CH=CH- are adjacent to each other.

Preferably used are compounds of formula A-I in which

$MG^{11}$ and $MG^{12}$ are independently from one another $-A^{11}-(Z^1-A^{12})_m-$

wherein

$Z^1$ is -COO-, -OCO-, -O-CO-O-, $-OCH_2-$, $-CH_2O-$, $-CH_2CH_2-$, $-(CH_2)_4-$, $-CF_2CF_2-$, -CH=CH-,-CF=CF-, -CH=CH-COO-, -OCO-CH=CH-, -C≡C- or a single bond,

$A^{11}$ and $A^{12}$ are each independently in each occurrence 1,4-phenylene, wherein in addition one or more CH groups may be replaced by N, trans-1,4-cyclo-hexylene in which, in addition, one or two non-adjacent $CH_2$ groups may be replaced by O and/or S, 1,4-cyclohexenylene, 1,4-bicyclo-(2,2,2)-octylene, piperidine-1,4-diyl, naphthalene-2,6-diyl, decahydro-naphthalene-2,6-diyl, 1,2,3,4-tetrahydro-naphthalene-2,6-diyl, cyclobutane-1,3-diyl, spiro[3.3]heptane-2,6-diyl or dispiro[3.1.3.1] decane-2,8-diyl, it being possible for all these groups to be unsubstituted, mono-, di-, tri- or tetrasubstituted with F, Cl, CN or alkyl, alkoxy, alkylcarbonyl or alkoxycarbonyl groups with 1 to 7 C atoms, wherein one or more H atoms may be substituted by F or Cl, and

m is 0, 1, 2 or 3.

Preferably used are compounds of formula A-II in which

$MG^{21}$ and $MG^{22}$ are independently from one another $-A^{21}-(Z^2-A^{22})_m-$

wherein

$Z^2$ is -COO-, -OCO-, -O-CO-O-, $-OCH_2-$, $-CH_2O-$, $-CH_2CH_2-$, $-(CH_2)_4-$, $-CF_2CF_2-$, -CH=CH-,-CF=CF-, -CH=CH-COO-, -OCO-CH=CH-, -C≡C- or a single bond,

$A^{21}$ and $A^{22}$ are each independently in each occurrence 1,4-phenylene, wherein in addition one or more CH groups may be replaced by N, trans-1,4-cyclo-hexylene in which, in addition, one or two non-adjacent $CH_2$ groups may be replaced by O and/or S, 1,4-cyclohexenylene, 1,4-bicyclo-(2,2,2)-octylene, piperidine-1,4-diyl, naphthalene-2,6-diyl, decahydro-naphthalene-2,6-diyl, 1,2,3,4-tetrahydro-naphthalene-2,6-diyl, cyclobutane-1,3-diyl, spiro[3.3]heptane-2,6-diyl or dispiro[3.1.3.1] decane-2,8-diyl, it being possible for all these groups to be unsubstituted, mono-, di-, tri- or tetrasubstituted with F, Cl, CN or alkyl, alkoxy, alkylcarbonyl or alkoxycarbonyl groups with 1 to 7 C atoms, wherein one or more H atoms may be substituted by F or Cl, and

m is 0, 1, 2 or 3.

Most preferably used are compounds of formula A-III in which

$MG^{31}$ and $MG^{32}$ are independently from one another $-A^{31}-(Z^3-A^{32})_m-$

wherein

$Z^3$ is -COO-, -OCO-, -O-CO-O-, $-OCH_2-$, $-CH_2O-$, $-CH_2CH_2-$, $-(CH_2)_4-$, $-CF_2CF_2-$, -CH=CH-,-CF=CF-, -CH=CH-COO-, -OCO-CH=CH-, -C≡C- or a single bond,

$A^{31}$ and $A^{32}$ are each independently in each occurrence 1,4-phenylene, wherein in addition one or more CH groups may be replaced by N, trans-1,4-cyclo-hexylene in which, in addition, one or two non-adjacent $CH_2$ groups may be replaced by O and/or S, 1,4-cyclohexenylene, 1,4-bicyclo-(2,2,2)-octylene, piperidine-1,4-diyl, naphthalene-2,6-diyl, decahydro-naphthalene-2,6-diyl, 1,2,3,4-tetrahydro-naphthalene-2,6-diyl, cyclobutane-1,3-diyl, spiro[3.3]heptane-2,6-diyl or dispiro[3.1.3.1] decane-2,8-diyl, it being possible for all these groups to be unsubstituted, mono-, di-, tri- or tetrasubstituted with F, Cl, CN or alkyl, alkoxy, alkylcarbonyl or alkoxycarbonyl groups with 1 to 7 C atoms, wherein one or more H atoms may be substituted by F or Cl, and

m is 0, 1, 2 or 3.

Preferably, the compounds of formula A-III are asymmetric compounds, preferably having different mesogenic groups $MG^{31}$ and $MG^{32}$.

Generally preferred are compounds of formulae A-I to A-III in which the dipoles of the ester groups present in the mesogenic groups are all oriented in the same direction, i.e. all -CO-O- or all -O-CO-.

Especially preferred are compounds of formulae A-I and/or A-II and/or A-III wherein the respective pairs of mesogenic groups ($MG^{11}$ and $MG^{12}$) and ($MG^{21}$ and $MG^{22}$) and ($MG^{31}$ and $MG^{32}$) at each occurrence independently from each other comprise one, two or three six-atomic rings, preferably two or three six-atomic rings.

A smaller group of preferred mesogenic groups is listed below. For reasons of simplicity, Phe in these groups is 1,4-phenylene, PheL is a 1,4-phenylene group which is substituted by 1 to 4 groups L, with L being preferably F, Cl, CN, OH, $NO_2$ or an optionally fluorinated alkyl, alkoxy or alkanoyl group with 1 to 7 C atoms, very preferably F, Cl, CN, OH, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$, in particular F, Cl, CN, $CH_3$, $C_2H_5$, $OCH_3$, $COCH_3$ and $OCF_3$ , most preferably F, Cl, $CH_3$, $OCH_3$ and $COCH_3$ and Cyc is 1,4-cyclohexylene. This list comprises the sub-formulae shown below as well as their mirror images

-Phe-Z-Phe- II-1
-Phe-Z-Cyc- II-2
-Cyc-Z-Cyc- II-3
-PheL-Z-Phe- II-4
-PheL-Z-Cyc- II-5
-PheL-Z-PheL- II-6
-Phe-Z-Phe-Z-Phe- II-7
-Phe-Z-Phe-Z-Cyc- II-8
-Phe-Z-Cyc-Z-Phe- II-9
-Cyc-Z-Phe-Z-Cyc- II-10
-Phe-Z-Cyc-Z-Cyc- II-11
-Cyc-Z-Cyc-Z-Cyc- II-12
-Phe-Z-Phe-Z-PheL- II-13
-Phe-Z-PheL-Z-Phe- II-14
-PheL-Z-Phe-Z-Phe- II-15
-PheL-Z-Phe-Z-PheL- II-16
-PheL-Z-PheL-Z-Phe- II-17
-PheL-Z-PheL-Z-PheL- II-18
-Phe-Z-PheL-Z-Cyc- II-19
-Phe-Z-Cyc-Z-PheL- II-20
-Cyc-Z-Phe-Z-PheL- II-21
-PheL-Z-Cyc-Z-PheL- II-22

-PheL-Z-PheL-Z-Cyc- III-23
-PheL-Z-Cyc-Z-Cyc- II-24
-Cyc-Z-PheL-Z-Cyc- II-25

Particularly preferred are the sub formulae II-1, II-4, II-6, II-7, II-13, II-14, II-15, II-16, II-17 and II-18.

In these preferred groups, Z in each case independently has one of the meanings of $Z^1$ as given above for $MG^{21}$ and $MG^{22}$. Preferably Z is -COO-, -OCO-, $-CH_2CH_2-$, -C≡C- or a single bond, especially preferred is a single bond.

Very preferably the mesogenic groups $MG^{11}$ and $MG^{12}$, $MG^{21}$ and $MG^{22}$ and $MG^{31}$ and $MG^{32}$ are each and independently selected from the following formulae and their mirror images

Very preferably, at least one of the respective pairs of mesogenic groups $MG^{11}$ and $MG^{12}$, $MG^{21}$ and $MG^{22}$ and $MG^{31}$ and $MG^{32}$ is, and preferably, both of them are each and independently, selected from the following formulae IIa to IIn (the two reference Nos. "II i" and "II I" being deliberately omitted to avoid any confusion) and their mirror images

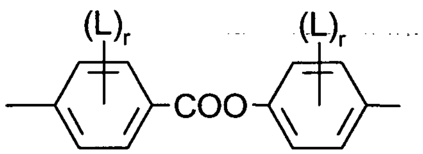
IIa

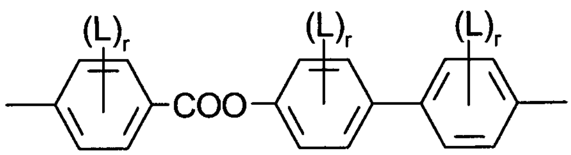
IIb

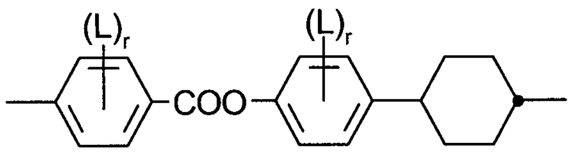
IIc

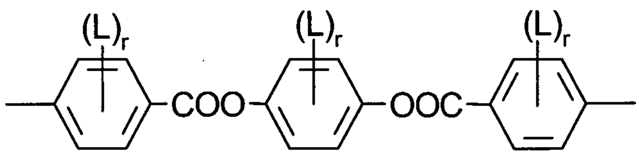
IId

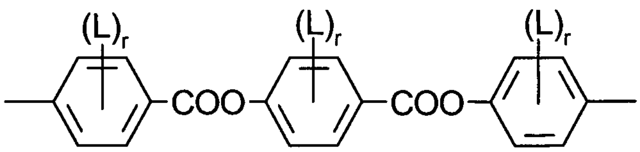
IIe

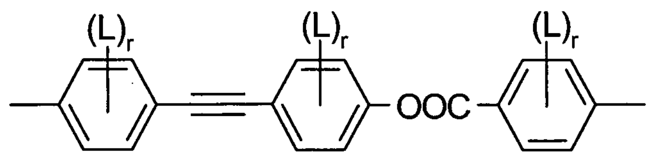
IIf

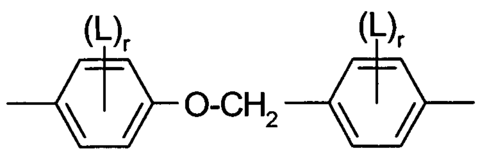
IIg

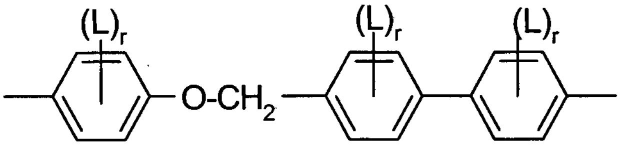 IIh

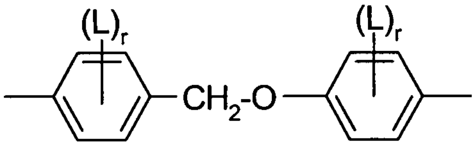 IIj

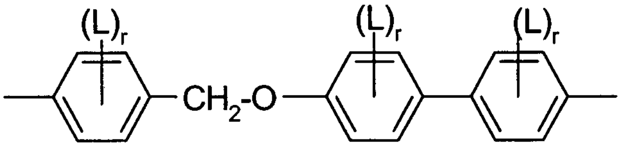 IIk

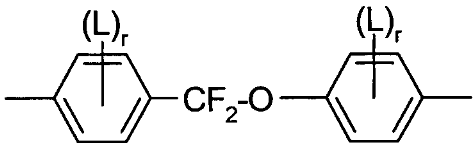 IIm

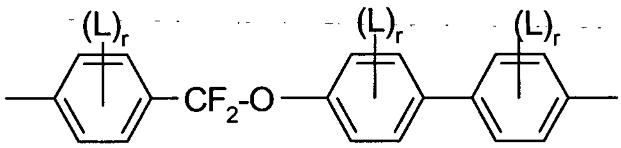 IIn

wherein

L is in each occurrence independently of each other F or Cl, preferably F and

r is in each occurrence independently of each other 0, 1, 2 or 3, preferably 0, 1 or 2.

The group

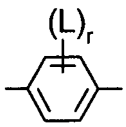

in these preferred formulae is very preferably denoting

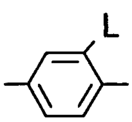 , 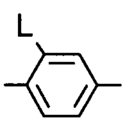 or 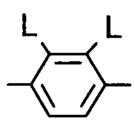 ,

furthermore

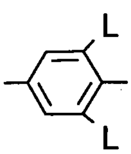 ,

Particularly preferred are the sub formulae IIa, IId, IIg, IIh, IIi, IIk and IIo, in particular the sub formulae IIa and IIg.

In case of compounds with a non-polar group, $R^{11}$, $R^{12}$, $R^{21}$, $R^{22}$, $R^{31}$, and $R^{32}$ are preferably alkyl with up to 15 C atoms or alkoxy with 2 to 15 C atoms.

If $R^{11}$ and $R^{12}$, $R^{21}$ and $R^{22}$ and $R^{31}$ and $R^{32}$ are an alkyl or alkoxy radical, i.e. where the terminal $CH_2$ group is replaced by -O-, this may be straight chain or branched. It is preferably straight-chain, has 2, 3, 4, 5, 6, 7 or 8 carbon atoms and accordingly is preferably ethyl, propyl, butyl, pentyl, hexyl, heptyl, octyl, ethoxy, propoxy, butoxy, pentoxy, hexoxy, heptoxy, or octoxy, furthermore methyl, nonyl, decyl, undecyl, dodecyl, tridecyl, tetradecyl, pentadecyl, nonoxy, decoxy, undecoxy, dodecoxy, tridecoxy or tetradecoxy, for example.

Oxaalkyl, i.e. where one $CH_2$ group is replaced by -O-, is preferably straight-chain 2-oxapropyl (=methoxymethyl), 2- (=ethoxymethyl) or 3-oxabutyl (=2-methoxyethyl), 2-, 3-, or 4-oxapentyl, 2-, 3-, 4-, or 5-oxahexyl, 2-, 3-, 4-, 5-, or 6-oxaheptyl, 2-, 3-, 4-, 5-, 6- or 7-oxaoctyl, 2-, 3-, 4-, 5-, 6-, 7- or 8-oxanonyl or 2-, 3-, 4-, 5-, 6-,7-, 8- or 9-oxadecyl, for example.

In case of a compounds with a terminal polar group, $R^{11}$ and $R^{12}$, $R^{21}$ and $R^{22}$ and $R^{31}$ and $R^{32}$ are selected from CN, $NO_2$, halogen, $OCH_3$, OCN, SCN, $COR^x$, $COOR^x$ or a mono- oligo- or polyfluorinated alkyl or alkoxy group with 1 to 4 C atoms. $R^x$ is optionally fluorinated alkyl with 1 to 4, preferably 1 to 3 C atoms. Halogen is preferably F or Cl.

Especially preferably $R^{11}$ and $R^{12}$, $R^{21}$ and $R^{22}$ and $R^{31}$ and $R^{32}$ in formulae A-I, A-II, respectively A-III are selected of H, F, Cl, CN, $NO_2$, $OCH_3$, $COCH_3$, $COC_2H_5$, $COOCH_3$, $COOC_2H_5$, $CF_3$, $C_2F_5$, $OCF_3$, $OCHF_2$, and $OC_2F_5$, in particular of H, F, Cl, CN, $OCH_3$ and $OCF_3$, especially of H, F, CN and $OCF_3$.

In addition, compounds of formulae A-I, A-II, respectively A-III containing an achiral branched group $R^{11}$ and/or $R^{21}$ and/or $R^{31}$ may occasionally be of importance, for example, due to a reduction in the tendency towards crystallization. Branched groups of this type generally do not contain more than one chain branch. Preferred achiral branched groups are isopropyl, isobutyl (=methylpropyl), isopentyl (=3-methylbutyl), isopropoxy, 2-methyl-propoxy and 3-methylbutoxy.

The spacer groups $Sp^1$, $Sp^2$ and $Sp^3$ are preferably a linear or branched alkylene group having 5 to 40 C atoms, in particular 5 to 25 C atoms, very preferably 5 to 15 C atoms, in which, in addition, one or more non-adjacent and non-terminal $CH_2$ groups may be replaced by -O-, -S-, -NH-, -N($CH_3$)-, -CO-, -O-CO-, -S-CO-, -O-COO-, -CO-S-, -CO-O-, -CH(halogen)-, -CH(CN)-, -CH=CH- or -C≡C-.

"Terminal" $CH_2$ groups are those directly bonded to the mesogenic groups. Accordingly, "non-terminal" $CH_2$ groups are not directly bonded to the mesogenic groups $R^{11}$ and $R^{12}$, $R^{21}$ and $R^{22}$ and $R^{31}$ and $R^{32}$.

Typical spacer groups are for example $-(CH_2)_o-$, $-(CH_2CH_2O)_p-CH_2CH_2-$, with o being an integer from 5 to 40, in particular from 5 to 25, very preferably from 5 to 15, and p being an integer from 1 to 8, in particular 1, 2, 3 or 4.

Preferred spacer groups are pentylene, hexylene, heptylene, octylene, nonylene, decylene, undecylene, dodecylene, octadecylene, diethyleneoxyethylene, dimethyleneoxybutylene, pentenylene, heptenylene, nonenylene and undecenylene, for example.

Especially preferred are compounds of formulae A-I, A-II and A-III wherein $Sp^1$, $Sp^2$, respectively $Sp^3$ are alkylene with 5 to 15 C atoms. Straight-chain alkylene groups are especially preferred.

Preferred are spacer groups with even numbers of a straight-chain alkylene having 6, 8, 10, 12 and 14 C atoms.

In another embodiment of the present invention are the spacer groups preferably with odd numbers of a straight-chain alkylene having 5, 7, 9, 11, 13 and 15 C atoms. Very preferred are straight-chain alkylene spacers having 5, 7, or 9 C atoms.

Especially preferred are compounds of formulae A-I, A-II and A-III wherein $Sp^1$, $Sp^2$, respectively $Sp^3$ are completely deuterated alkylene with 5 to 15 C atoms. Very preferred are deuterated straight-chain alkylene groups. Most preferred are partially deuterated straight-chain alkylene groups.

Preferred are compounds of formula A-I wherein the mesogenic groups $R^{11}$-$MG^{11}$- and $R^{12}$-$MG^{1}$- are different. Especially preferred are compounds of formula A-I wherein $R^{11}$-$MG^{11}$- and $R^{12}$-$MG^{12}$- in formula A-I are identical.

Preferred compounds of formula A-I are selected from the group of compounds of formulae A-I-1 to A-I-3

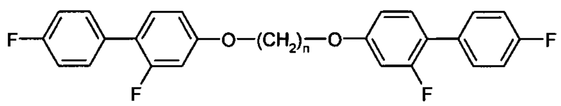

A-I-1

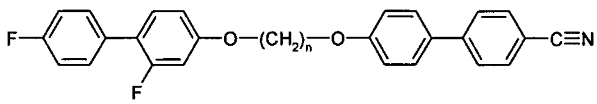

A-I-2

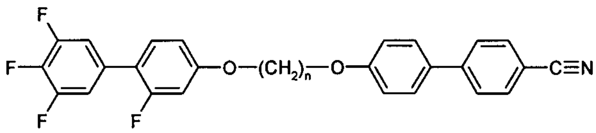

A-I-3

wherein the parameter n has the meaning given above and preferably is 3, 5, 7 or 9, more preferably 5, 7 or 9.

Preferred compounds of formula A-II are selected from the group of compounds of formulae A-II-1 to A-II-4

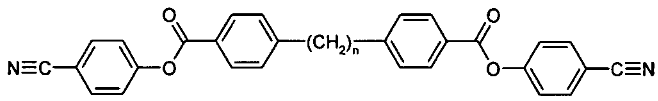

A-II-1

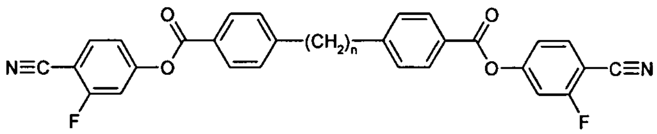

A-II-2

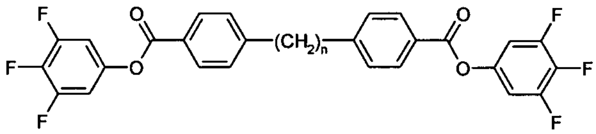

A-II-3

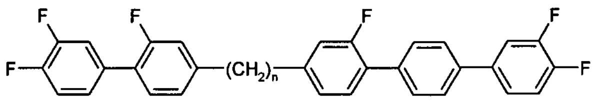

A-II-4

wherein the parameter n has the meaning given above and preferably is 3, 5, 7 or 9, more preferably 5, 7 or 9.

Preferred compounds of formula A-III are selected from the group of compounds of formulae A-III-1 to A-III-11

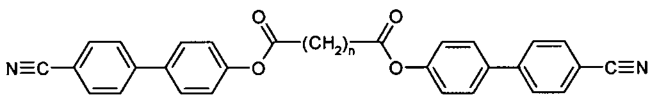

A-III-1

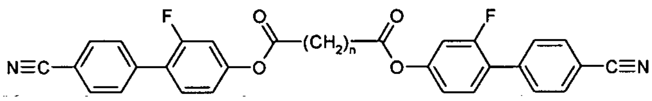

A-III-2

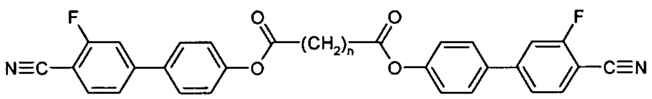

A-III-3

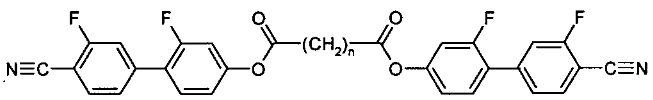

A-III-4

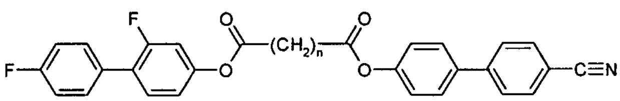

A-III-5

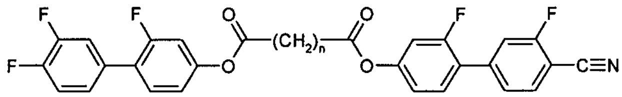

A-III-6

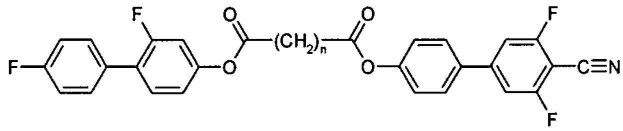

A-III-7

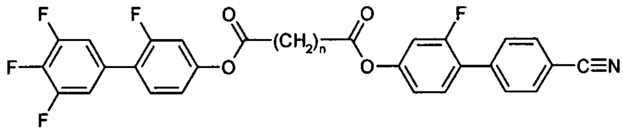

A-III-8

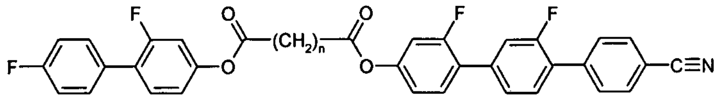

A-III-9

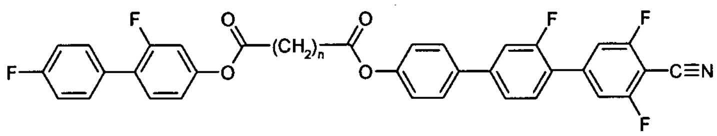

A-III-10

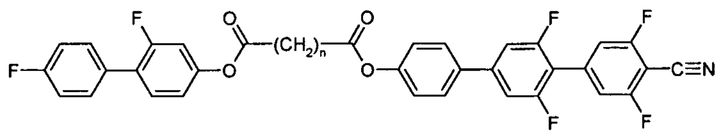

A-III-11

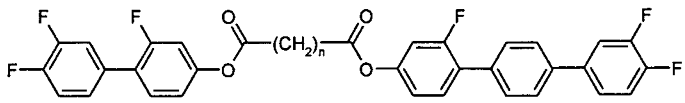

A-III-12

wherein the parameter n has the meaning given above and preferably is 3, 5, 7 or 9, more preferably 5, 7 or 9.

Particularly preferred exemplary compounds of formulae A-I are the following compounds:

symmetrical ones:

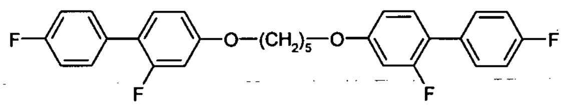

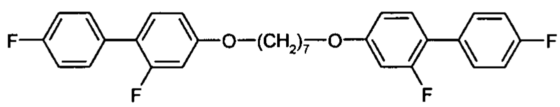

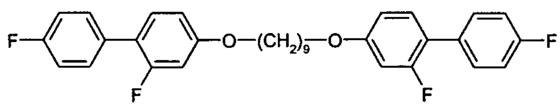

and non-symmetrical ones:

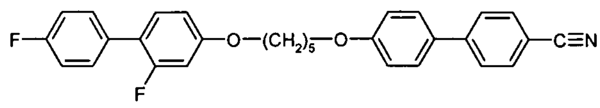

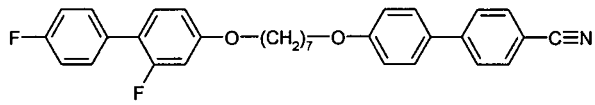

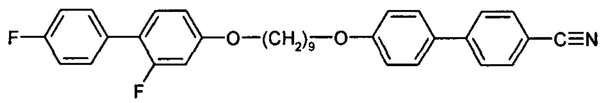

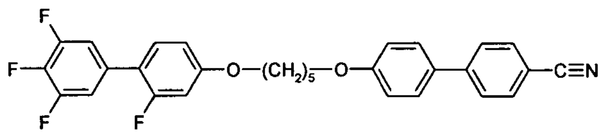

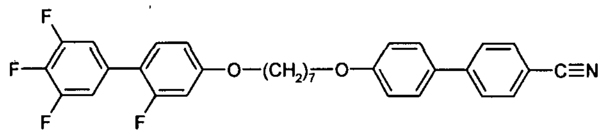

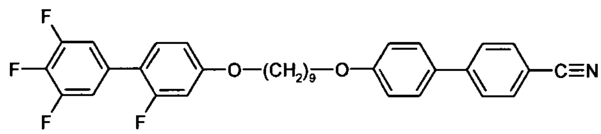

Particularly preferred exemplary compounds of formulae A-II are the following compounds:

symmetrical ones:

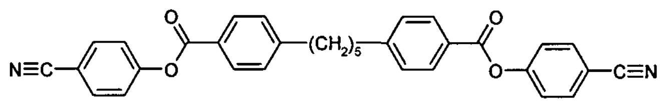

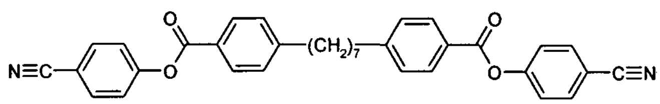

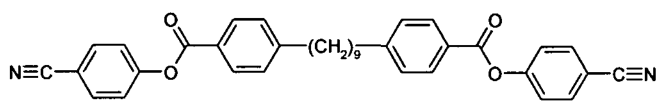

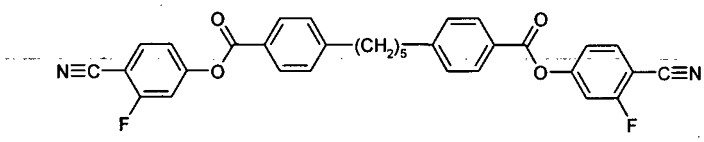

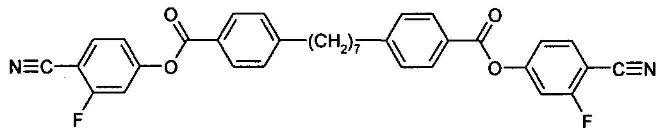

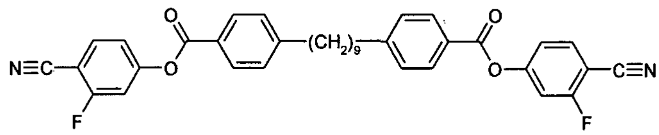

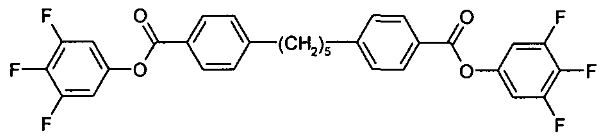

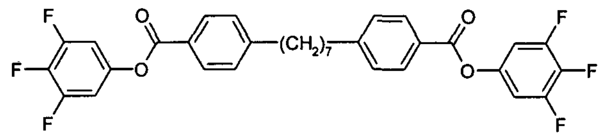

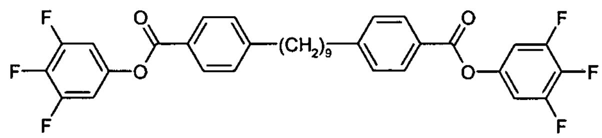

and non-symmetrical ones:

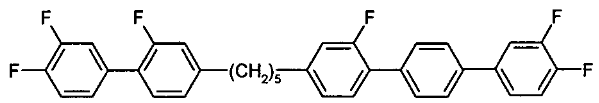

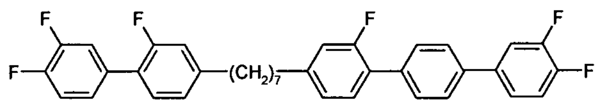

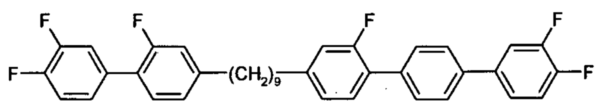

Particularly preferred exemplary compounds of formulae A-III are the following compounds:

symmetrical ones:

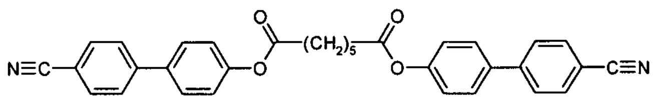

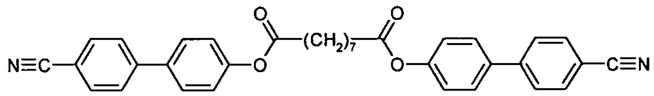

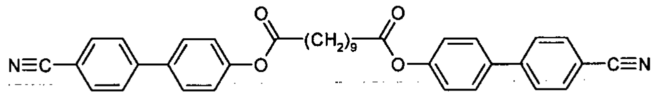

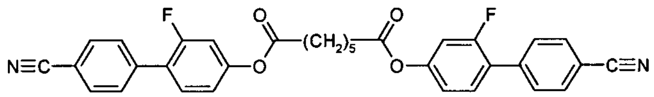

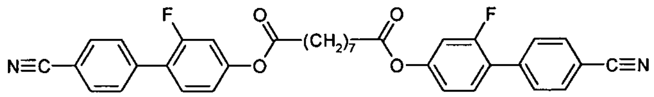

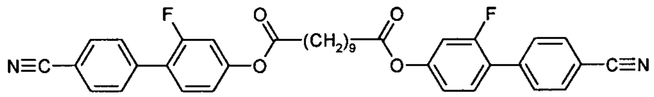

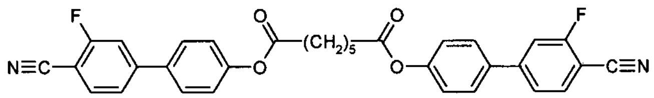

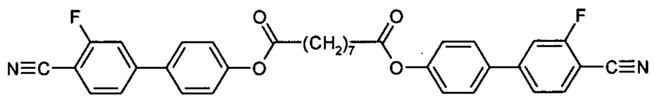

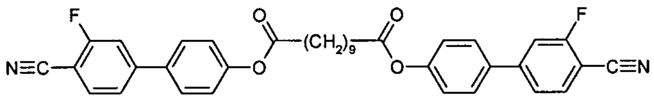

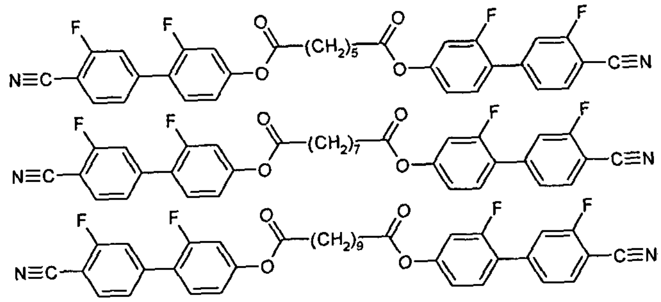

and non-symmetrical ones:

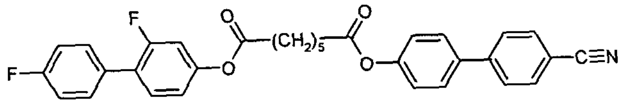

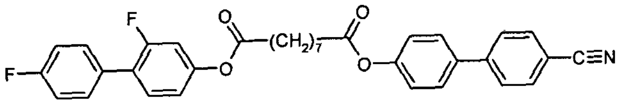

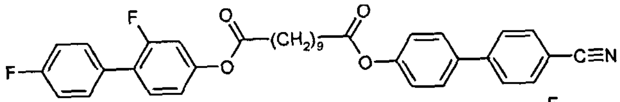

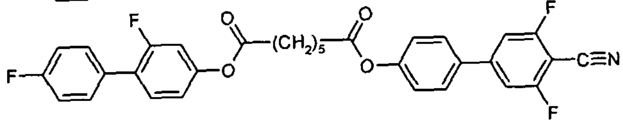

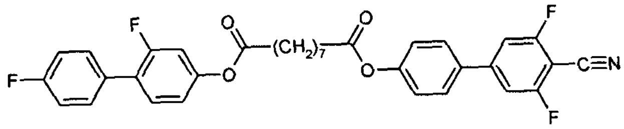

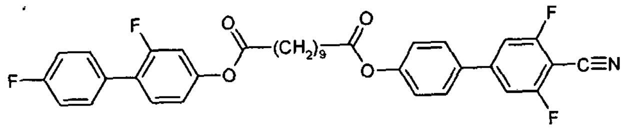

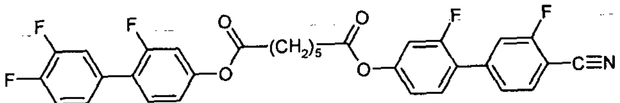

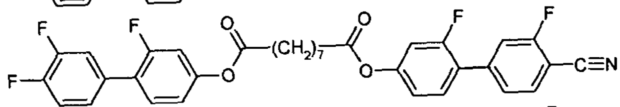

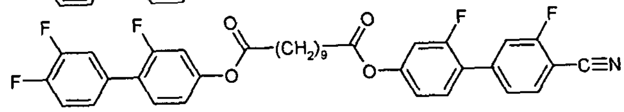

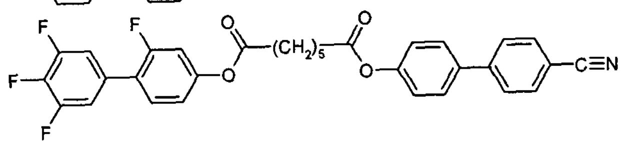

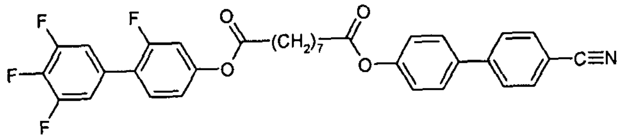

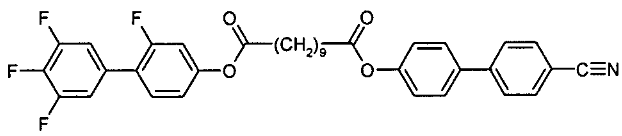

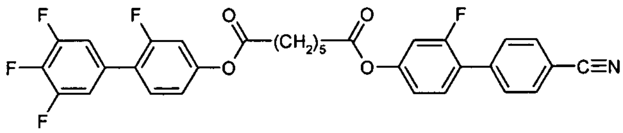

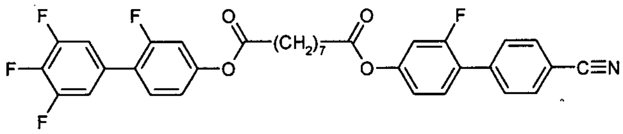

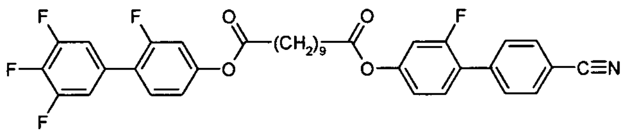

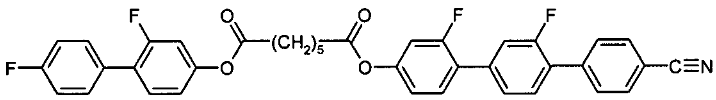

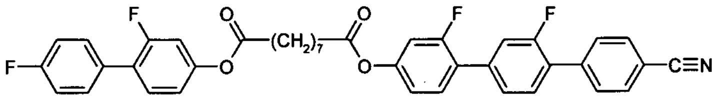

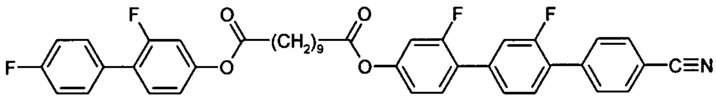

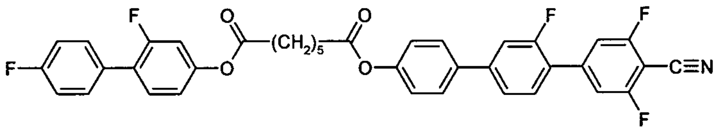

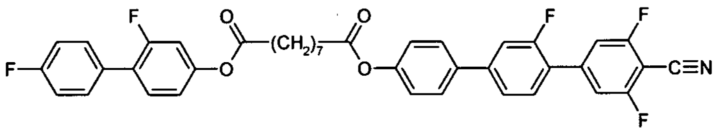

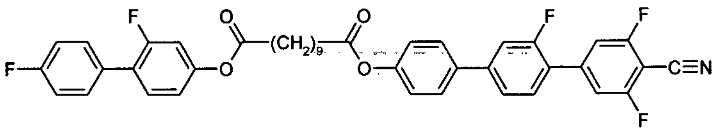

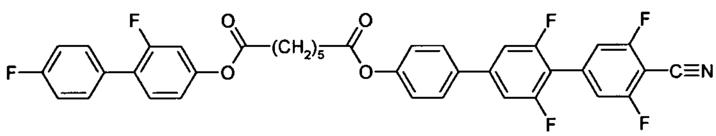

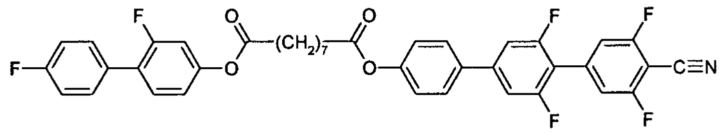

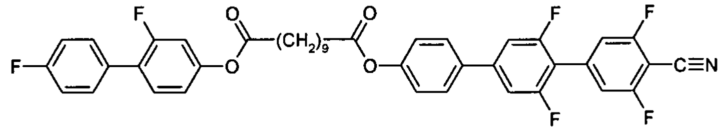

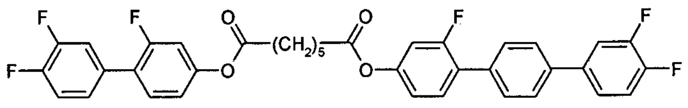

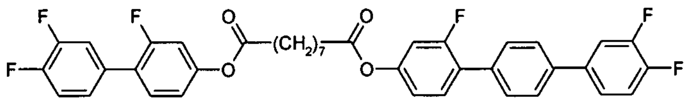

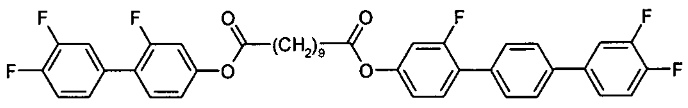

The bimesogenic compounds of formula A-I to A-III are particularly useful in flexoelectric liquid crystal displays as they can easily be aligned into macroscopically uniform orientation, and lead to high values of the elastic constant $k_{11}$ and a high flexoelectric coefficient e in the applied liquid crystalline media.

The compounds of formulae A-I to A-III can be synthesized according to or in analogy to methods which are known per se and which are described in standard works of organic chemistry such as, for example, Houben-Weyl, Methoden der organischen Chemie, Thieme-Verlag, Stuttgart.

In a preferred embodiment, the cholesteric liquid crystalline medium optionally comprise one or more nematogenic compounds, which are preferably selected from the group of compounds of formulae B-I to B-III

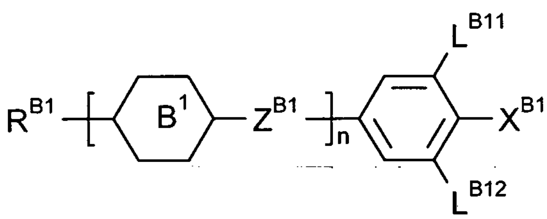

B-I

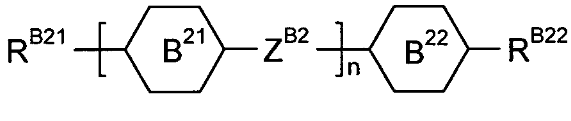

B-II

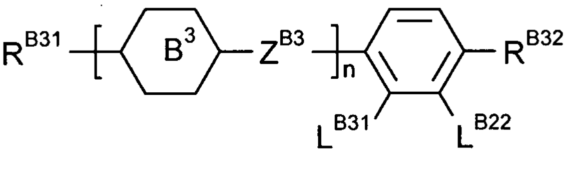

B-III

wherein

$L^{B11}$ to $L^{B31}$ are independently H or F, preferably one is H and the other H or F and most

preferably both are H or both are F.

$R^{B1}$, $R^{B21}$ and $R^{B22}$ and $R^{B31}$ and $R^{B32}$ are each independently H, F, Cl, CN, NCS or a straightchain or branched alkyl group with 1 to 25 C atoms which may be unsubstituted, mono- or polysubstituted by halogen or CN, it being also possible for one or more non-adjacent $CH_2$ groups to be replaced, in each occurrence independently from one another, by -O-, -S-, -NH-, $-N(CH_3)-$, -CO-, -COO-, -OCO-, -O-CO-O-, -S-CO-, -CO-S-, -CH=CH-, -CH=CF-, -CF=CF- or -C≡C-in such a manner that oxygen atoms are not linked directly to one another,

$X^{B1}$ is F, Cl, CN, NCS, preferably CN,

$Z^{B1}$, $Z^{B2}$ and $Z^{B3}$ are in each occurrence independently -CH2-CH2-, -CO-O-, -O-CO-, $-CF_2-O-$, $-O-CF_2-$, -CH=CH- or a single bond, preferably $-CH_2-CH_2-$, -CO-O-, -CH=CH- or a single bond, more preferably $-CH_2-CH_2-$ or a single bond, even more preferably one of the groups present in one compound is $-CH_2-CH_2-$ and the others are a single bond, most preferably all are a single bond,

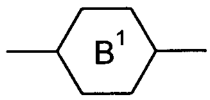
,

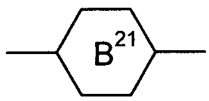
,

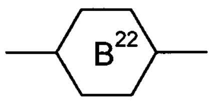

and

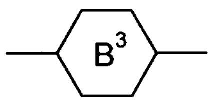

are in each occurrence independently

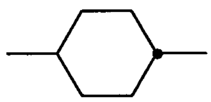 , 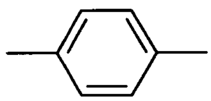 or 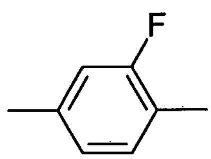 ,

preferably

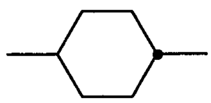 or 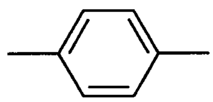 ,

most preferably

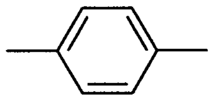

,

alternatively one or more of

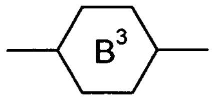

are

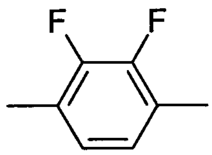

and

n is 1, 2 or 3, preferably 1 or 2.

Further preferred are cholesteric liquid-crystalline media comprising one or more nematogens of formula B-I selected from the from the group of formulae B-I-1 to B-I-, preferably of formula B-I-2 and/or B-I-4, most preferably B-I-4

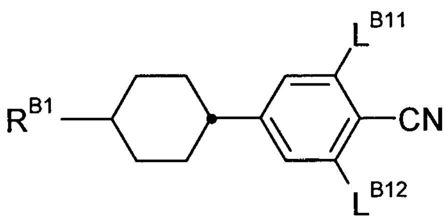

B-I-1

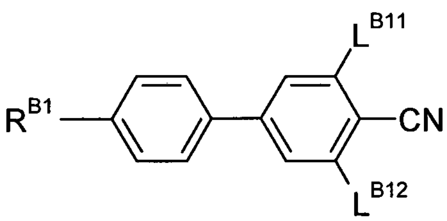

B-I-2

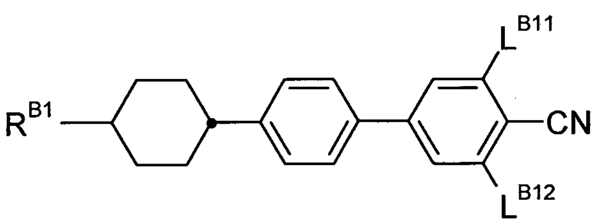

B-I-3

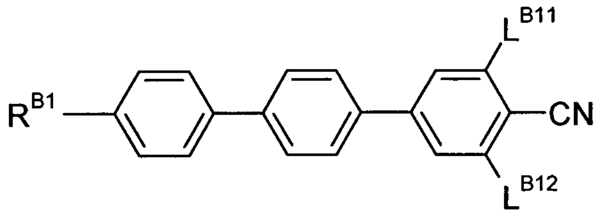

B-I-4

wherein the parameters have the meanings given above and preferably

$R^{B1}$ is alkyl, alkoxy, alkenyl or alkenyloxy with up to 12 C atoms, and

$L^{B11}$ and $L^{B12}$ are independently H or F, preferably one is H and the other H or F and most preferably both are H.

Further preferred are cholesteric liquid-crystalline media comprising one or more nematogens of formula B-II selected from the from the group of formulae B-II-1 and B-II-2, preferably of formula B-II-2 and/or B-II-4, most preferably of formula B-II-1

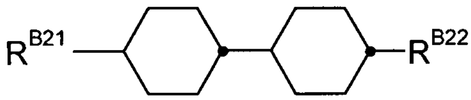

B-II-1

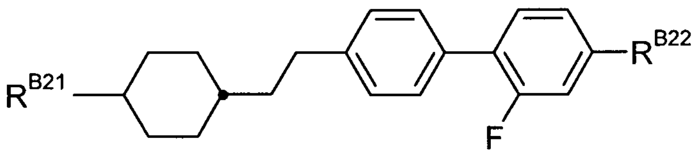

B-II-2

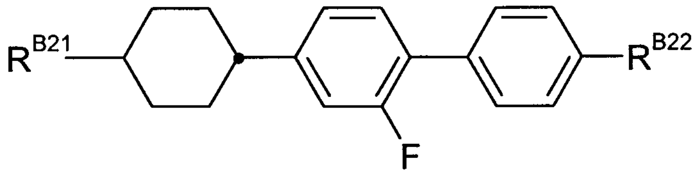

B-II-3

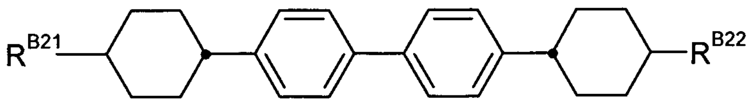

B-II-4

wherein the parameters have the meanings given above and preferably

$R^{B21}$ and $R^{B22}$ are independently alkyl, alkoxy, alkenyl or alkenyloxy with up to 12 C atoms, more preferably $R^{B21}$ is alkyl and $R^{B22}$ is alkyl, alkoxy or alkenyl and in formula B-II-1 most preferably alkenyl, in particular vinyl or 1-propenyl, and in formula B-II-2, most preferably alkyl.

Further preferred are cholesteric liquid-crystalline media comprising one or more nematogens of formula B-III, preferably selected from the group compounds of formulae B-III-1 to B-III-3

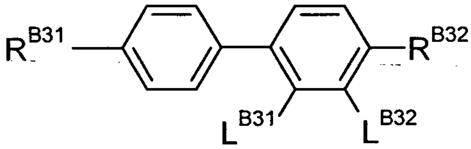

B-III-1

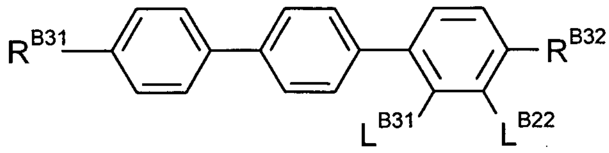

B-III-2

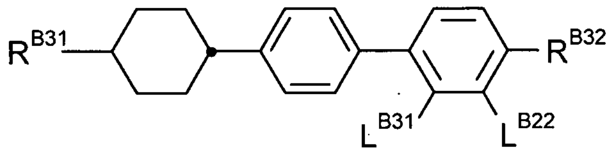

B-III-3

wherein the parameters have the meanings given above and preferably

| | |
|---|---|
| $R^{B31}$ and $R^{B32}$ | are independently alkyl, alkoxy, alkenyl or alkenyloxy with up to 12 C atoms, more preferably $R^{B31}$ is alkyl and $R^{B32}$ is alkyl or alkoxy and most preferably alkoxy, and |
| $L^{B22}$ and $L^{B31}$ $L^{B32}$ | are independently H or F, preferably one is F and the other H or F and most preferably both are F. |

The compounds of formulae B-I to B-III are either known to the expert and can be synthesized according to or in analogy to methods which are known per se and which are described in standard works of organic chemistry such as, for example, Houben-Weyl, Methoden der organischen Chemie, Thieme-Verlag, Stuttgart.

Suitable cholesteric liquid-crystalline media for the ULH mode comprise one or more chiral compounds with a suitable helical twisting power (HTP), in particular those disclosed in WO 98/00428.

Preferably, the chiral compounds are selected from the group of compounds of formulae C-I to C-III,

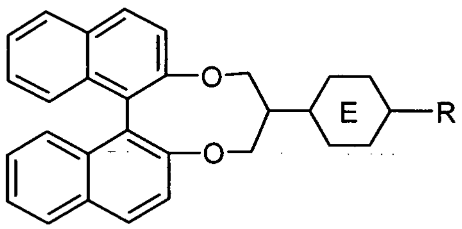

C-I

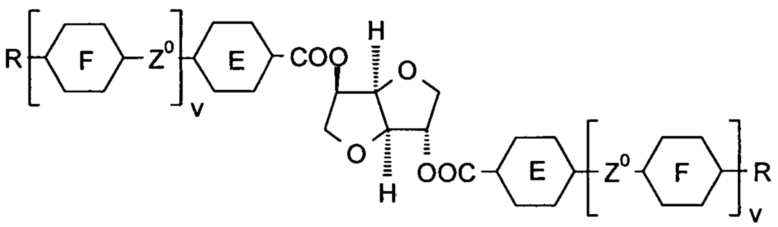

C-II

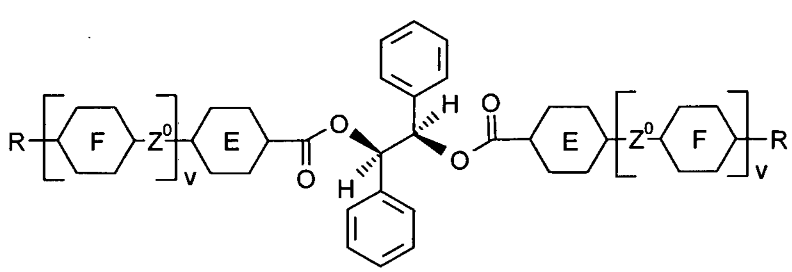

C-III

the latter ones including the respective (S,S) enantiomers,
wherein E and F are each independently 1,4-phenylene or trans-1,4-cyclohexylene, v is 0 or 1, $Z^0$ is -COO-, -OCO-, $-CH_2CH_2-$ or a single bond, and R is alkyl, alkoxy or alkanoyl with 1 to 12 C atoms.

Particularly preferred cholesteric liquid-crystalline media comprise at least one or more chiral compounds which

themselves do not necessarily have to show a liquid crystalline phase and give good uniform alignment themselves.

The compounds of formula C-II and their synthesis are described in WO 98/00428. Especially preferred is the compound CD-1, as shown in table D below. The compounds of formula C-III and their synthesis are described in GB 2 328 207.

Further, typically used chiral compounds are e.g. the commercially available R/S-5011, CD-1, R/S-811 and CB-15 (from Merck KGaA, Darmstadt, Germany).

The above mentioned chiral compounds R/S-5011 and CD-1 and the (other) compounds of formulae C-I, C-II and C-III exhibit a very high helical twisting power (HTP), and are therefore particularly useful for the purpose of the present invention.

The cholesteric liquid-crystalline medium preferably comprises preferably 1 to 5, in particular 1 to 3, very preferably 1 or 2 chiral compounds, preferably selected from the above formula C-II, in particular CD-1, and/or formula C-III and/or R-5011 or S-5011, very preferably, the chiral compound is R-5011, S-5011 or CD-1.

The amount of chiral compounds in the cholesteric liquid-crystalline medium is preferably from 0.5 to 20 %, more preferably from 1 to 15 %, even more preferably 1 to 10 %, and most preferably 1 to 5 %, by weight of the total mixture.

In a further preferred embodiment, a small amount (for example 0.3% by weight, typically < 8% by weight per compound type) of a polymerisable compound is added to the above described cholesteric liquid-crystalline medium and, after introduction into the light modulation element, is polymerised or cross-linked in situ, usually by UV photopolymerisation. The addition of polymerisable mesogenic or liquid-crystalline compounds, also known as "reactive mesogens" (RMs), to the LC mixture has been proven particularly suitable in order further to stabilise the ULH texture (eg. Lagerwall et al., Liquid Crystals 1998, 24, 329 - 334.).

Suitable polymerisable liquid-crystalline compounds are preferably selected from the group of compounds of formula D,

$$P\text{-}Sp\text{-}MG\text{-}R^0 \qquad D$$

wherein

| | |
|---|---|
| P | is a polymerisable group, |
| Sp | is a spacer group or a single bond, |
| MG | is a rod-shaped mesogenic group, which is preferably selected of formula M, |
| M | is $-(A^{D21}-Z^{D21})_k-A^{D22}-(Z^{D22}-A^{D23})_l-$, |
| $A^{D21}$ to $A^{D23}$ | are in each occurrence independently of one another an aryl-, heteroaryl-, heterocyclic- or alicyclic group optionally being substituted by one or more identical or different groups L, preferably 1,4-cyclohexylene or 1,4-phenylene, 1,4 pyridine, 1,4-pyrimidine, 2,5-thiophene, 2,6-dithieno[3,2-b:2',3'-d] thiophene, 2,7- fluorine, 2,6-naphtalene, 2,7-phenanthrene optionally being substituted by one or more identical or different groups L, |
| $Z^{D21}$ and $Z^{D22}$ | are in each occurrence independently from each other, -O-, -S-, -CO-, -COO-, -OCO-, -S-CO-, -CO-S-, -O-COO-, -CO-$NR^{01}$-, -$NR^{01}$-CO-, -$NR^{01}$-CO-$NR^{02}$, -$NR^{01}$-CO-O-, -O-CO-$NR^{01}$-, -$OCH_2$-, -$CH_2O$-, -$SCH_2$-, -$CH_2S$-, -$CF_2O$-, -$OCF_2$-, -$CF_2S$-, -$SCF_2$-, -$CH_2CH_2$-, -$(CH_2)_4$-, -$CF_2CH_2$-, -$CH_2CF_2$-, -$CF_2CF_2$-, -CH=N-, -N=CH-, -N=N-, -CH=$CR^{01}$-, -$CY^{01}$=$CY^{02}$-, -C≡C-, -CH=CH-COO-, -OCO-CH=CH-, or a single bond, preferably -COO-, -OCO-, -CO-O-, -O-CO-, -$OCH_2$-, -$CH_2O$-, -, -$CH_2CH_2$-, -$(CH_2)_4$-, -$CF_2CH_2$-,-$CH_2CF_2$-, -$CF_2CF_2$-, -C≡C-, -CH=CH-COO-, -OCO-CH=CH-, or a single bond, |
| L | is in each occurrence independently of each other F, Cl or optionally fluorinated alkyl, alkoxy, thioalkyl, alkylcarbonyl, alkoxycarbonyl, alkylcarbonyloxy or alkoxycarbonyloxy with 1 to 20 C atoms more, |
| $R^0$ | is H, alkyl, alkoxy, thioalkyl, alkylcarbonyl, alkoxycarbonyl, alkylcarbonyloxy or alkoxycarbonyloxy with 1 to 20 C atoms more, preferably 1 to 15 C atoms which are optionally fluorinated, or is $Y^{D0}$ or P-Sp-, |
| $Y^{D0}$ | is F, Cl, CN, $NO_2$, $OCH_3$, OCN, SCN, optionally fluorinated alkylcarbonyl, alkoxycarbonyl, alkylcarbonyloxy or alkoxycarbonyloxy with 1 to 4 C atoms, or mono- oligo- or polyfluorinated alkyl or alkoxy with 1 to 4 C atoms, preferably F, Cl, CN, $NO_2$, $OCH_3$, or mono- oligo- or polyfluorinated alkyl or alkoxy with 1 to 4 C atoms |

$Y^{01}$ and $Y^{02}$ each, independently of one another, denote H, F, Cl or CN,

$R^{01}$ and $R^{02}$ have each and independently the meaning as defined above $R^0$, and

k and l are each and independently 0, 1, 2, 3 or 4, preferably 0, 1 or 2, most preferably 1.

Preferred polymerisable mono-, di-, or multireactive liquid crystalline compounds are disclosed for example in WO 93/22397, EP 0 261 712, DE 195 04 224, WO 95/22586, WO 97/00600, US 5,518,652, US 5,750,051, US 5,770,107 and US 6,514,578.

Preferred polymerisable groups are selected from the group consisting of $CH_2$=$CW^1$-COO-, $CH_2$=$CW^1$-CO-,

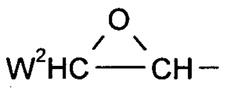 , 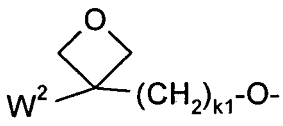 ,

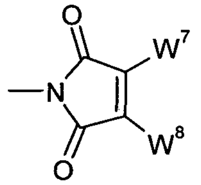 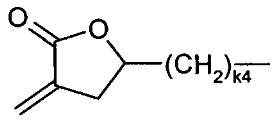 , ,

$CH_2$=$CW^2$-$(O)_{k3}$-, $CW^1$=CH-CO-$(O)_{k3}$-, $CW^1$=CH-CO-NH-, $CH_2$=$CW^1$-CO-NH-, $CH_3$-CH=CH-O-, $(CH_2=CH)_2$CH-OCO-, $(CH_2=CH\text{-}CH_2)_2$CH-OCO-, $(CH_2=CH)_2$CH-O-, $(CH_2=CH\text{-}CH_2)_2$N-, $(CH_2=CH\text{-}CH_2)_2$N-CO-, HO-$CW^2W^3$-, HS-$CW^2W^3$-, $HW^2N$-, HO-$CW^2W^3$-NH-, $CH_2$=$CW^1$-CO-NH-, $CH_2$=CH-$(COO)_{k1}$-Phe-$(O)_{k2}$-, $CH_2$=CH-$(CO)_{k1}$-Phe-$(O)_{k2}$-, Phe-CH=CH-, HOOC-, OCN- and $W^4W^5W^6$Si-, in which $W^1$ denotes H, F, Cl, CN, $CF_3$, phenyl or alkyl having 1 to 5 C atoms, in particular H, F, Cl or $CH_3$, $W^2$ and $W^3$ each, independently of one another, denote H or alkyl having 1 to 5 C atoms, in particular H, methyl, ethyl or n-propyl, $W^4$, $W^5$ and $W^6$ each, independently of one another, denote Cl, oxaalkyl or oxacarbonylalkyl having 1 to 5 C atoms, $W^7$ and $W^8$ each, independently of one another, denote H, Cl or alkyl having 1 to 5 C atoms, Phe denotes 1,4-phenylene, which is optionally substituted by one or more radicals L as being defined above but being different from P-Sp, and $k_1$, $k_2$ and $k_3$ each, independently of one another, denote 0 or 1, $k_3$ preferably denotes 1, and $k_4$ is an integer from 1 to 10.

Particularly preferred groups P are $CH_2$=CH-COO-, $CH_2$=$C(CH_3)$-COO-, $CH_2$=CF-COO-, $CH_2$=CH-, $CH_2$=CH-O-, $(CH_2=CH)_2$CH-OCO-, $(CH_2=CH)_2$CH-O-,

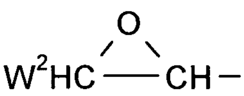 and 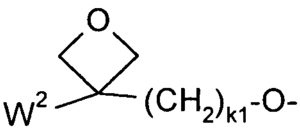 ,

in particular vinyloxy, acrylate, methacrylate, fluoroacrylate, chloroacrylate, oxetane and epoxide.

In a further preferred embodiment of the invention, the polymerisable compounds of the formulae I* and II* and sub-formulae thereof contain, instead of one or more radicals P-Sp-, one or more branched radicals containing two or more polymerisable groups P (multifunctional polymerisable radicals). Suitable radicals of this type, and polymerisable compounds containing them, are described, for example, in US 7,060,200 B1 or US 2006/0172090 A1. Particular preference is given to multifunctional polymerisable radicals selected from the following formulae:

-X-alkyl-$CHP^1$-$CH_2$-$CH_2P^2$ I*a

-X-alkyl-$C(CH_2P^1)(CH_2P^2)$-$CH_2P^3$ I*b

-X-alkyl-$CHP^1CHP^2$-$CH_2P^3$ I*c

-X-alkyl-$C(CH_2P^1)(CH_2P^2)$-$C_{aa}H_{2aa+1}$ I*d

$-X\text{-alkyl-}CHP^1\text{-}CH_2P^2$ I*e

$-X\text{-alkyl-}CHP^1P^2$ I*f

$-X\text{-alkyl-}CP^1P^2\text{-}C_{aa}H_{2aa+1}$ I*g

$-X\text{-alkyl-}C(CH_2P^1)(CH_2P^2)\text{-}CH_2OCH_2\text{-}C(CH_2P^3)(CH_2P^4)CH_2P^5$ I*h

$-X\text{-alkyl-}CH((CH_2)_{aa}P^1)((CH_2)_{bb}P^2)$ I*i

$-X\text{-alkyl-}CHP^1CHP^2\text{-}C_{aa}H_{2aa+1}$ I*k

in which

alkyl denotes a single bond or straight-chain or branched alkylene having 1 to 12 C atoms, in which one or more non-adjacent $CH_2$ groups may each be replaced, independently of one another, by $-C(R^x)=C(R^x)-$, -C≡C-, $-N(R^x)-$, -O-, -S-, -CO-, -CO-O-, -O-CO-, -O-CO-O- in such a way that O and/or S atoms are not linked directly to one another, and in which, in addition, one or more H atoms may be replaced by F, Cl or CN, where $R^x$ has the above-mentioned meaning and preferably denotes $R^0$ as defined above,

aa and bb each, independently of one another, denote 0, 1, 2, 3, 4, 5 or 6,

X has one of the meanings indicated for X', and

$P^{1-5}$ each, independently of one another, have one of the meanings indicated above for P.

Preferred spacer groups Sp are selected from the formula Sp'-X', so that the radical "P-Sp-" conforms to the formula "P-Sp'-X'-", where

Sp' denotes alkylene having 1 to 20, preferably 1 to 12 C atoms, which is optionally mono- or polysubstituted by F, Cl, Br, I or CN and in which, in addition, one or more non-adjacent $CH_2$ groups may each be replaced, independently of one another, by -O-, -S-, -NH-, $-NR^x-$, $-SiR^xR^{xx}-$, -CO-, -COO-, -OCO-, -OC O-O-, -S-CO-, -CO-S-, $-NR^x\text{-CO-O-}$, $-O\text{-CO-}NR^x-$, $-NR^x\text{-CO-N }R^x-$, -CH=CH- or -C≡C- in such a way that O and/or S atoms are not linked directly to one another,

X' denotes -O-, -S-, -CO-, -COO-, -OCO-, -O-COO-, $-CO\text{-}NR^x-$,$-NR^x\text{-CO-}$, $-NR^x\text{-CO-}NR^x-$, $-OCH_2-$, $-CH_2O-$, $-SCH_2-$, $-CH_2S-$,$-CF_2O-$, $-OCF_2-$, $-CF_2S-$, $-SCF_2-$, $-CF_2CH_2-$, $-CH_2CF_2-$, $-CF_2CF_2-$, -CH=N-, -N=CH-, -N=N-, $-CH=CR^x-$, $-CY^2=CY^3-$, -C≡C-, -C H=CH-COO-, -OCO-CH=CH- or a single bond,

$R^x$ and $R^{xx}$ each, independently of one another, denote H or alkyl having 1 to 12 C atoms, and

$Y^2$ and $Y^3$ each, independently of one another, denote H, F, Cl or CN.

X' is preferably

-O-, -S-, -CO-, -COO-, -OCO-, -O-COO-, $-CO\text{-}NR^x-$, $-NR^x\text{-CO-}$, $-NR^x\text{-CO-}NR^x-$ or a single bond.

Typical spacer groups Sp' are, for example, $-(CH_2)_{p1}-$, $-(CH_2CH_2O)_{q1}\text{-}CH_2CH_2-$, $-CH_2CH_2\text{-S-}CH_2CH_2-$, $-CH_2CH_2\text{-NH-}CH_2CH_2-$ or $-(SiR^xR^{xx}\text{-O})_{p1}-$, in which p1 is an integer from 1 to 12, q1 is an integer from 1 to 3, and $R^x$ and $R^{xx}$ have the above-mentioned meanings.

Particularly preferred groups -X'-Sp'- are $-(CH_2)_{p1}-$, $-O\text{-}(CH_2)_{p1}-$, $-OCO\text{-}(CH_2)_{p1}-$, $-OCOO\text{-}(CH_2)_{p1}-$.

Particularly preferred groups Sp' are, for example, in each case straight-chain ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methyliminoethylene, 1-methylalkylene, ethenylene, propenylene and butenylene.

Further preferred polymerisable mono-, di-, or multireactive liquid crystalline compounds are shown in the following list:

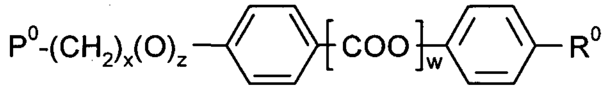

D-1

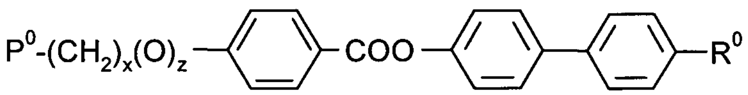

D-2

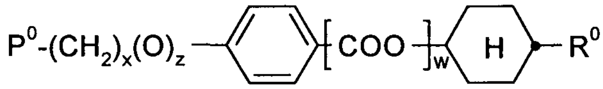

D-3

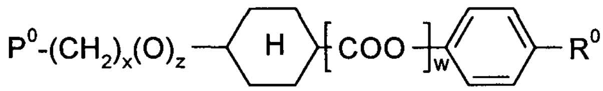

D-4

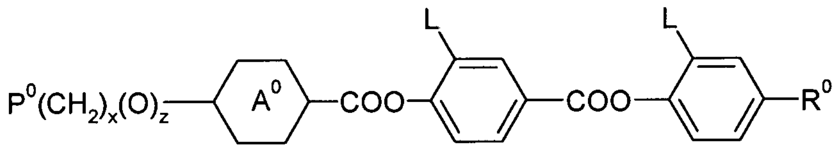

D-5

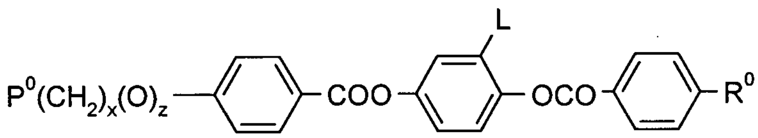

D-6

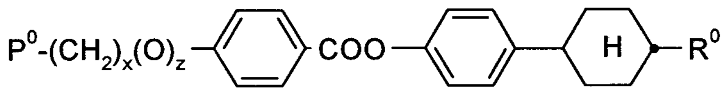

D-7

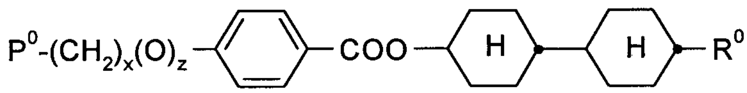

D-8

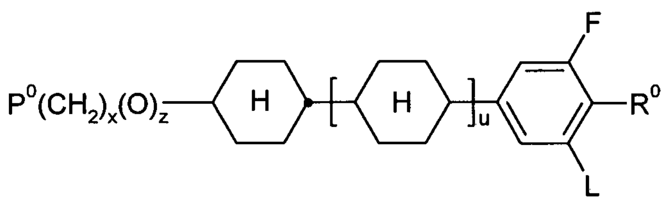

D-9

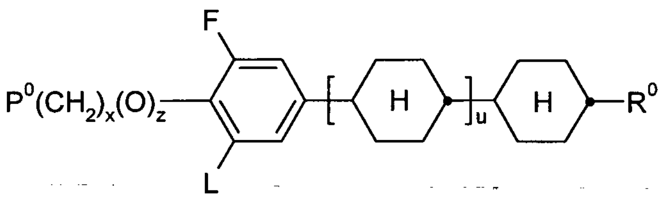

D-10

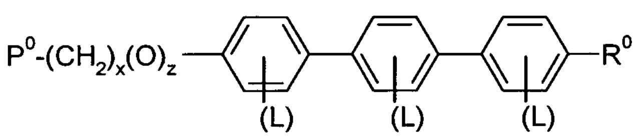

D-11

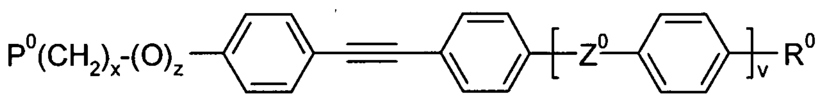

D-12

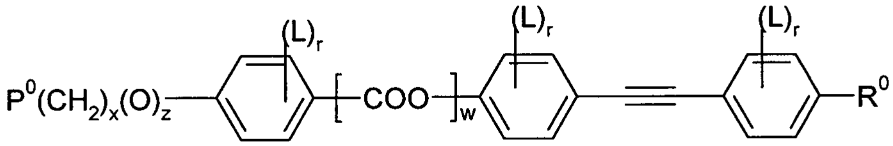

D-13

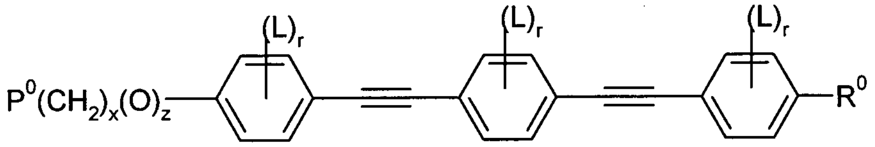

D-14

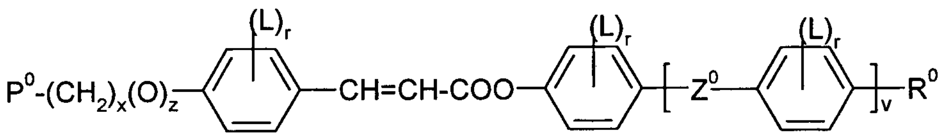

D-15

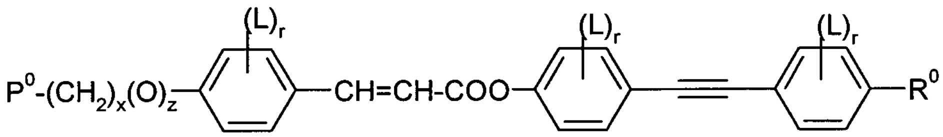

D-16

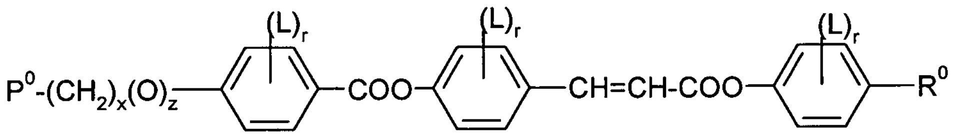

D-17

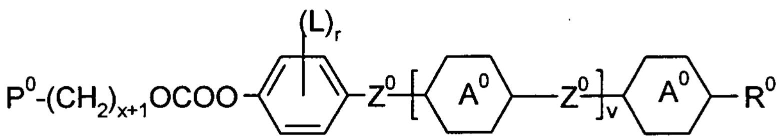

D-18

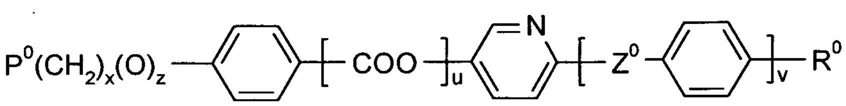

D-19

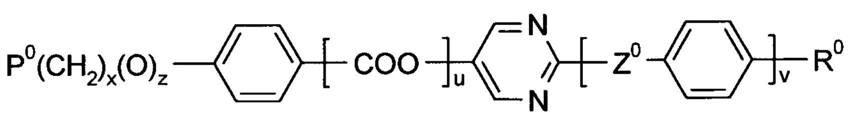

D-20

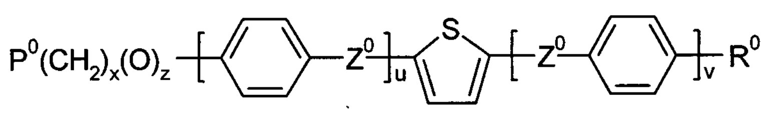

D-21

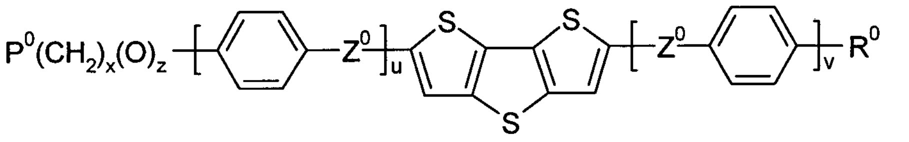

D-22

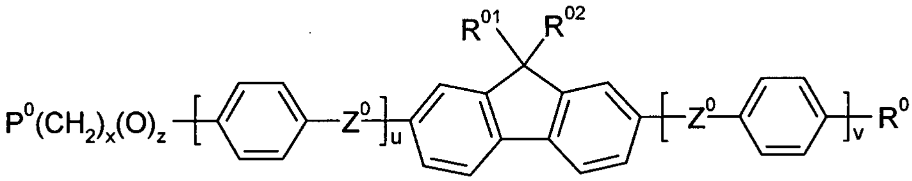

D-23

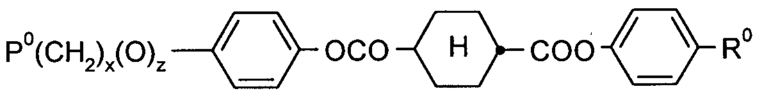

D-24

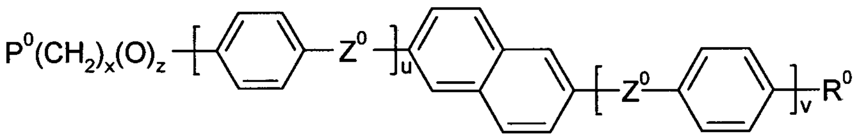

D-25

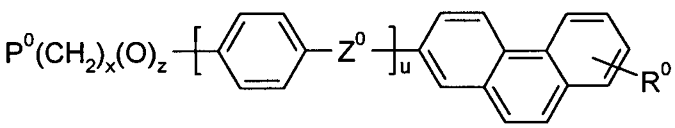

D-26

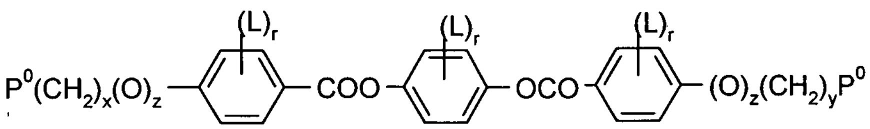

D-27

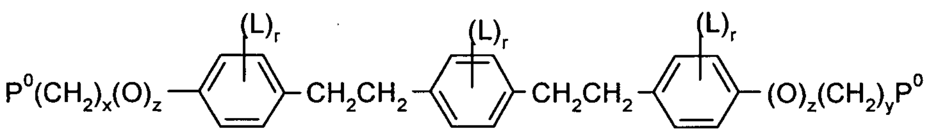

D-28

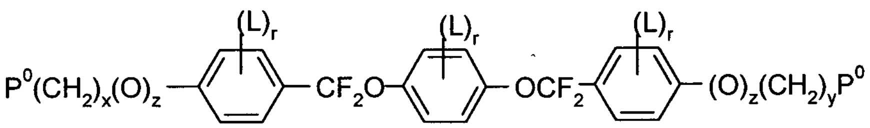

D-29

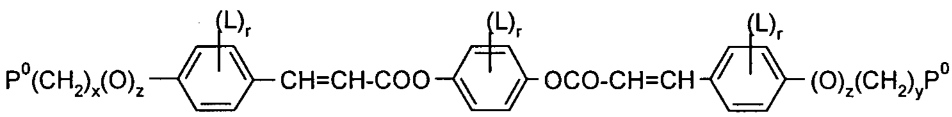

D-30

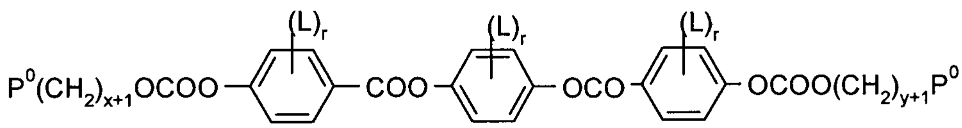

D-31

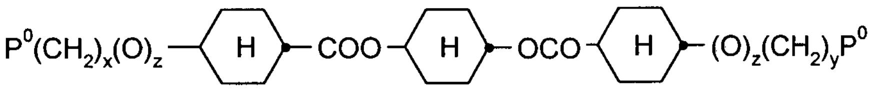

D-32

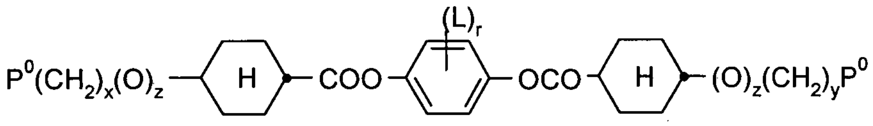

D-33

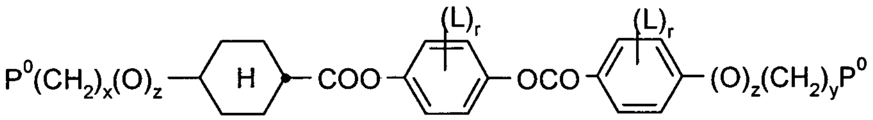

D-34

wherein

$P^0$ is, in case of multiple occurrence independently of one another, a polymerisable group, preferably an acryl, methacryl, oxetane, epoxy, vinyl, vinyloxy, propenyl ether or styrene group,

$A^0$ is, in case of multiple occurrence independently of one another, 1,4-phenylene that is optionally substituted with 1, 2, 3 or 4 groups L, or trans-1,4-cyclohexylene,

$Z^0$ is, in case of multiple occurrence independently of one another, -COO-, -OCO-, $-CH_2CH_2-$, -O≡C-, -CH=CH-, -CH=CH-COO-, -OCO-CH=CH- or a single bond,

r is 0, 1, 2, 3 or 4, preferably 0, 1 or 2,

t is, in case of multiple occurrence independently of one another, 0, 1, 2 or 3,

u and v are independently of each other 0, 1 or 2,

w is 0 or 1,

x and y are independently of each other 0 or identical or different integers from 1 to 12,

z is 0 or 1, with z being 0 if the adjacent x or y is 0,

in addition, wherein the benzene and naphthalene rings can additionally be substituted with one or more identical or different groups L and the parameter $R^0$, $Y^0$, $R^{01}$, $R^{02}$ and L have the same meanings as given above in formula D.

Especially preferred polymerisable mono-, di-, or multireactive liquid crystalline compounds are shown in table F further below.

The polymerisable compounds are polymerised or cross-linked (if a compound contains two or more polymerisable groups) by in-situ polymerisation in the LC medium between the substrates of the LC display. Suitable and preferred polymerisation methods are, for example, thermal or photopolymerisation, preferably photopolymerisation, in particular UV photopolymerisation. If necessary, one or more initiators may also be added here. Suitable conditions for the polymerisation, and suitable types and amounts of initiators, are known to the person skilled in the art and are described in the literature. Suitable for free-radical polymerisation are, for example, the commercially available photoinitiators Irgacure651®, Irgacure184®, Irgacure907®, Irgacure369® or Darocure1173® (Ciba AG). If an initiator is employed, its proportion in the mixture as a whole is preferably 0.001 to 5% by weight, particularly preferably 0.001 to 1% by weight. However, the polymerisation can also take place without addition of an initiator. In a further preferred embodiment, the LC medium does not comprise a polymerisation initiator.

The polymerisable component or the cholesteric liquid-crystalline medium may also comprise one or more stabilisers in order to prevent undesired spontaneous polymerisation of the RMs, for example during storage or transport. Suitable types and amounts of stabilisers are known to the person skilled in the art and are described in the literature. Particularly suitable are, for example, the commercially available stabilisers of the Irganox® series (Ciba AG). If stabilisers are employed, their proportion, based on the total amount of RMs or polymerisable compounds, is preferably 10 - 5000

ppm, particularly preferably 50 - 500 ppm.

The above-mentioned polymerisable compounds are also suitable for polymerisation without initiator, which is associated with considerable advantages, such as, for example, lower material costs and in particular less contamination of the LC medium by possible residual amounts of the initiator or degradation products thereof.

The polymerisable compounds can be added individually to the cholesteric liquid-crystalline medium, but it is also possible to use mixtures comprising two or more polymerisable compounds. On polymerisation of mixtures of this type, copolymers are formed. The invention furthermore relates to the polymerisable mixtures mentioned above and below.

The cholesteric liquid-crystalline medium which can be used in accordance with the invention is prepared in a manner conventional per se, for example by mixing one or more of the above-mentioned compounds with one or more polymerisable compounds as defined above and optionally with further liquid-crystalline compounds and/or additives. In general, the desired amount of the components used in lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing.

It goes without saying to the person skilled in the art that the LC media may also comprise compounds in which, for example, H, N, O, Cl, F have been replaced by the corresponding isotopes.

The liquid crystal media may contain further additives like for example further stabilizers, inhibitors, chain-transfer agents, co-reacting monomers, surface-active compounds, lubricating agents, wetting agents, dispersing agents, hydrophobing agents, adhesive agents, flow improvers, defoaming agents, deaerators, diluents, reactive diluents, auxiliaries, colourants, dyes, pigments or nanoparticles in usual concentrations.

The total concentration of these further constituents is in the range of 0.1 % to 20 %, preferably 0.1 % to 8 %, based on the total mixture. The concentrations of the individual compounds used each are preferably in the range of 0.1 % to 20 %. The concentration of these and of similar additives is not taken into consideration for the values and ranges of the concentrations of the liquid crystal components and compounds of the liquid crystal media in this application. This also holds for the concentration of the dichroic dyes used in the mixtures, which are not counted when the concentrations of the compounds respectively the components of the host medium are specified. The concentration of the respective additives is always given relative to the final doped mixture.

In general, the total concentration of all compounds in the media according to this application is 100 %.

A typical method for the production of a light modulation element according to the invention comprises at least the as defined in appended method claim 13.

The functional principle of the device according to the invention will be explained in detail below. It is noted that no restriction of the scope of the claimed invention, which is not present in the claims, is to be derived from the comments on the assumed way of functioning.

It is possible to obtain the ULH texture, starting from the Grandjean texture or the focal conic texture, by applying an electric field between alignment electrode structure and driving electrode structure with a proper frequency, of for example 10 V/um and 10 Hz, to the cholesteric liquid-crystalline medium at a constant temperature or cooling slowly from its isotropic phase into its cholesteric phase. The field frequency may differ for different media.

Starting from the ULH texture, the cholesteric liquid-crystalline medium can be subjected to flexoelectric switching by application of an electric field between the driving electrode structures and common electrode structure, which are directly provided on the substrates. This causes rotation of the optic axis of the material in the plane of the cell substrates, which leads to a change in transmission when placing the material between crossed polarizers. The flexoelectric switching of inventive materials is further described in detail in the introduction above and in the examples.

The homeotropic "off state" of the light modulation element in accordance with the present invention provides excellent optical extinction and therefore a favourable contrast.

The optics of the device are to some degree self-compensating (similar to a conventional pi-cell) and provide better viewing angle than a conventional light modulation element according to the VA mode.

The required applied electric field strength is mainly dependent on two parameters. One is the electric field strength across the common electrode structure and driving electrode structure, the other is the $\Delta\varepsilon$ of the host mixture. The applied electric field strengths are typically lower than approximately 10 V/$\mu$m$^{-1}$, preferably lower than approximately 8 V/$\mu$m$^{-1}$ and more preferably lower than approximately 6 V/$\mu$m$^{-1}$. Correspondingly, the applied driving voltage of the light modulation element according to the present invention is preferably lower than approximately 30 V, more preferably lower than approximately 24 V, and even more preferably lower than approximately 18 V.

The light modulation element according to the present invention can be operated with a conventional driving waveform as commonly known by the expert.

The light modulation element of the present invention can be used in various types of optical and electro-optical devices.

Said optical and electro optical devices include, without limitation electro-optical displays, liquid crystal displays

(LCDs), non-linear optic (NLO) devices, and optical information storage devices.

Preferably the optical or electro-optical device comprises at least one electric circuit, which is capable of driving the driving electrode in combination with the common electrode of the light modulation element in order to drive the light modulation element.

More preferably, the optical or electro-optical device comprises an additional electric circuit, which is capable of driving the alignment electrode in combination with the driving electrode of the light modulation in order to align the cholesteric liquid crystalline medium in the ULH texture.

In particular, the optical or electro-optical device comprises at least one electric circuit, which is capable of driving the light modulation element with the alignment electrode in combination with the common electrode and which is additionally capable of driving the light modulation element with the driving electrode in combination with the common electrode.

The functional principle of the optical or electro-optical device including the alignment procedure and the driving procedure will be explained in detail below and with respect to Fig. 4. It is noted that no restriction of the scope of the claimed invention, which is not present in the claims, is to be derived from the comments on the assumed way of functioning.

In accordance with the present invention the common electrode structure and the "FFS-type" structured substrate array of the light modulation element, which includes the alignment and driving electrode structure, which are each connected to a switching element, such as a thin film transistor (TFT) or thin film diode (TFD).

Preferably, the driving electrode structure is electrically connected to the drain of a first TFT (TFT1) and the alignment electrode structure is electrically connected to the drain of a second TFT (TFT2), as it is depicted in Fig. 4.

Preferably, the source of the first TFT (TFT1) is electrically connected to a data line, and the source of the second TFT (TFT2) is electrically connected to a so called common electrode, as it is depicted in Fig. 4.

In order to align the cholesteric liquid crystalline medium of the light modulation element of the present invention in the ULH texture, a high voltage (Vgh: 10V to 100V) is applied to the gate line in the electric circuit to turn on both TFT1 and TFT2. Consequently, the voltage of the driving electrode (Vp: 0V to 70V) is equal to the voltage of the data line (Vd) and the voltage of the alignment electrode (Va) is equal to that of the common electrode (Vc: 0V to 40V). Because of the voltage differences between the driving electrode and alignment electrode the electric field aligns the cholesteric liquid crystalline medium of the light modulation element of the present invention in the ULH texture as described before.

In order to drive the light modulation element according to the present invention, a high voltage (Vgh: 10V to 100V) is applied to the gate line in the electric circuit in a very short time to turn on both TFT1 and TFT2 for charging the respective capacitances $C_{LC}$, $C_{ST}$ and $C_C$. The change to low voltage (Vgl: -20V to 10V) turns both TFT1 and TFT2 off. Consequently, the voltage of the driving electrode (Vp) is almost the same as the voltage of the data line (Vd) because the capacitors are fully charged. The voltage of the alignment electrode (Va) is defined as:

$$Va=(Vp-Vc)^{*}\ C_C/(\ C_{LC}+C_{ST})$$

With large Cc, the voltage of the alignment electrode (Va) is very close to voltage of the driving electrode (Vp). So the driving electrode and alignment electrode both can drive the light modulation element according to the present invention.

According to Fig. 2:

In order to align the cholesteric liquid crystalline medium of the light modulation element of the present invention in the ULH texture, the voltage of the alignment electrode (Va : 0V to 70V) and the common electrode (Vc: 0V to 40V) are applied separately. Because of the voltage differences between the common electrode and alignment electrode, the electric field aligns the cholesteric liquid crystalline medium of the light modulation element of the present invention in the ULH texture as described before.

In order to drive the light modulation element according to the present invention, a high voltage (Vgh: 10V to 100V) is applied to the gate line in the electric circuit in a very short time to turn on TFT charging the respective capacitances $C_{LC}$, $C_{ST}$. The change to low voltage (Vgl: -20V to 10V) turns both TFT1 and TFT2 off. Consequently, the voltage of the driving electrode (Vp) is almost the same as the voltage of the data line (Vd) because the capacitors are fully charged. The voltage of the alignment electrode (Va) is electrically connect with common electrode (Vc)

$$Va=Vc$$

So the driving electrode can drive the light modulation element according to the present invention.

Fig. 3 shows a combination of the previous structures, explained above.

Unless the context clearly indicates otherwise, as used herein plural forms of the terms herein are to be construed as including the singular form and vice versa.

The parameter ranges indicated in this application all include the limit values including the maximum permissible errors as known by the expert. The different upper and lower limit values indicated for various ranges of properties in combination with one another give rise to additional preferred ranges.

Throughout this application, the following conditions and definitions apply, unless expressly stated otherwise. All concentrations are quoted in per cent by weight and relate to the respective mixture as a whole, all temperatures are quoted in degrees Celsius and all temperature differences are quoted in differential degrees. All physical properties are determined in accordance with "Merck Liquid Crystals, Physical Properties of Liquid Crystals", Status Nov. 1997, Merck KGaA, Germany, and are quoted for a temperature of 20°C, unless expressly stated otherwise. The optical anisotropy ($\Delta n$) is determined at a wavelength of 589.3 nm. The dielectric anisotropy ($\Delta\varepsilon$) is determined at a frequency of 1 kHz or if explicitly stated at a frequency 19 GHz. The threshold voltages, as well as all other electro-optical properties, are determined using test cells produced at Merck KGaA, Germany. The test cells for the determination of $\Delta\varepsilon$ have a cell thickness of approximately 20 $\mu$m. The electrode is a circular ITO electrode having an area of 1.13 $cm^2$ and a guard ring. The orientation layers are SE-1211 from Nissan Chemicals, Japan, for homeotropic orientation ($\varepsilon||$) and polyimide AL-1054 from Japan Synthetic Rubber, Japan, for homogeneous orientation ($\varepsilon\perp$). The capacitances are determined using a Solatron 1260 frequency response analyser using a sine wave with a voltage of 0.3 $V_{rms}$. The light used in the electro-optical measurements is white light. A set-up using a commercially available DMS instrument from Autronic-Melchers, Germany, is used here.

Throughout the description and claims of this specification, the words "comprise" and "contain" and variations of the words, for example "comprising" and "comprises", mean "including but not limited to", and are not intended to (and do not) exclude other components. On the other hand, the word "comprise" also encompasses the term "consisting of" but is not limited to it.

It will be appreciated that many of the features described above, particularly of the preferred embodiments, are inventive in their own right and not just as part of an embodiment of the present invention. Independent protection may be sought for these features in addition to, or alternative to any invention presently claimed.

Throughout the present application it is to be understood that the angles of the bonds at a C atom being bound to three adjacent atoms, e.g. in a C=C or C=O double bond or e.g. in a benzene ring, are 120° and that the angles of the bonds at a C atom being bound to two adjacent atoms, e.g. in a C≡C or in a C≡N triple bond or in an allylic position C=C=C are 180°, unless these angles are otherwise restricted, e.g. like being part of small rings, like 3-, 5- or 5-atomic rings, notwithstanding that in some instances in some structural formulae these angles are not represented exactly.

It will be appreciated that variations to the foregoing embodiments of the invention can be made while still falling within the scope of the invention. Alternative features serving the same, equivalent or similar purpose may replace each feature disclosed in this specification, unless stated otherwise. Thus, unless stated otherwise, each feature disclosed is one example only of a generic series of equivalent or similar features.

All of the features disclosed in this specification may be combined in any combination, except combinations where at least some of such features and/or steps are mutually exclusive. In particular, the preferred features of the invention are applicable to all aspects of the invention and may be used in any combination. Likewise, features described in non-essential combinations may be used separately (not in combination).

Without further elaboration, it is believed that one skilled in the art can, using the preceding description, utilize the present invention to its fullest extent. The following examples are, therefore, to be construed as merely illustrative and not limitative of the remainder of the disclosure in any way whatsoever.

The following abbreviations are used to illustrate the liquid crystalline phase behavior of the compounds: K = crystalline; N = nematic; N2 = second nematic; S = smectic; Ch = cholesteric; I = isotropic; Tg = glass transition. The numbers between the symbols indicate the phase transition temperatures in °C.

In the present application and especially in the following examples, the structures of the liquid crystal compounds are represented by abbreviations, which are also called "acronyms". The transformation of the abbreviations into the corresponding structures is straightforward according to the following three tables A to C.

All groups $C_nH_{2n+1}$, $C_mH_{2m+1}$, and $C_lH2_{l+1}$ are preferably straight chain alkyl groups with n, m and l C-atoms, respectively, all groups $C_nH_{2n}$, $C_mH_{2m}$ and $C_lH_{2l}$ are preferably $(CH_2)_n$, $(CH_2)_m$ and $(CH_2)_l$, respectively and -CH=CH- preferably is *trans*- respectively *E* vinylene.

Table A lists the symbols used for the ring elements, table B those for the linking groups and table C those for the symbols for the left hand and the right hand end groups of the molecules.

Table D lists exemplary molecular structures together with their respective codes.

**Table A: Ring Elements**

| | | | |
|---|---|---|---|
| **C** | 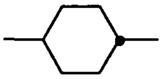 | **P** | 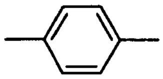 |
| **D** | 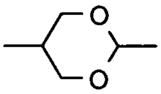 | **DI** | 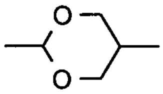 |
| **A** | 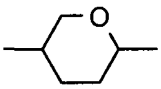 | **AI** | 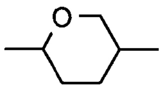 |
| **G** | 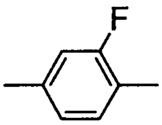 | **GI** | 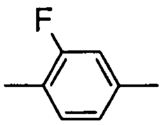 |
| **G(Cl)** | 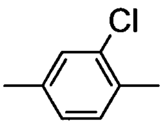 | **GI(Cl)** | 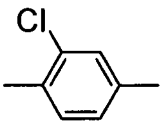 |
| **G(1)** | 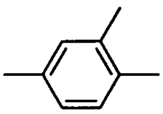 | **GI(1)** | 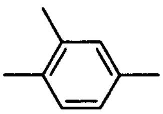 |
| **U** | 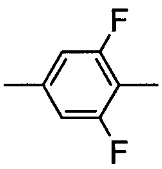 | **UI** | 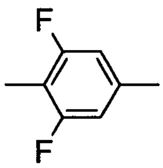 |
| **Y** | 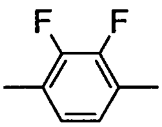 | | |
| **M** | 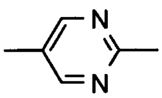 | **MI** | 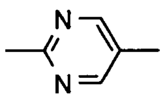 |
| **N** | 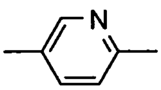 | **NI** | 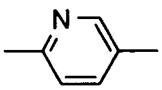 |
| **np** | 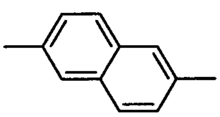 | | |
| **n3f** | 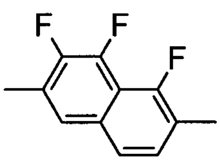 | **n3fI** | 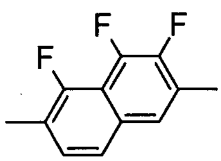 |
| **th** | 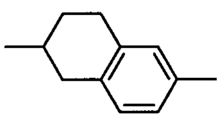 | **thI** | 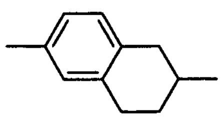 |

(continued)

| | | | |
|---|---|---|---|
| **th2f** | 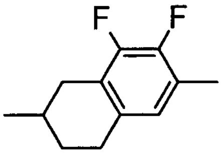 | **th2fI** | 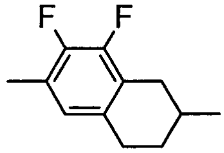 |
| **o2f** | 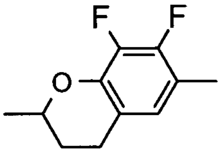 | **o2fI** | 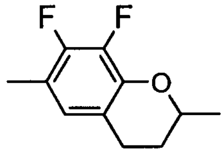 |
| **dh** | 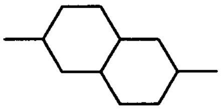 | | |
| **K** | 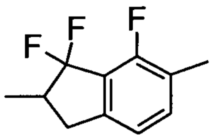 | **KI** | 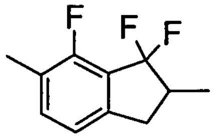 |
| **L** | 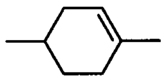 | **LI** | 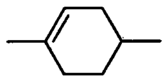 |
| **F** | 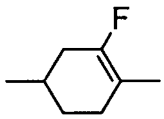 | **FI** | 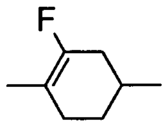 |

**Table B: Linking Groups**

| | | | |
|---|---|---|---|
| **n** | $(-CH_2-)_n$ | "n" is an integer except 0 and 2 | |
| **E** | $-CH_2-CH_2-$ | | |
| **V** | -CH=CH- | | |
| **T** | -C≡C- | | |
| **W** | $-CF_2-CF_2-$ | | |
| **B** | -CF=CF- | | |
| **Z** | -CO-O- | **ZI** | -O-CO- |
| **X** | -CF=CH- | **XI** | -CH=CF- |
| **O** | $-CH_2-O-$ | **OI** | $-O-CH_2-$ |
| **Q** | $-CF_2-O-$ | **QI** | $-O-CF_2-$ |

**Table C: End Groups**

| **Left hand side, used alone or in combination with others** | | **Right hand side, used alone or in combination with others** | |
|---|---|---|---|
| **-n-** | CnH2n+1- | **-n** | $-C_nH_{2n+1}$ |
| **-nO-** | $C_nH_{2n+1}-O-$ | **-nO** | $-O-C_nH_{2n+1}$ |
| **-V-** | $CH_2=CH-$ | **-V** | $-CH=CH_2$ |
| **-nV-** | $C_nH_{2n+1}-CH=CH-$ | **-nV** | $-C_nH_{2n}-CH=CH_2$ |
| **-Vn-** | CH2=CH- $C_nH_{2n}-$ | **-Vn** | $-CH=CH-C_nH_{2n+1}$ |
| **-nVm-** | $C_nH_{2n+1}-CH=CH-C_mH_{2m}-$ | **-nVm** | $-C_nH_{2n}-CH=CH-C_mH_{2m+1}$ |
| **-N-** | N≡C- | **-N** | -C≡N |
| **-S-** | S=C=N- | **-S** | -N=C=S |

(continued)

| Left hand side, used alone or in combination with others | | Right hand side, used alone or in combination with others | |
|---|---|---|---|
| **-F-** | F- | **-F** | -F |
| **-CL-** | Cl- | **-CL** | -Cl |
| **-M-** | $CFH_2$- | **-M** | -$CFH_2$ |
| **-D-** | $CF_2H$- | **-D** | -$CF_2H$ |
| **-T-** | $CF_3$- | **-T** | -CF3 |
| **-MO-** | $CFH_2O$- | **-OM** | -$OCFH_2$ |
| **-DO-** | $CF_2HO$- | **-OD** | -$OCF_2H$ |
| **-TO-** | $CF_3O$- | **-OT** | -$OCF_3$ |
| **-A-** | H-C≡C- | **-A** | -C≡C-H |
| **-nA-** | $C_nH_{2n+1}$-C≡C- | **-An** | -C≡C-$C_nH_{2n+1}$ |
| **-NA-** | N≡C-C≡C- | **-AN** | -C≡C-C≡N |
| **Left hand side, used in combination with others only** | | **Right hand side, used in combination with others only** | |
| **-...n...-** | -$C_nH_{2n}$- | **-...n...** | -$C_nH_{2n}$- |
| **-...M...-** | -CFH- | **-...M...** | -CFH- |
| **-...D...-** | -$CF_2$- | **-...D...** | -$CF_2$- |
| **-...V...-** | -CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

wherein n und m each are integers and three points "..." indicate a space for other symbols of this table.

Preferably, the liquid crystalline media according to the present invention comprise one or more compounds selected from the group of compounds of the formulae of the following table.

## Table D

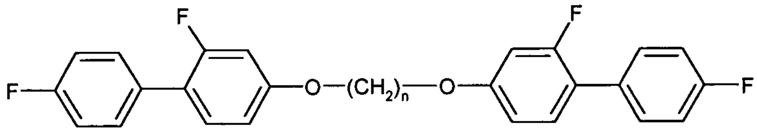

**F-PGI-O-n-O-GP-F**

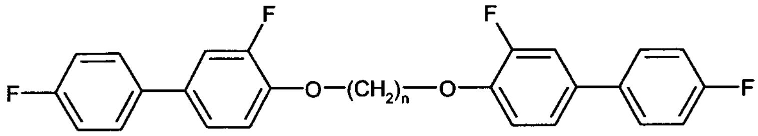

**F-PG-O-n-O-GIP-F**

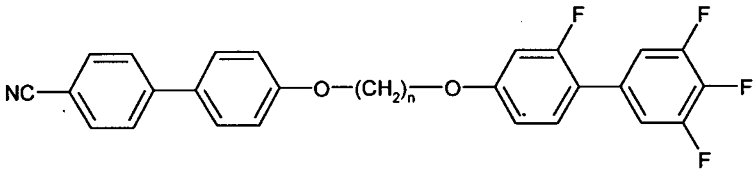

**N-PP-O-n-O-GU-F**

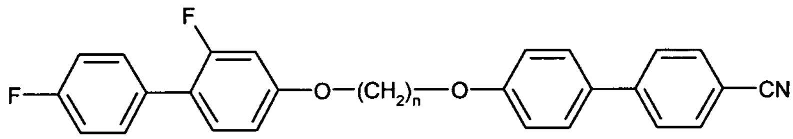

**F-PGI-O-n-O-PP-N**

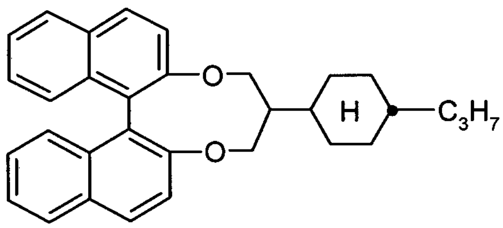

**R-5011** respectively **S-5011**

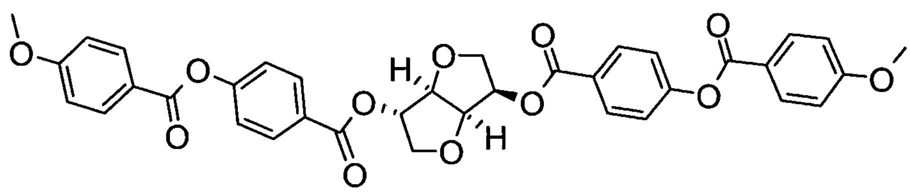

**CD-1**

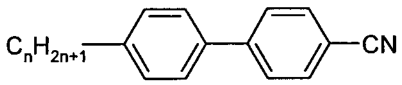

**PP-n-N**

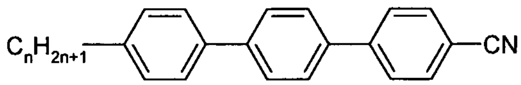

**PPP-n-N**

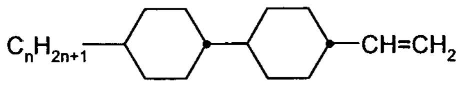

**CC-n-V**

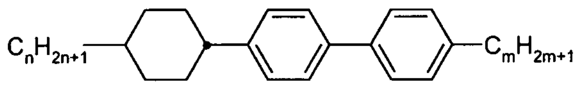

**CPP-n-m**

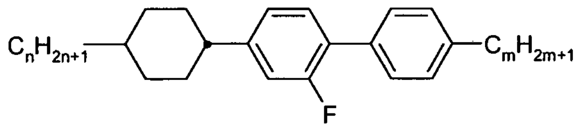

**CGP-n-m**

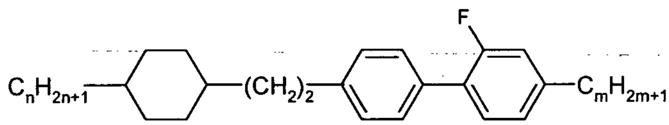

**CEPGI-n-m**

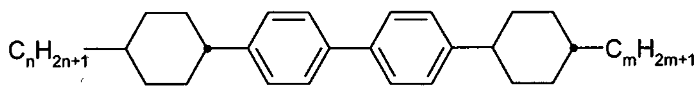

**CPPC-n-m**

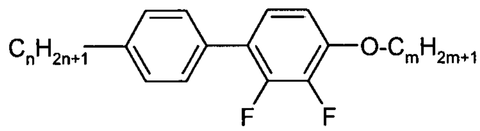

**PY-n-Om**

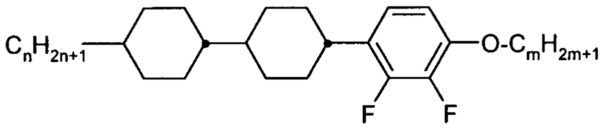

**CCY-n-Om**

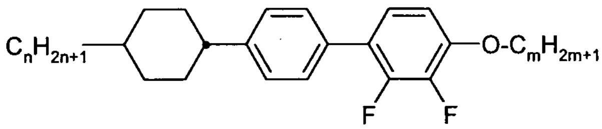

**CPY-n-Om**

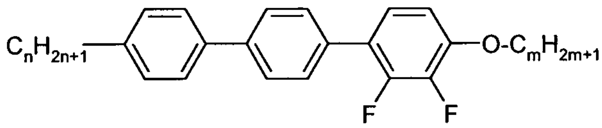

**PPY-n-Om**

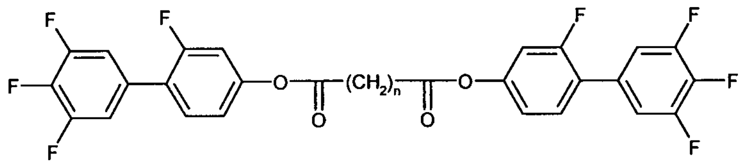

**F-UIGI-ZI-n-Z-GU-F**

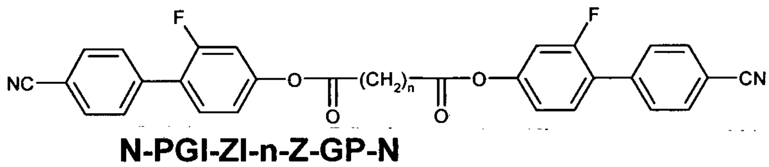

**N-PGI-ZI-n-Z-GP-N**

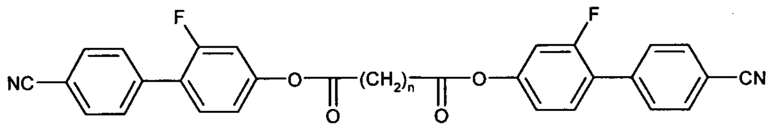

**F-PGI-ZI-n-Z-GP-F**

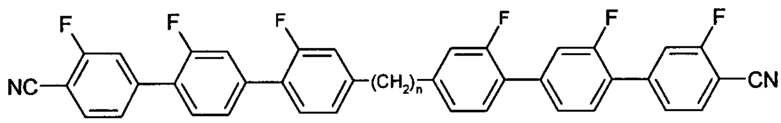

**N-GIGIGI-n-GGG-N**

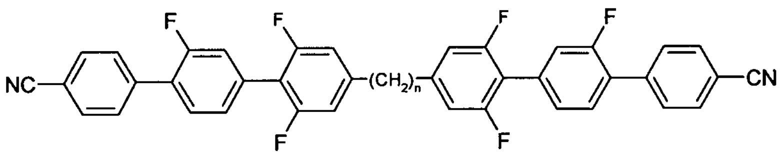

**N-PGIUI-n-UGP-N**

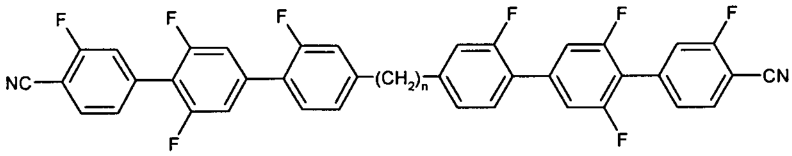

**N-GIUIGI-n-GUG-N**

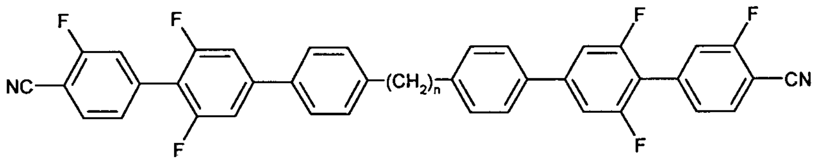

**N-GIUIP-n-PUG-N**

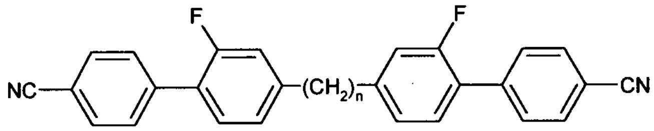

**N-PGI-n-GP-N**

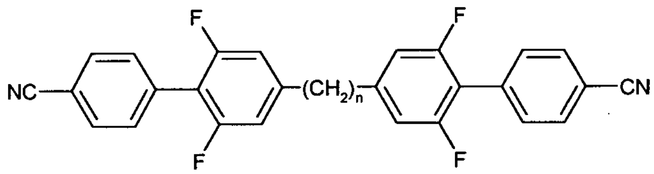

**N-PUI-n-UP-N**

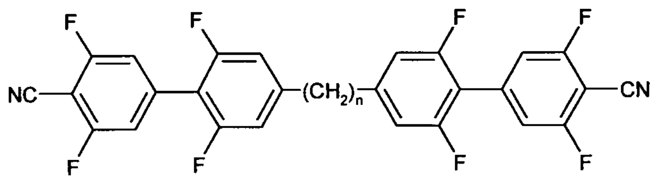

**N-UIUI-n-UU-N**

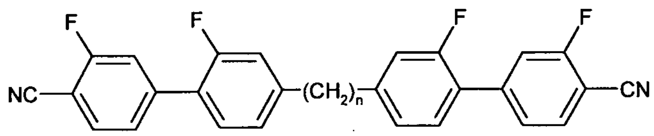

**N-GIGI-n-GG-N**

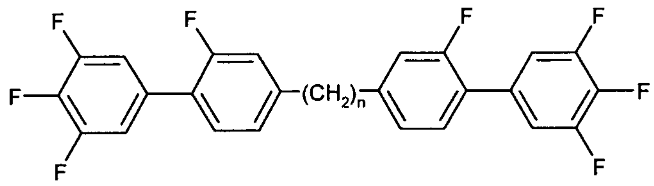

F-UIGI-n-GU-F

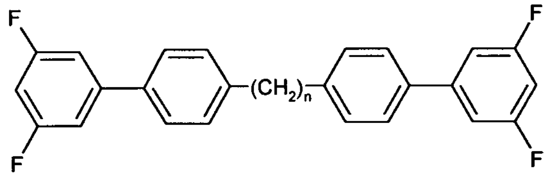

UIP-n-PU

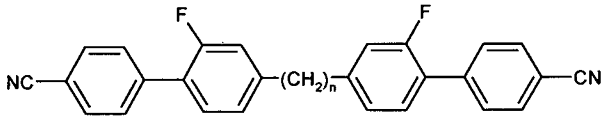

N-PGI-n-GP-N

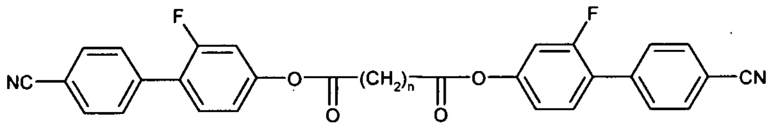

N-PGI-ZI-n-Z-GP-N

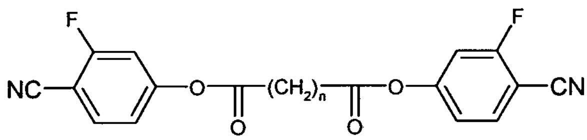

N-GI-ZI-n-Z-G-N

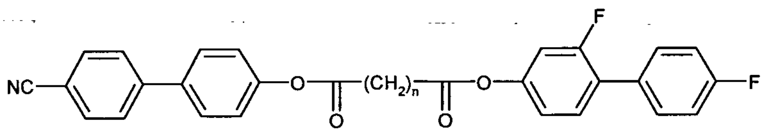

N-PP-ZI-n-Z-GP-F

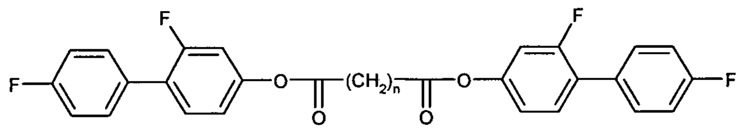

F-PGI-ZI-n-Z-GP-F

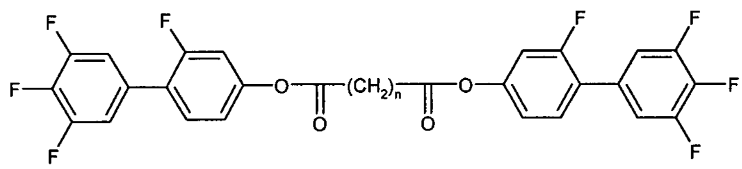

F-UIGI-ZI-n-Z-GU-F

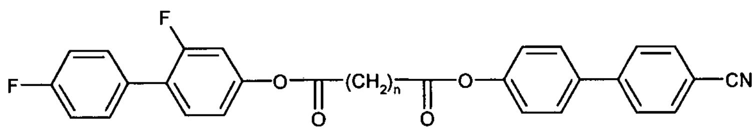

**F-PGI-ZI-n-Z-PP-N**

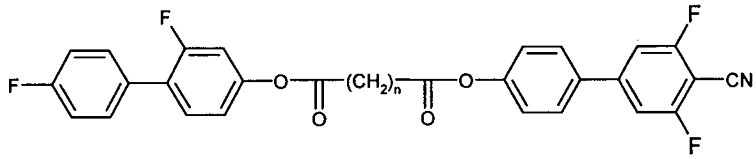

**F-PGI-ZI-n-Z-PU-N**

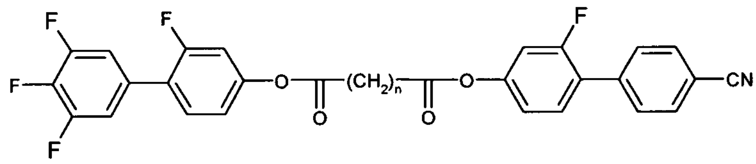

**F-UIGI-ZI-n-Z-GP-N**

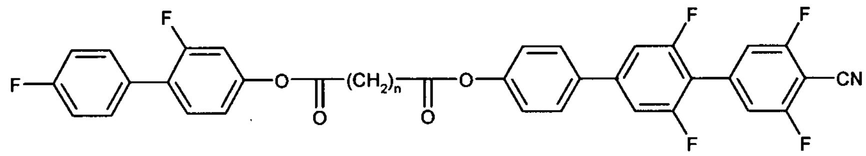

**F-PGI-ZI-n-Z-PUU-N**

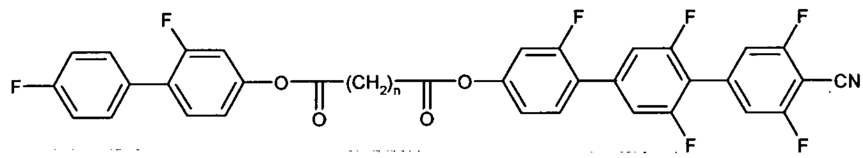

**F-PGI-ZI-n-Z-GUU-N**

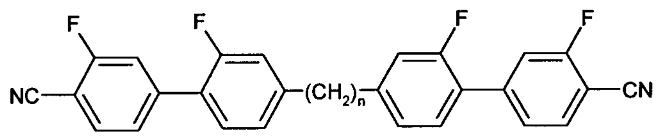

**N-GIGI-n-GG-N**

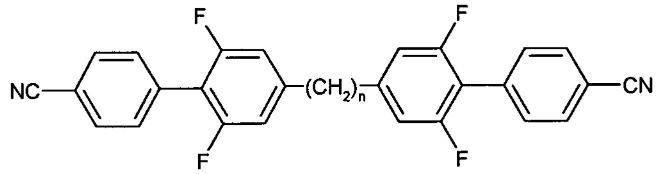

**N-PUI-n-UP-N**

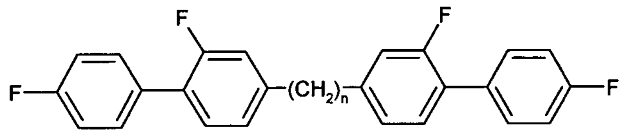

**F-PGI-n-GP-F**

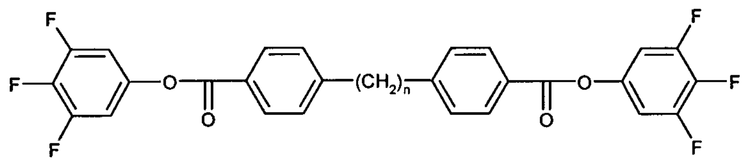

**F-UIZIP-n-PZU-F**

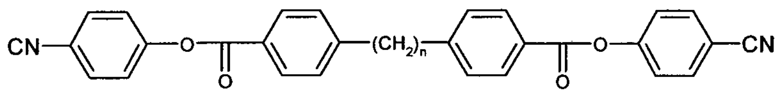

**N-PZIP-n-PZP-N**

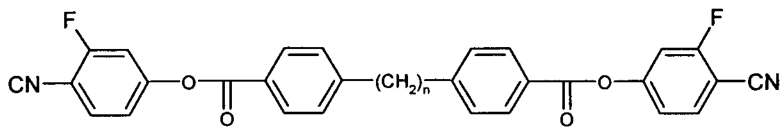

**N-GIZIP-n-PZG-N**

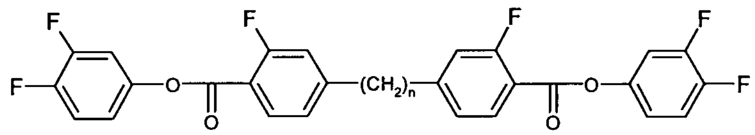

**F-GIZIGI-n-GZG-F**

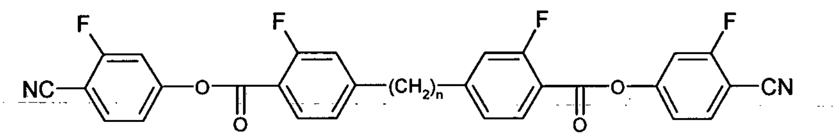

**N-GIZIGI-n-GZG-N**

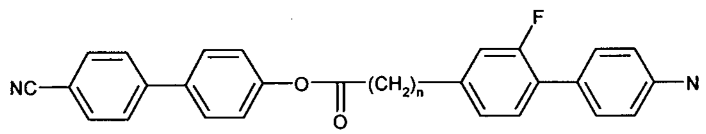

**N-PP-ZI-n-GP-N**

**Table E**

Table E indicates possible stabilisers which can be added to the LC media (n here denotes an integer from 1 to 12, terminal methyl groups ar not shown).

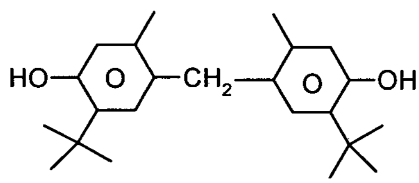

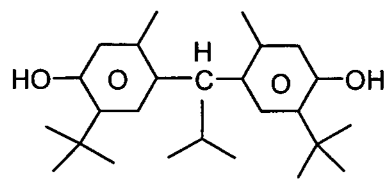

(continued)

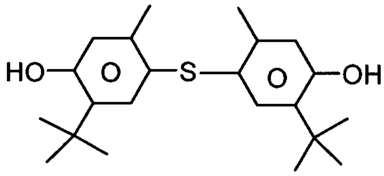

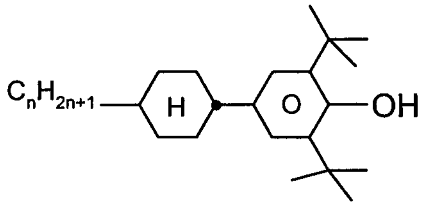

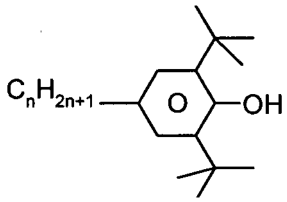

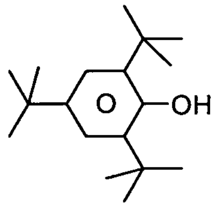

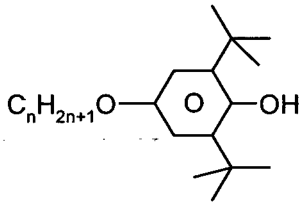

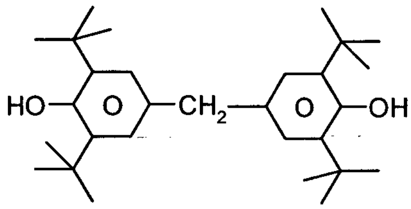

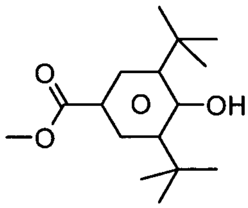

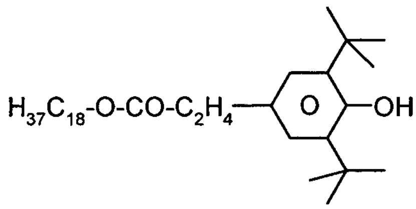

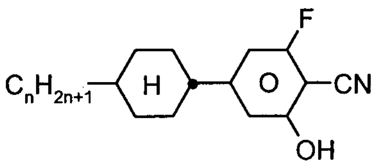

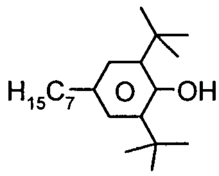

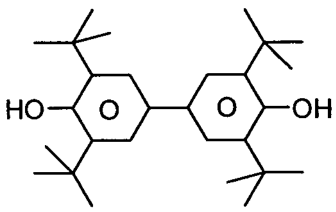

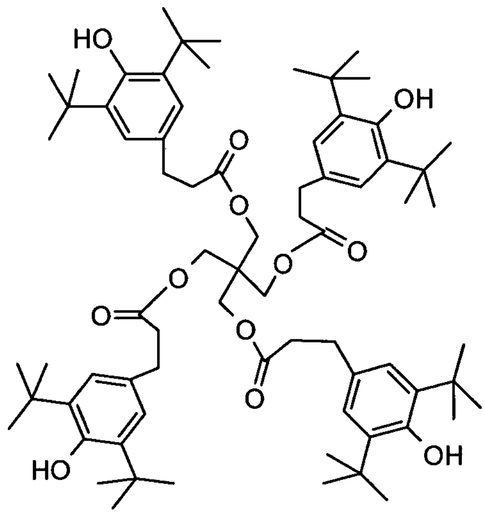

(continued)

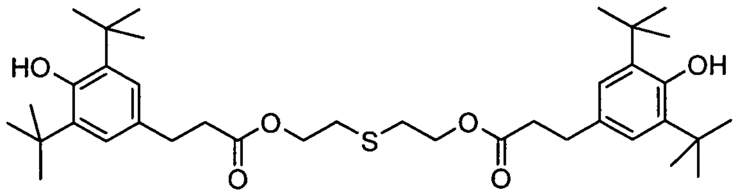

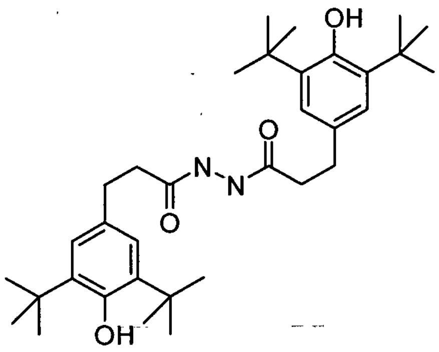

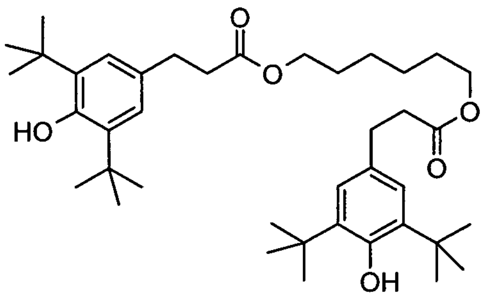

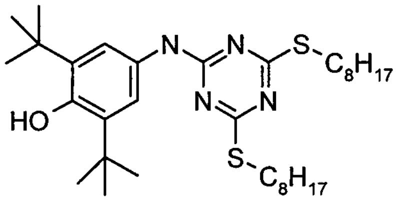

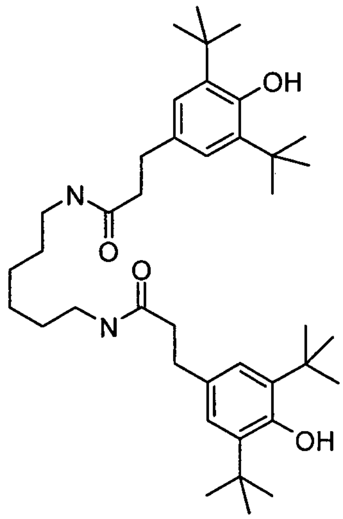

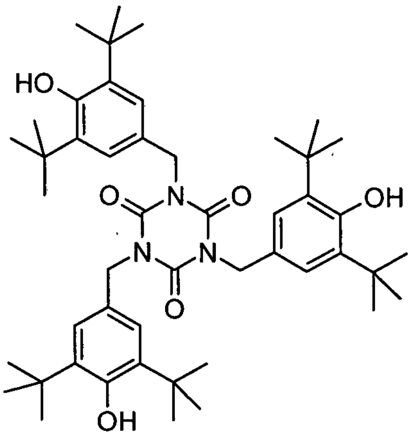

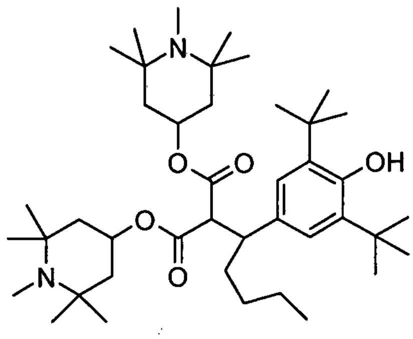

(continued)

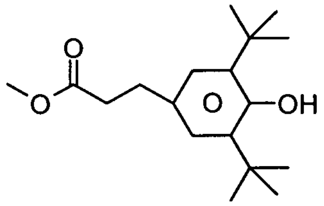

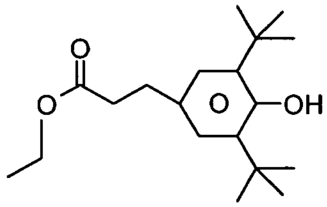

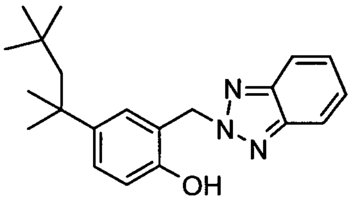

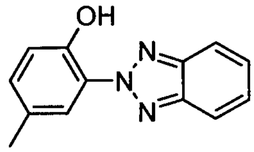

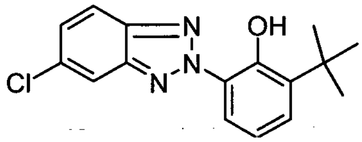

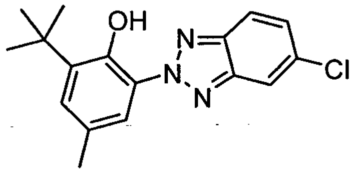

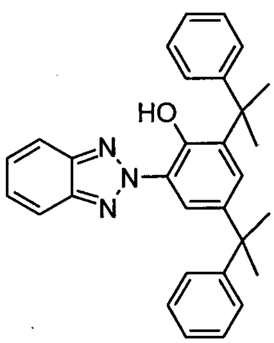

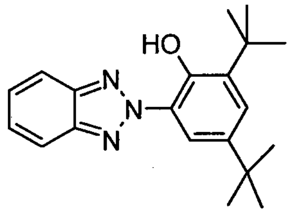

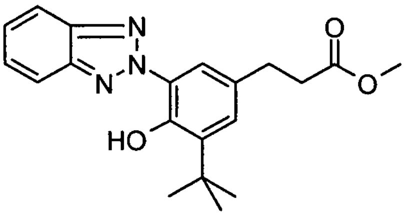

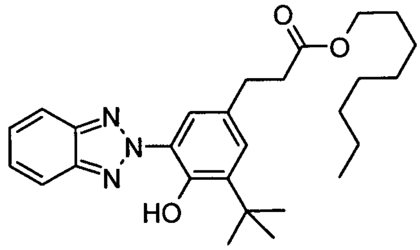

(continued)

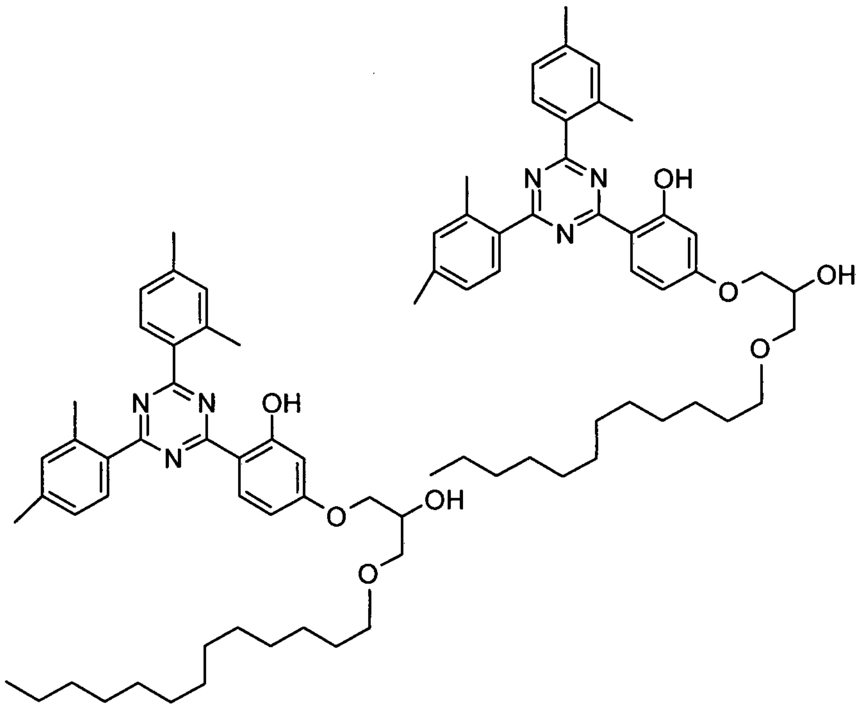

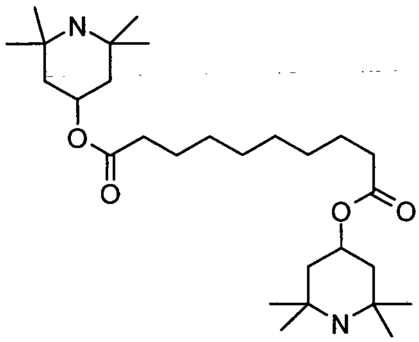

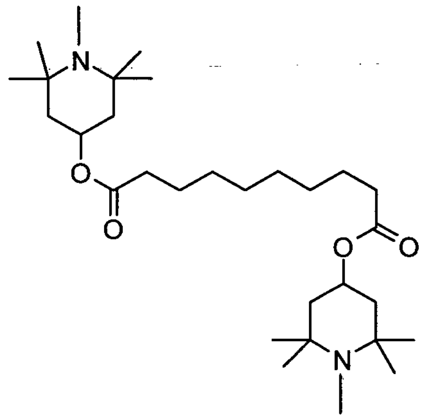

The LC media preferably comprise 0 to 10% by weight, in particular 1 ppm to 5% by weight and particularly preferably 1 ppm to 3% by weight, of stabilisers. The LC media preferably comprise one or more stabilisers selected from the group consisting of compounds from Table E.

**Tabelle F**

Table F indicates possible reactive mesogens which can be used in the polymerisable component of LC media.

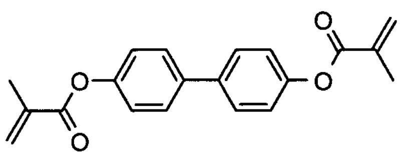

RM-1

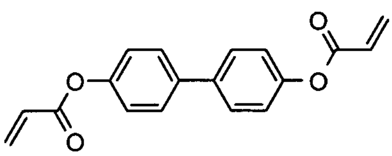

RM-2

(continued)

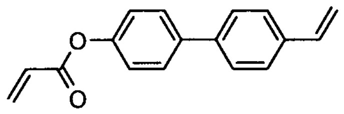

RM-3

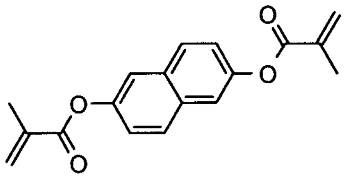

RM-4

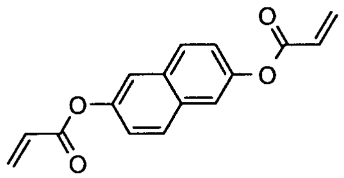

RM-5

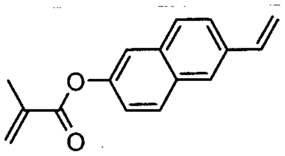

RM-6

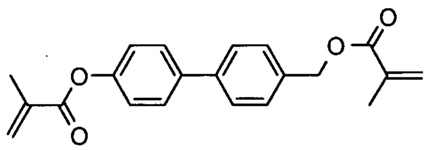

RM-7

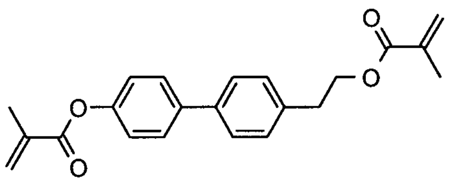

RM-8

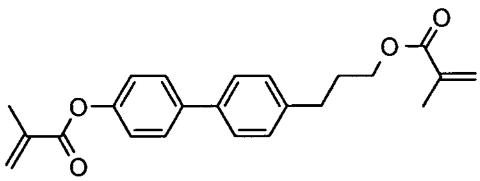

RM-9

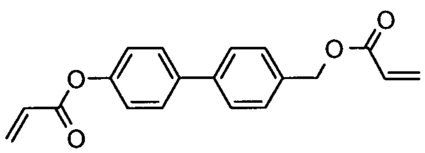

RM-10

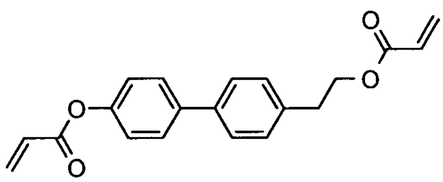

RM-11

(continued)

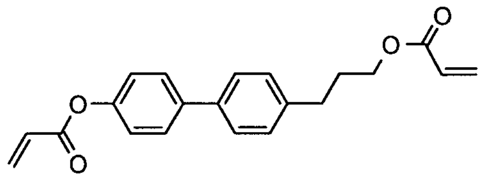

RM-12

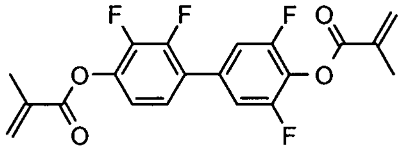

RM-13

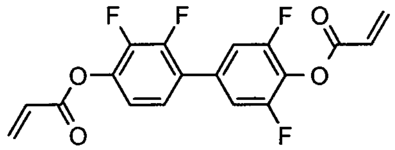

RM-14

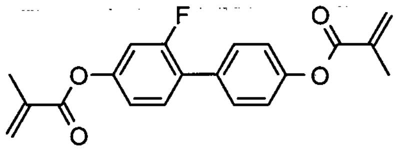

RM-15

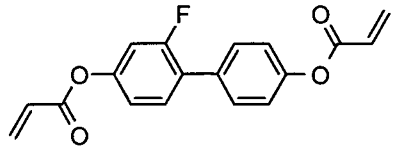

RM-16

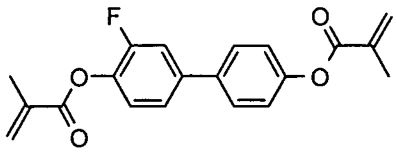

RM-17

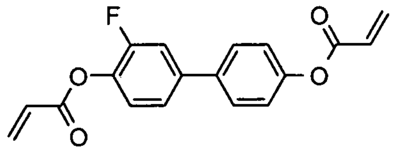

RM-18

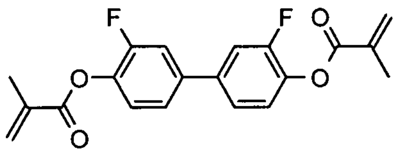

RM-19

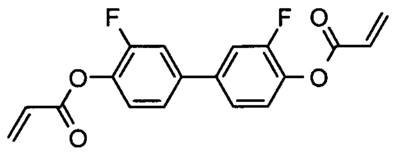

RM-20

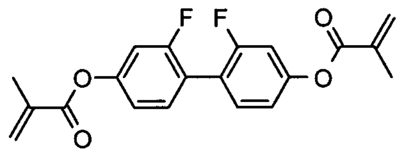

RM-21

(continued)

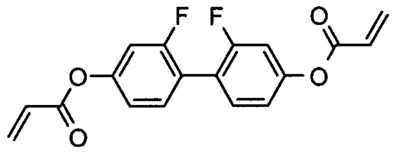

RM-22

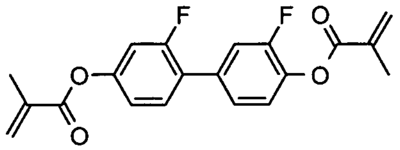

RM-23

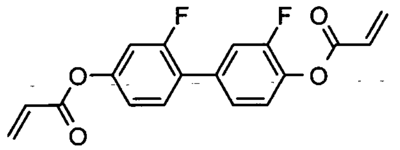

RM-24

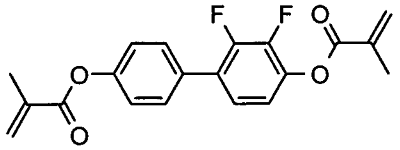

RM-25

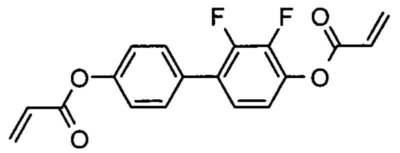

RM-26

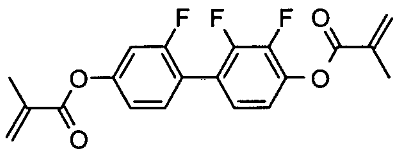

RM-27

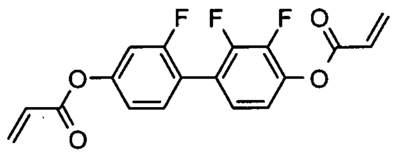

RM-28

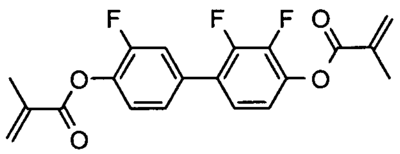

RM-29

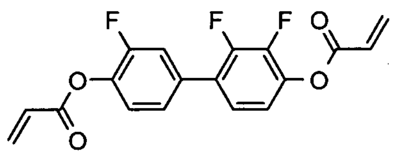

RM-30

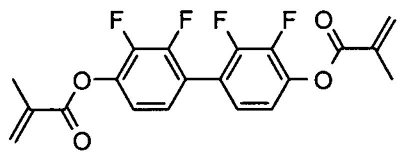

RM-31

(continued)

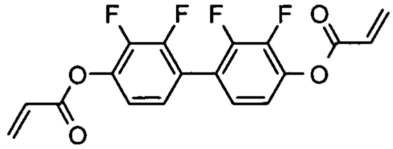

RM-32

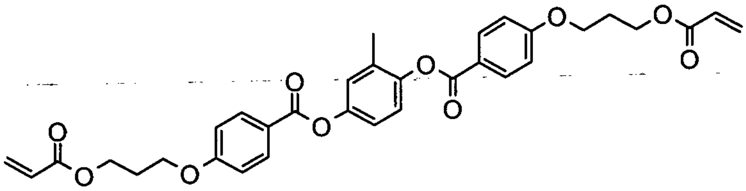

RM-33

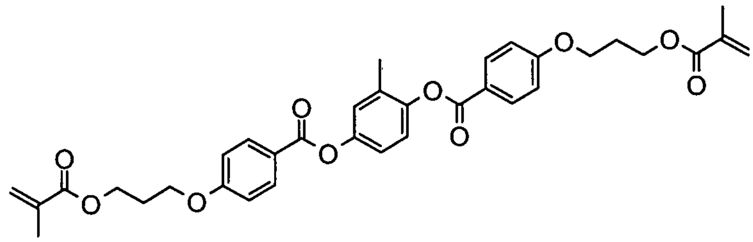

RM-34

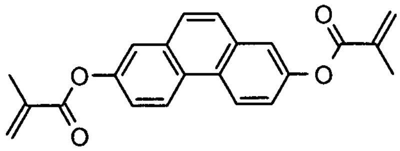

RM-35

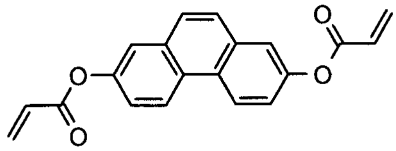

RM-36

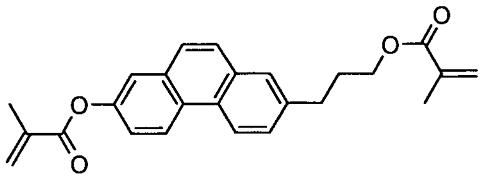

RM-37

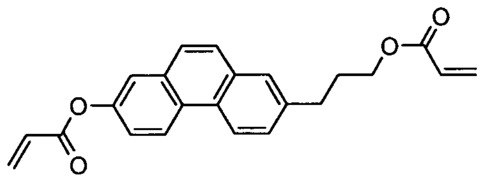

RM-38

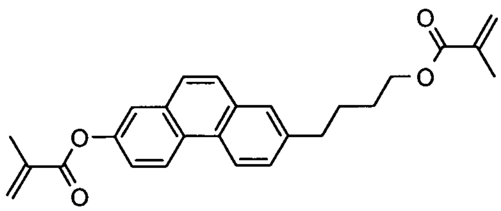

RM-39

(continued)

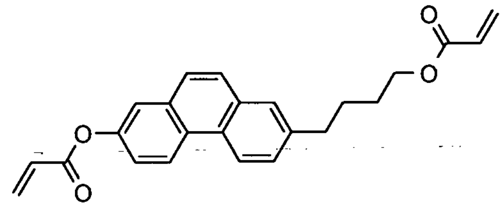 RM-40

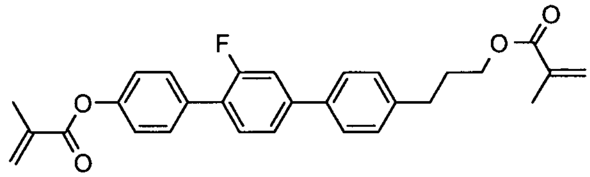 RM-41

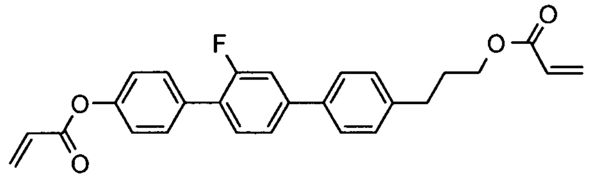 RM-42

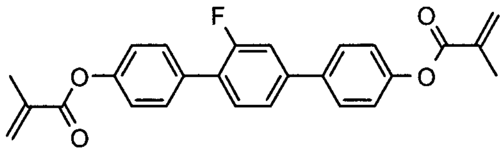 RM-43

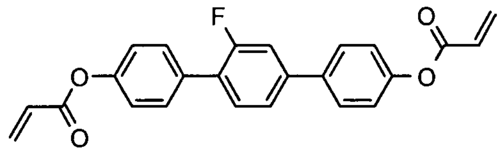 RM-44

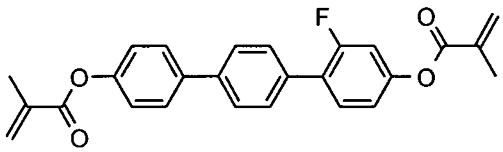 RM-45

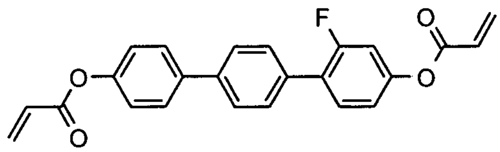 RM-46

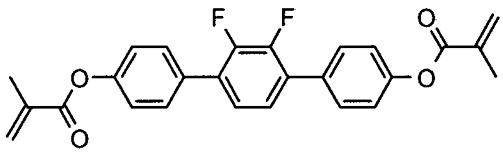 RM-47

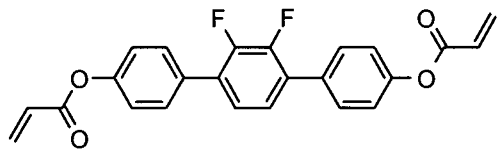 RM-48

(continued)

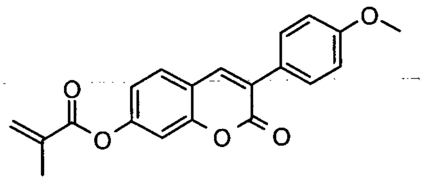

RM-49

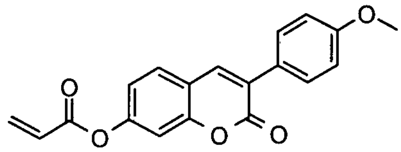

RM-50

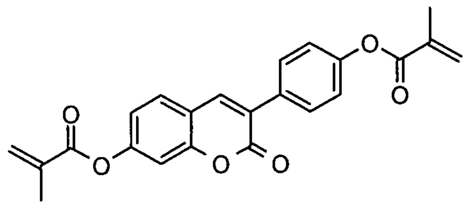

RM-51

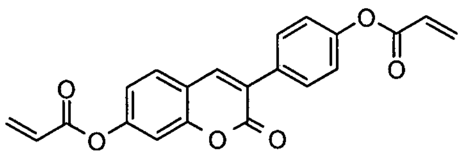

RM-52

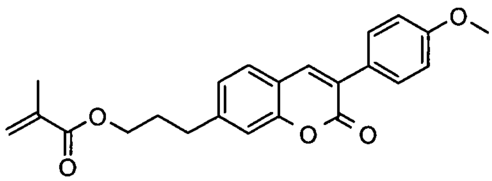

RM-53

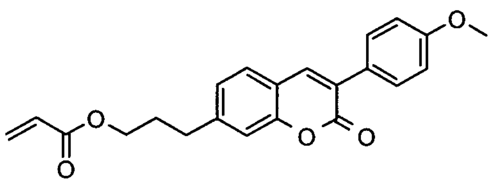

RM-54

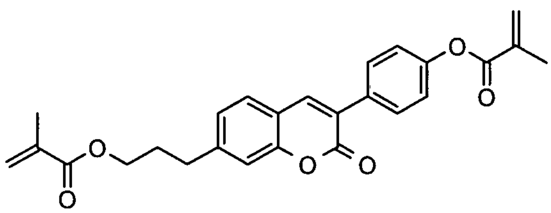

RM-55

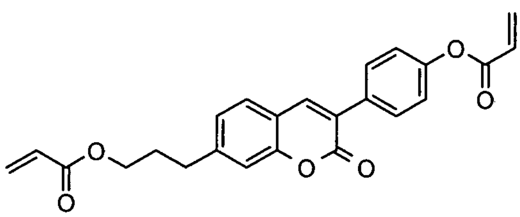

RM-56

(continued)

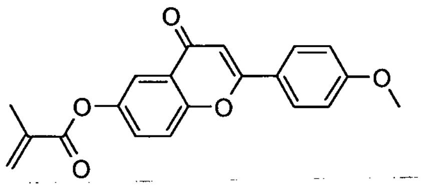

RM-57

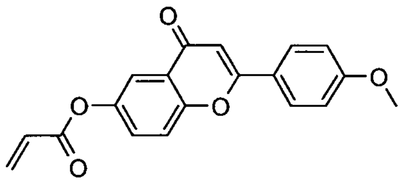

RM-58

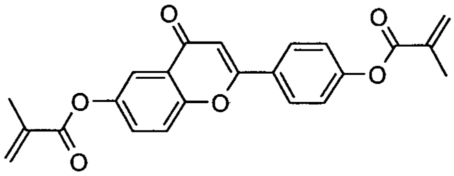

RM-59

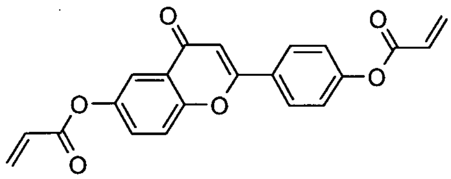

RM-60

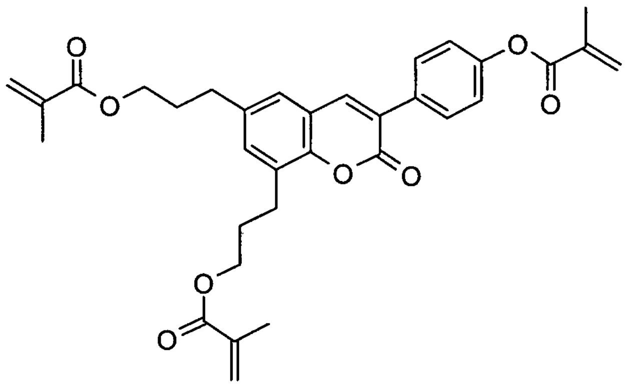

RM-61

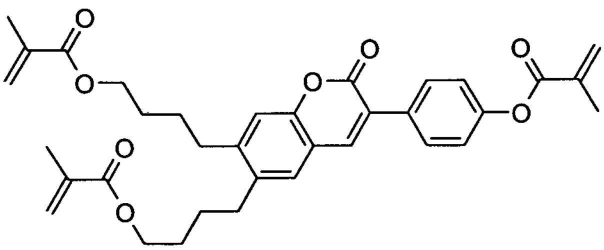

RM-62

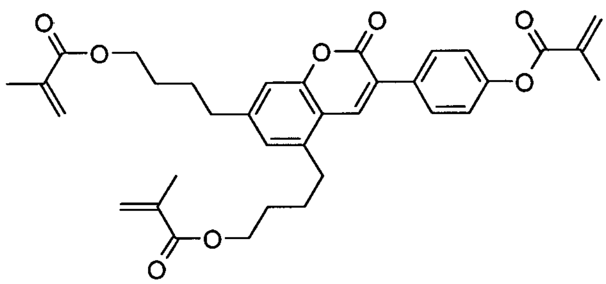

RM-63

(continued)

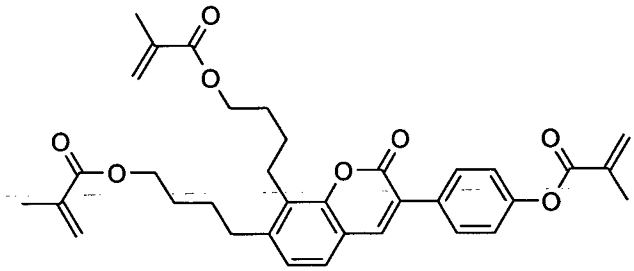

RM-64

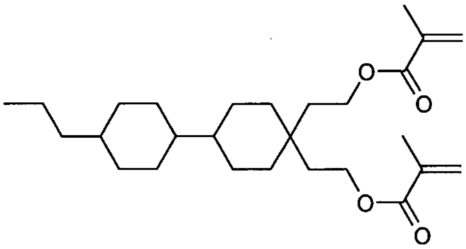

RM-65

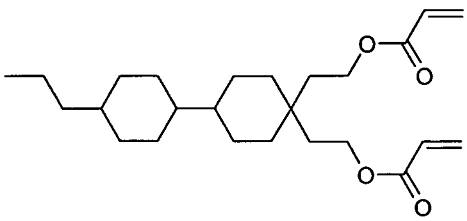

RM-66

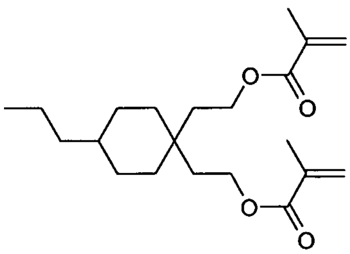

RM-67

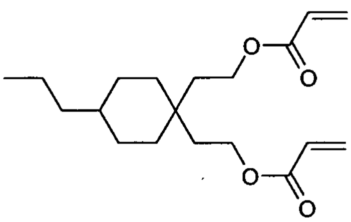

RM-68

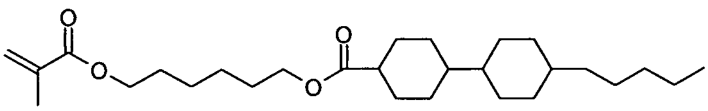

RM-69

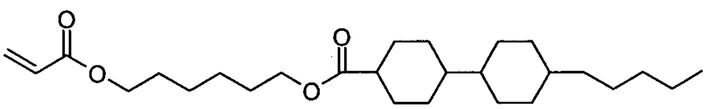

RM-70

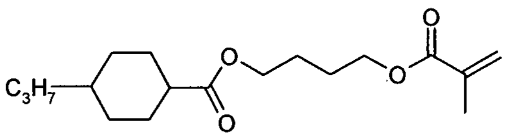

RM-71

(continued)

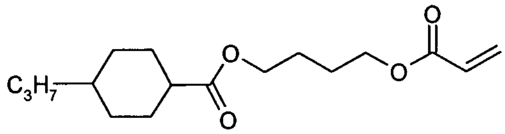

RM-72

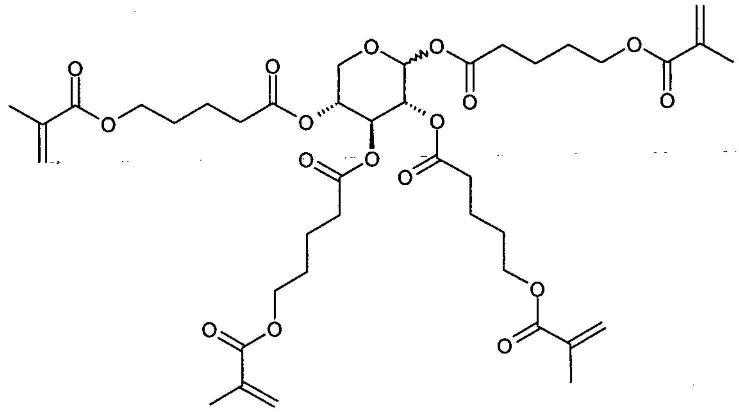

RM-73

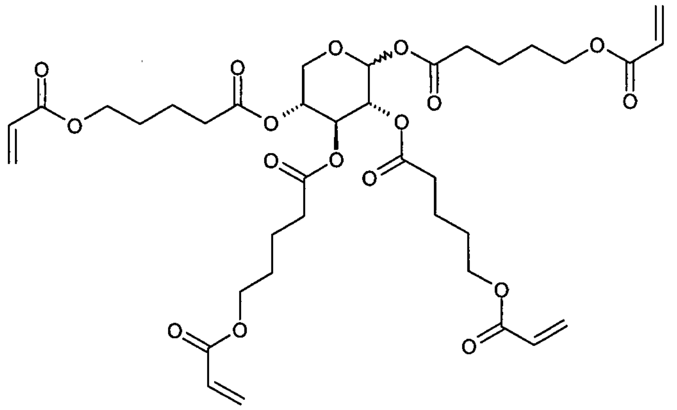

RM-74

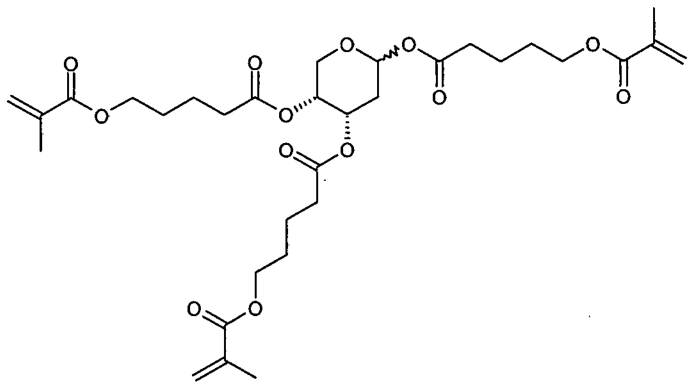

RM-75

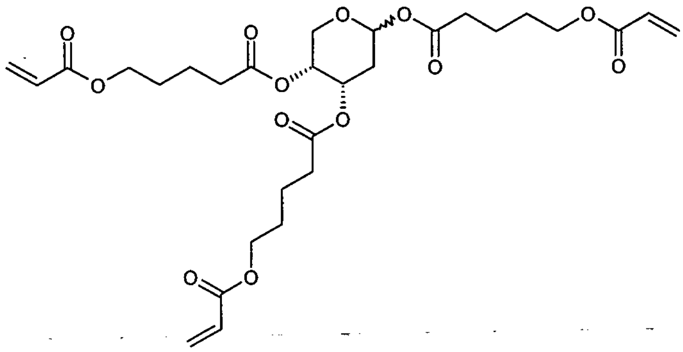

RM-76

(continued)

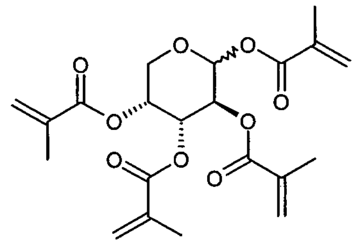

RM-77

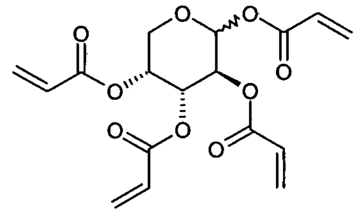

RM-78

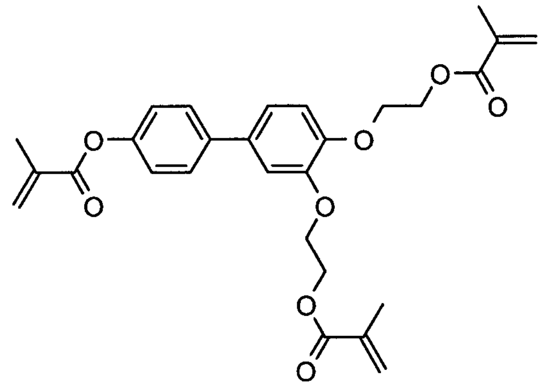

RM-79

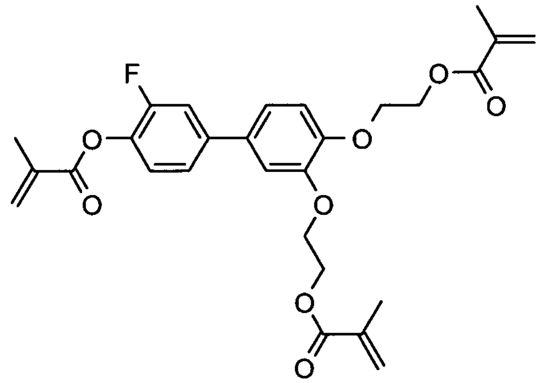

RM-80

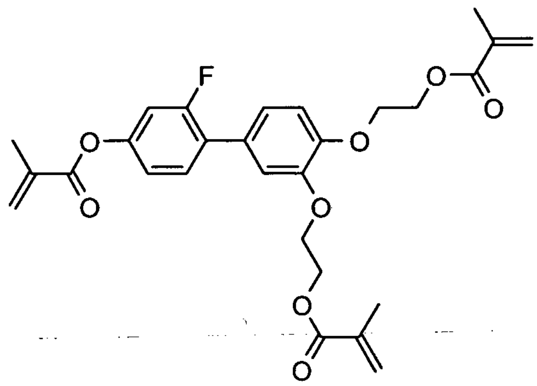

RM-81

(continued)

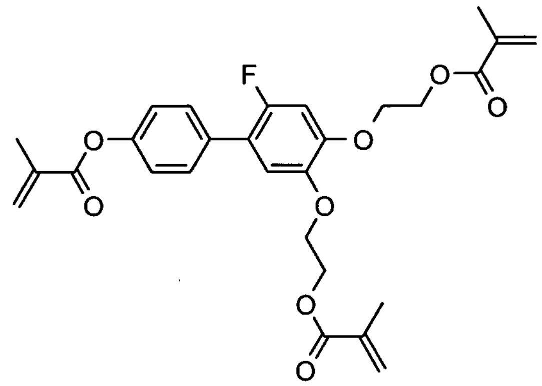

RM-82

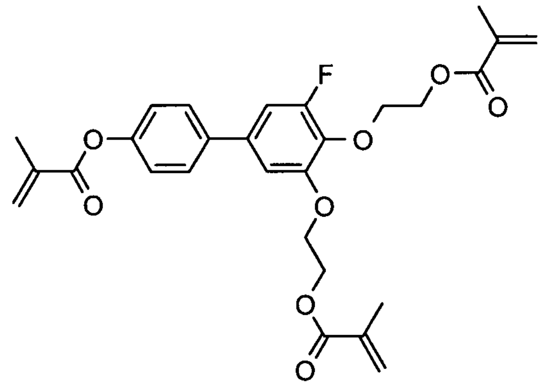

RM-83

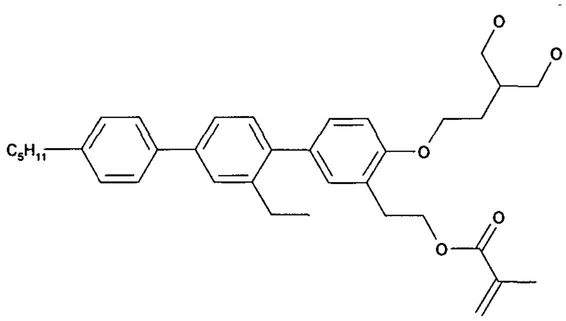

RM-84

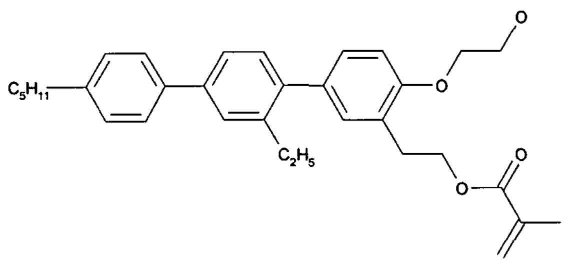

RM-85

The LC media preferably comprise one or more reactive mesogens selected from the group consisting of compounds from Table F.

**Examples**

**Mixture examples:**

The following liquid crystalline mixture (M1) is prepared.

| No. | Compound | Amount in %-w/w |
|---|---|---|
| 1 | R-5011 | 2.0 |
| 2 | N-PP-ZI-9-Z-GP-F | 13.7 |
| 3 | N-PP-ZI-7-Z-GP-F | 21.4 |
| 4 | F-PGI-ZI-9-Z-PUU-N | 12.0 |
| 5 | F-UIGI-ZI-9-Z-GP-N | 22.0 |
| 6 | F-PGI-9-GP-F | 4.0 |
| 7 | N-GIZIP-7-PZG-N | 4.7 |
| 8 | CCP-3-2 | 3.5 |
| 9 | CC-5-V | 5.8 |
| 10 | CCY-4-O2 | 3.6 |
| 11 | CPY-3-O2 | 4.4 |
| 12 | PY-3-O2 | 2.9 |

The following liquid crystalline mixture (M2) is prepared.

| No. | Compound | Amount in %-w/w |
|---|---|---|
| **1** | **M1** | **96.26** |
| 1 | RM-33 | 3.6 |
| 2 | Irgacure®651 | 0.14 |

**Example 1**

On a structured FFS substrate (40 nm ITO driving electrode, 600 nm SiNx dielectric layer, patterned 40 nm ITO stripe electrode with 3.5 μm width and 6 μm spacing - alignment electrode) a polyimide solution (AL-3046, JSR Corporation) is spin coated and then dried for 90 min in an oven at 180 °C. The approx. 50 nm thick orientation layer is rubbed with a rayon cloth parallel to the striped top ITO electrodes driving electrode (1st substrate array). A fully ITO coated substrate (common electrode) is also coated with AL-3046 (2nd substrate array), the surface of the PI is rubbed and the two substrate arrays are assembled by using a UV curable adhesive (loaded with 3 μm spacer) to align both rubbing directions in anti-parallel condition. From the assembled substrate array pair, the single cells are cutted out by scribing the glass surface with a glass scribing wheel. The resulting test cell is then filled with mixture (M1) by capillary action.

When no electric field is applied, the cholesteric liquid crystalline medium exhibits Grandjean texture due to planar anchoring conditions imposed by the anti-parallel rubbed polyimide alignment layers.

The cell is heated to the isotropic phase of the LC medium and an electrode field (45V, 20KHz square wave driving) is applied to the LC medium between alignment electrode and driving electrode whilst cooling slowly from isotropic phase to 95°C. By decreasing the frequency down to 6.5 KHz the ULH texture is induced. After the induction of the stable ULH texture, a flexo-electro-optical switching is obtained by applying an electric field between common electrode structure and driving electrode structure.

The test cell of example 1 shows an excellent dark state and a stable ULH texture.

**Example 2**

On a structured FFS substrate (40 nm ITO driving electrode, 600 nm SiNx dielectric layer, patterned 40 nm ITO stripe electrode with 3.5 μm width and 6 μm spacing - alignment electrode) a polyimide solution (AL-3046, JSR Corporation) is spin coated and then dried for 90 min in an oven at 180 °C. The approx. 50 nm thick orientation layer is rubbed with a rayon cloth perpendicular to the striped top ITO electrodes driving electrode (1st substrate array). A fully ITO coated substrate (common electrode) is also coated with AL-3046 (2nd substrate array), the surface of the PI is

rubbed and the two substrate arrays are assembled by using a UV curable adhesive (loaded with 3 μm spacer) to align both rubbing directions in anti-parallel condition. From the assembled substrate array pair, the single cells are cutted out by scribing the glass surface with a glass scribing wheel. The resulting test cell is then filled with mixture (M1) by capillary action. When no electric field is applied, the cholesteric liquid crystalline medium exhibits Grandjean texture due to planar anchoring conditions imposed by the anti-parallel rubbed polyimide alignment layers.

The cell is heated to the isotropic phase of the LC medium and an electrode field (45V, 20KHz square wave driving) is applied to the LC medium between alignment electrode and driving electrode whilst cooling slowly from isotropic phase to 95°C. By decreasing the frequency down to 6.5 KHz the ULH texture is induced. After the induction of the stable ULH texture, a flexo-electro-optical switching is obtained by applying an electric field between common electrode structure and driving electrode structure.

The test cell of example 2 shows an acceptable dark state and a stable ULH texture.

**Example 3**

On a structured FFS substrate (40 nm ITO driving electrode, 600 nm SiNx dielectric layer, patterned 40 nm ITO stripe electrode with 3.5 μm width and 6 μm spacing - alignment electrode) a polyimide solution (AL-3046, JSR Corporation) is spin coated and then dried for 90 min in an oven at 180 °C. The approx. 50 nm thick orientation layer is rubbed with a rayon cloth parallel to the striped top ITO electrodes driving electrode (1$^{st}$ substrate array). A fully ITO coated substrate (common electrode) is also coated with AL-3046 (2$^{nd}$ substrate array), the surface of the PI is rubbed and the two substrate arrays are assembled by using a UV curable adhesive (loaded with 3 μm spacer) to align both rubbing directions in anti-parallel condition. From the assembled substrate array pair, the single cells are cutted out by scribing the glass surface with a glass scribing wheel. The resulting test cell is then filled with mixture (M2) by capillary action.

The cell is heated to the isotropic phase of the LC medium (105°C) and kept at that temperature for 1 min. While applying an electrode field (12 V, 610Hz square wave driving) the LC medium is cooled down from isotropic phase to 35°C (cooling rate 20°C/min) to give a ULH Alignment. The cell is then exposed to UV light (Dymax 41014; Bluewave 200 ver. 3.0 (Mercuric UV lamp) with 320 filter) with 4mW/cm2 for 600s. The cell is then exposed to UV light (Toshiba, C type, Green UV; (fluorescent lamp) with 4mW/cm2 for 7200s.

After the induction and polymer-stabilization of the ULH texture, a flexo-electro-optical switching is obtained by applying an electric field between common electrode structure and driving electrode structure.

The test cell of example 3 shows an excellent dark state and a stable ULH texture.

**Example 4**

On a structured FFS substrate (40 nm ITO driving electrode, 600 nm SiNx dielectric layer, patterned 40 nm ITO stripe electrode with 3.5 μm width and 6 μm spacing - alignment electrode) a polyimide solution (AL-3046, JSR Corporation) is spin coated and then dried for 90 min in an oven at 180 °C. The approx. 50 nm thick orientation layer is rubbed with a rayon cloth perpendicular to the striped top ITO electrodes driving electrode (1$^{st}$ substrate array). A fully ITO coated substrate (common electrode) is also coated with AL-3046 (2$^{nd}$ substrate array), the surface of the PI is rubbed and the two substrate arrays are assembled by using a UV curable adhesive (loaded with 3 μm spacer) to align both rubbing directions in anti-parallel condition. From the assembled substrate array pair, the single cells are cutted out by scribing the glass surface with a glass scribing wheel. The resulting test cell is then filled with mixture (M2) by capillary action.

The cell is heated to the isotropic phase of the LC medium (105°C) and kept at that temperature for 1 min. While applying an electrode field (12 V, 610Hz square wave driving) the LC medium is cooled down from isotropic phase to 35°C (cooling rate 20°C/min) to give a ULH Alignment. The cell is then exposed to UV light (Dymax 41014; Bluewave 200 ver. 3.0 (Mercuric UV lamp) with 320 filter) with 4mW/cm2 for 600s. The cell is then exposed to UV light (Toshiba, C type, Green UV; (fluorescent lamp) with 4mW/cm2 for 7200s.

After the induction and polymer-stabilization of the ULH texture, a flexo-electro-optical switching is obtained by applying an electric field between common electrode structure and driving electrode structure.

The test cell of example 2 shows an acceptable dark state and a stable ULH texture.

## Claims

1. Light modulation element utilizing the ULH mode, comprising a cholesteric liquid crystalline medium sandwiched between two substrates (1), that are kept at a defined separation from one another by spacers,
   wherein the substrates are provided with a common electrode structure (2) provided as an electrode layer on the

entire substrate surface and a driving electrode structure (3), respectively, wherein the substrate with the driving electrode structure is additionally provided with an alignment electrode structure (4), which is separated from the driving electrode structure on the same substrate by a dielectric layer (5), whereby the resulting structured substrate, comprising the substrate itself, the driving electrode structure, the dielectric layer and the alignment electrode structure forms a FFS-type structured substrate array, wherein the light modulation element comprises at least one alignment layer (6) directly adjacent to the liquid crystalline medium.

**2.** Light modulation element according to claim 1, wherein the alignment electrode structure comprises periodic substantially parallel stripe electrodes having a gap between each electrode in the range from 500 nm to 10 μm, and a width of each stripe electrode is in a range from 500 nm to 10 μm, and wherein the height of each stripe electrode is in a range from 10 nm to 10 μm.

**3.** Light modulation element according to claim 1 or 2, wherein the at least one alignment layer is provided on the alignment electrode structure.

**4.** Light modulation element according to one or more of claims 1 to 3, wherein the at least one alignment layer is provided on the common electrode structure.

**5.** Light modulation element according to one or more of claims 1 to 4, wherein at least one alignment layer is rubbed.

**6.** Light modulation element according to one or more of claims 1 to 5, wherein the rubbing direction of the alignment layer, which is provided on the alignment electrode structure, is in the range of +/-45° with respect to the longitudinal axis of the stripes of the alignment electrode structure and the rubbing direction of the opposing alignment layer, which is provided on the common electrode structure is substantially antiparallel thereto.

**7.** Light modulation element according to one or more of claims 1 to 6, wherein the substrates are arranged with a separation in the range from approximately 1 μm to approximately 50 μm from one another.

**8.** Light modulation according to one or more of claims 1 to 7, comprising two or more polarisers, at least one of which is arranged on one side of the layer of the liquid-crystalline medium and at least one of which is arranged on the opposite side of the layer of the liquid-crystalline medium.

**9.** Light modulation according to one or more of claims 1 to 8, wherein the cholesteric liquid-crystalline medium comprises at least one bimesogenic compound and at least one chiral compound.

**10.** Light modulation according to one or more of claims 1 to 9, wherein the cholesteric liquid-crystalline medium comprises at least one bimesogenic compound which is selected from the group of compounds of formulae A-I to A-III,

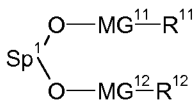

A-I

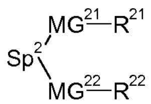

A-II

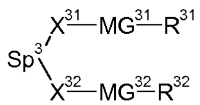

A-III

wherein

$R^{11}$ and $R^{12}$, $R^{21}$ and $R^{22}$, and $R^{31}$ and $R^{32}$ are each independently H, F, Cl, CN, NCS or a straight-chain or branched alkyl group with 1 to 25 C atoms which may be unsubstituted, mono- or polysubstituted by halogen

or CN, it being also possible for one or more non-adjacent $CH_2$ groups to be replaced, in each occurrence independently from one another, by -O-, -S-, -NH-, -N($CH_3$)-, -CO-, -COO-,-OCO-, -O-CO-O-, -S-CO-, -CO-S-, -CH=CH-,-CH=CF-, -CF=CF- or -C≡C- in such a manner that oxygen atoms are not linked directly to one another, $MG^{11}$ and $MG^{12}$, $MG^{21}$ and $MG^{22}$, and $MG^{31}$ and $MG^{32}$ are each independently a mesogenic group,
$Sp^1$, $Sp^2$ and $Sp^3$ are each independently a spacer group comprising 5 to 40 C atoms, wherein one or more non-adjacent $CH_2$ groups, with the exception of the $CH_2$ groups of $Sp^1$ linked to O-$MG^{11}$ and/or O-$MG^{12}$, of $Sp^2$ linked to $MG^{21}$ and/or $MG^{22}$ and of $Sp^3$ linked to $X^{31}$ and $X^{32}$, may also be replaced by -O-, -S-, -NH-, -N($CH_3$)-, -CO-, -O-CO-, -S-CO-, -O-COO-, -CO-S-, -CO-O-, -CH(halogen)-, -CH(CN)-,-CH=CH- or -C≡C-, however in such a way that no two O-atoms are adjacent to one another, no two -CH=CH- groups are adjacent to each other, and no two groups selected from -O-CO-, -S-CO-, -O-COO-,-CO-S-, -CO-O- and -CH=CH- are adjacent to each other, and
$X^{31}$ and $X^{32}$ are independently from one another a linking group selected from -CO-O-, -O-CO-, -CH=CH-, -C≡C- or -S-, and, alternatively, one of them may also be either -O- or a single bond, and, again alternatively, one of them may be -O- and the other one a single bond.

**11.** Light modulation according to one or more of claims 1 to 10, wherein the cholesteric liquid-crystalline medium comprises one or more chiral compounds, which are selected from the group of compounds of formulae C-I to C-III,

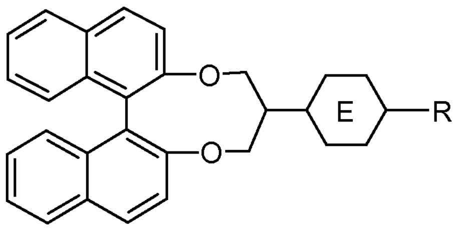

C-I

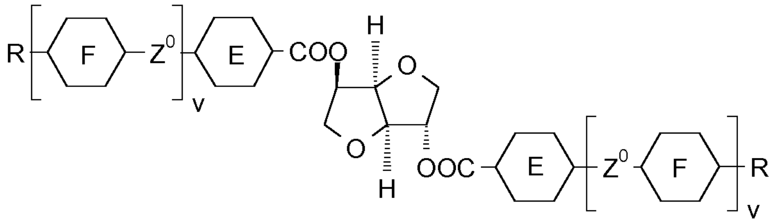

C-II

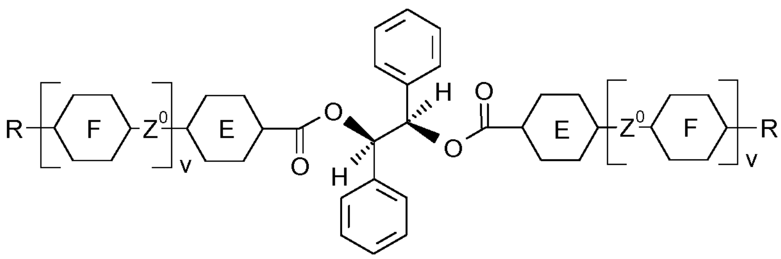

C-III

including the respective (S,S) enantiomers, and
wherein

E and F are each independently 1,4-phenylene or trans-1,4-cyclohexylene,
v is 0 or 1,
$Z^0$ is -COO-, -OCO-, -$CH_2CH_2$- or a single bond, and
R is alkyl, alkoxy or alkanoyl with 1 to 12 C atoms.

**12.** Light modulation element according to one or more of claims 1 to 11, wherein the cholesteric liquid-crystalline medium comprises one or more polymerisable liquid-crystalline compounds which are selected from the group of compounds of formula D,

P-Sp-MG-$R^0$ D

wherein

P is a polymerisable group,
Sp is a spacer group or a single bond,
MG is a rod-shaped mesogenic group, which is selected of formula M,
M is $-(A^{D21}-Z^{D21})_k-A^{D22}-(Z^{D22}-A^{D23})_l-$,
$A^{D21}$ to $A^{D23}$ are in each occurrence independently of one another an aryl-, heteroaryl-, heterocyclic- or alicyclic group optionally being substituted by one or more identical or different groups L,
$Z^{D21}$ and $Z^{D22}$ are in each occurrence independently from each other, -O-, -S-, -CO-, -COO-, -OCO-, -S-CO-, -CO-S-, -O-COO-, -CO-$NR^{01}$-, -$NR^{01}$-CO-, -$NR^{01}$-CO-$NR^{02}$, -$NR^{01}$-CO-O-, -O-CO-$NR^{01}$-, -$OCH_2$-, -$CH_2O$-, -$SCH_2$-, -$CH_2S$-, -$CF_2O$-, -$OCF_2$-, -$CF_2S$-, -$SCF_2$-, -$CH_2CH_2$-, -$(CH_2)_4$-, -$CF_2CH_2$-, -$CH_2CF_2$-, -$CF_2CF_2$-, -CH=N-, -N=CH-, -N=N-, -CH=$CR^{01}$-, -$CY^{01}$=$CY^{02}$-, -C≡C-, -CH=CH-COO-, -OCO-CH=CH-, or a single bond,
L is in each occurrence independently of each other For Cl,
$R^0$ is H, alkyl, alkoxy, thioalkyl, alkylcarbonyl, alkoxycarbonyl, alkylcarbonyloxy or alkoxycarbonyloxy with 1 to 20 C atoms more, or is $Y^{D0}$ or P-Sp-,
$Y^0$ is F, Cl, CN, $NO_2$, $OCH_3$, OCN, SCN, optionally fluorinated alkylcarbonyl, alkoxycarbonyl, alkylcarbonyloxy or alkoxycarbonyloxy with 1 to 4 C atoms, or mono- oligo- or polyfluorinated alkyl or alkoxy with 1 to 4 C atoms,
$Y^{01}$ and $Y^{02}$ each, independently of one another, denote H, F, Cl or CN,
$R^{01}$ and $R^{02}$ have each and independently the meaning as defined above $R^0$, and
k and l are each and independently 0, 1, 2, 3 or 4.

**13.** Method of producing a light modulation element according to one or more of claims 1 to 12 comprising at least the following steps:

- cutting and cleaning of the substrates,
- providing the driving electrode structure and the common electrode structure on each of the substrates, respectively, whereby the common electrode structure is provided as an electrode layer on the entire substrate surface
- coating of a dielectric layer on the driving electrode structure,
- providing the alignment electrode structure on the dielectric layer, whereby the resulting structured substrate, comprising the substrate itself, the driving electrode structure, the dielectric layer and the alignment electrode structure forms a FFS-type structured substrate array,
- providing an alignment layer on the alignment electrode structure and/or common electrode structure,
- assembling the cell using an adhesive which is UV curable or heat curable with spacers,
- filling the cell with the cholesteric liquid-crystalline medium,
- obtaining the ULH texture, by applying an electric field to the LC medium between the driving electrode structure and the alignment electrode structure, which are separated by the dielectric layer, whilst cooling slowly from the isotropic phase into the cholesteric phase.

**14.** Use of the light modulation element according to one or more of claims 1 to 12 in optical or electro-optical devices.

**15.** Optical or electro-optical device comprising light modulation element according to one or more of claims 1 to 12.

**16.** Optical or electro-optical device according to claim 15, **characterized in that** it is an electro-optical display, liquid crystal display (LCDs), non-linear optic (NLO) device, or optical information storage device.

**17.** Optical or electro-optical device according to claim 15 or 16, comprising at least one electric circuit, which is capable of driving the driving electrode in combination with the common electrode of the light modulation element in order to drive the light modulation element according to one or more of claims 1 to 12.

**18.** Optical or electro-optical device according to one or more of claims 15 to 17, comprising an additional electric circuit, which is capable of driving the alignment electrode in combination with the driving electrode of the light modulation element according to one or more of claims 1 to 12, in order to align the cholesteric liquid crystalline medium in the ULH texture.

**19.** Optical or electro-optical device according to one or more of claims 15 to 18, comprising at least one electric circuit,

which is capable of driving the light modulation element with the alignment electrode in combination with the common electrode and which is additionally capable of driving the light modulation element with the driving electrode in combination with the common electrode.

## Patentansprüche

1. Lichtmodulationselement, das den ULH-Modus nutzt, enthaltend ein cholesterisches flüssigkristallines Medium, das zwischen zwei Substraten (1) angeordnet ist, die durch Abstandhalter in einem festgelegten Abstand voneinander gehalten werden,
bei dem die Substrate mit einer gemeinsamen Elektrodenstruktur (2), die als Elektrodenschicht auf der gesamten Substratoberfläche vorliegt, bzw. einer Ansteuerelektrodenstruktur (3) versehen sind, bei dem das Substrat mit der Ansteuerelektrodenstruktur zusätzlich mit einer Orientierungselektrodenstruktur (4) versehen ist, die von der Ansteuerelektrodenstruktur auf demselben Substrat durch eine dielektrische Schicht (5) getrennt ist,
wobei das sich ergebende strukturierte Substrat, das das Substrat selber, die Ansteuerelektrodenstruktur, die dielektrische Schicht und die Orientierungselektrodenstruktur umfasst, eine strukturierte Substratanordnung des FFS-Typs bildet,
bei dem das Lichtmodulationselement mindestens eine Orientierungsschicht (6) enthält, die dem flüssigkristallinen Medium direkt benachbart ist.

2. Lichtmodulationselement nach Anspruch 1, bei dem die Orientierungselektrodenstruktur regelmäßige, im Wesentlichen parallele Streifenelektroden mit einem Zwischenraum zwischen den Elektroden jeweils im Bereich von 500 nm bis 10 $\mu$m umfasst und eine Breite der Streifenelektroden jeweils im Bereich von 500 nm bis 10 $\mu$m liegt und bei dem die Höhe der Streifenelektroden jeweils im Bereich von 10 nm bis 10 $\mu$m liegt.

3. Lichtmodulationselement nach Anspruch 1 oder 2, bei dem die mindestens eine Orientierungsschicht auf der Orientierungselektrodenstruktur vorgesehen ist.

4. Lichtmodulationselement nach einem oder mehreren der Ansprüche 1 bis 3, bei dem die mindestens eine Orientierungsschicht auf der gemeinsamen Elektrodenstruktur vorgesehen ist.

5. Lichtmodulationselement nach einem oder mehreren der Ansprüche 1 bis 4, bei dem mindestens eine Orientierungsschicht gerieben ist.

6. Lichtmodulationselement nach einem oder mehreren der Ansprüche 1 bis 5, bei dem die Reibrichtung der auf der Orientierungselektrodenstruktur vorgesehenen Orientierungsschicht im Bereich von +/- 45° bezüglich der Längsachse der Streifen der Orientierungselektrodenstruktur liegt und die Reibrichtung der auf der gemeinsamen Elektrodenstruktur vorgesehenen gegenüberliegenden Orientierungsschicht im Wesentlichen antiparallel dazu ist.

7. Lichtmodulationselement nach einem oder mehreren der Ansprüche 1 bis 6, bei dem die Substrate mit einem Abstand im Bereich von ungefähr 1 $\mu$m bis ungefähr 50 $\mu$m voneinander angeordnet sind.

8. Lichtmodulationselement nach einem oder mehreren der Ansprüche 1 bis 7, enthaltend zwei oder mehr Polarisatoren, von denen mindestens einer auf einer Seite der Schicht des flüssigkristallinen Mediums angeordnet ist und von denen mindestens einer auf der entgegengesetzten Seite der Schicht des flüssigkristallinen Mediums angeordnet ist.

9. Lichtmodulationselement nach einem oder mehreren der Ansprüche 1 bis 8, bei dem das cholesterische flüssigkristalline Medium mindestens eine bimesogene Verbindung und mindestens eine chirale Verbindung enthält.

10. Lichtmodulationselement nach einem oder mehreren der Ansprüche 1 bis 9, bei dem das cholesterische flüssigkristalline Medium mindestens eine bimesogene Verbindung enthält, die ausgewählt ist aus der Gruppe der Verbindungen der Formeln A-I bis A-III

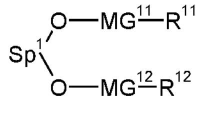

A-I

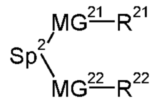

A-II

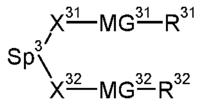

A-III

bei denen

$R^{11}$ und $R^{12}$, $R^{21}$ und $R^{22}$, und $R^{31}$ und $R^{32}$ jeweils unabhängig H, F, Cl, CN, NCS oder eine geradkettige oder verzweigte Alkylgruppe mit 1 bis 25 C-Atomen sind, die unsubstituiert oder ein- oder mehrfach durch Halogen oder CN substituiert sein kann, wobei auch eine oder mehrere nicht benachbarte $CH_2$-Gruppen bei jedem Auftreten unabhängig voneinander so durch -O-, -S-, -NH-, $-N(CH_3)-$, -CO-, -COO-, -OCO-, -O-CO-O-, -S-CO-, -CO-S-, -CH=CH-, -CH=CF-, -CF=CF- oder -C≡C- ersetzt sein können, dass Sauerstoffatome nicht direkt miteinander verknüpft sind,

$MG^{11}$ und $MG^{12}$, $MG^{21}$ und $MG^{22}$, und $MG^{31}$ und $MG^{32}$ jeweils unabhängig eine mesogene Gruppe sind,

$Sp^1$, $Sp^2$ und $Sp^3$ jeweils unabhängig eine Spacergruppe mit 5 bis 40 C-Atomen sind, bei der eine oder mehrere nicht benachbarte $CH_2$-Gruppen, mit Ausnahme der $CH_2$-Gruppen von mit $O-MG^{11}$ und/oder $O-MG^{12}$ verknüpftem $Sp^1$, von mit $MG^{21}$ und/oder $MG^{22}$ verknüpftem $Sp^2$ und von mit $X^{31}$ und $X^{32}$ verknüpftem $Sp^3$, auch durch -O-, -S-, -NH-, $-N(CH_3)-$, -CO-, -O-CO-, -S-CO-, -O-COO-, -CO-S-, -CO-O-, -CH(Halogen)-, -CH(CN)-, -CH=CH- oder -C≡C- ersetzt sein können, jedoch so, dass keine zwei O-Atome einander benachbart sind, keine zwei Gruppen -CH=CH- einander benachbart sind und keine zwei aus -O-CO-, -S-CO-, -O-COO-, -CO-S-, -CO-O- und -CH=CH- ausgewählten Gruppen einander benachbart sind, und

$X^{31}$ und $X^{32}$ unabhängig voneinander eine aus -CO-O-, -O-CO-, -CH=CH-, -C≡C- oder -S- ausgewählte Verknüpfungsgruppe sind und einer von ihnen alternativ auch entweder -O- oder eine Einfachbindung sein kann und wiederum alternativ einer von ihnen -O- und der andere eine Einfachbindung sein kann.

**11.** Lichtmodulationselement nach einem oder mehreren der Ansprüche 1 bis 10, bei dem das cholesterische flüssigkristalline Medium eine oder mehrere chirale Verbindungen enthält, die ausgewählt sind aus der Gruppe der Verbindungen der Formeln C-I bis C-III

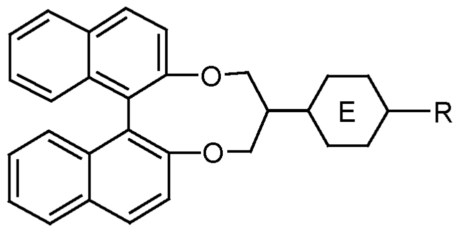

C-I

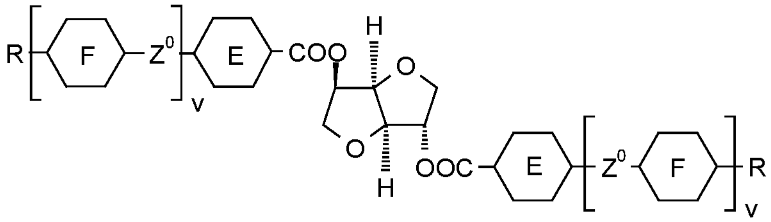

C-II

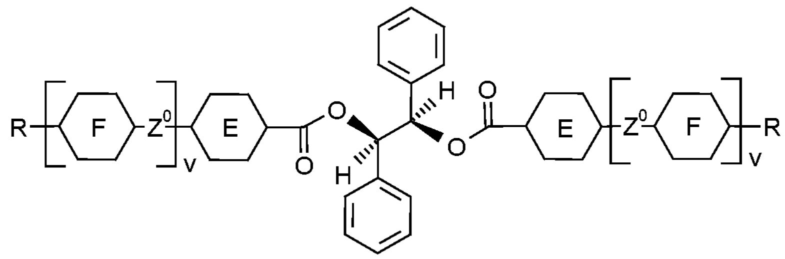

C-III

einschließlich der jeweiligen (S,S)-Enantiomere, und
bei denen

E und F jeweils unabhängig 1,4-Phenylen oder trans-1,4-Cyclohexylen sind,
v 0 oder 1 ist,
$Z^0$ -COO-, -OCO-, $-CH_2CH_2-$ oder eine Einfachbindung ist und
R Alkyl, Alkoxy oder Alkanoyl mit 1 bis 12 C-Atomen ist.

**12.** Lichtmodulationselement nach einem oder mehreren der Ansprüche 1 bis 13, bei dem das cholesterische flüssigkristalline Medium eine oder mehrere polymerisierbare flüssigkristalline Verbindungen enthält, die ausgewählt sind aus der Gruppe der Verbindungen der Formel D

$$P\text{-}Sp\text{-}MG\text{-}R^0 \qquad D$$

bei der

P eine polymerisierbare Gruppe ist,
Sp eine Spacergruppe oder eine Einfachbindung ist,
MG eine stäbchenförmige mesogene Gruppe ist, die aus der Formel M ausgewählt ist,
M $-(A^{D21}-Z^{D21})_k-A^{D22}-(Z^{D22}-A^{D23})_l-$ ist,
$A^{D21}$ bis $A^{D23}$ bei jedem Auftreten unabhängig voneinander eine Aryl-, Heteroaryl-, heterocyclische oder alicyclische Gruppe sind, die gegebenenfalls durch eine oder mehrere gleiche oder verschiedene Gruppen L substituiert ist,
$Z^{D21}$ und $Z^{D22}$ bei jedem Auftreten unabhängig voneinander -O-, -S-, -CO-, -COO-, -OCO-, -S-CO-, -CO-S-, -O-COO-, $-CO-NR^{01}-$, $-NR^{01}-CO-$, $-NR^{01}-CO-NR^{02}$, $-NR^{01}-CO-O-$, $-O-CO-NR^{01}-$, $-OCH_2-$, $-CH_2O-$, $-SCH_2-$, $-CH_2S-$, $-CF_2O-$, $-OCF_2-$, $-CF_2S-$, $-SCF_2-$, $-CH_2CH_2-$, $-(CH_2)_4-$, $-CF_2CH_2-$, $-CH_2CF_2-$, $-CF_2CF_2-$, -CH=N-, -N=CH-, -N=N-, $-CH=CR^{01}-$, $-CY^{01}=CY^{02}-$, -C≡C-, -CH=CH-COO-, -OCO-CH=CH- oder eine Einfachbindung sind,
L bei jedem Auftreten unabhängig voneinander F oder Cl ist,
$R^0$ H, Alkyl, Alkoxy, Thioalkyl, Alkylcarbonyl, Alkoxycarbonyl, Alkylcarbonyloxy oder Alkoxycarbonyloxy mit 1 bis 20 C-Atomen ist oder Y° oder P-Sp- ist,
$Y^0$ F, Cl, CN, $NO_2$, $OCH_3$, OCN, SCN, gegebenenfalls fluoriertes Alkylcarbonyl, Alkoxycarbonyl, Alkylcarbonyloxy oder Alkoxycarbonyloxy mit 1 bis 4 C-Atomen oder mono-, oligo- oder polyfluoriertes Alkyl oder Alkoxy mit 1 bis 4 C-Atomen ist,
$Y^{01}$ und $Y^{02}$ jeweils unabhängig voneinander H, F, Cl oder CN bedeuten,
$R^{01}$ und $R^{02}$ jeweils und unabhängig die wie vorstehend für $R^0$ definierte Bedeutung besitzen und
k und l jeweils und unabhängig 0, 1, 2, 3 oder 4 sind.

**13.** Verfahren zur Herstellung eines Lichtmodulationselements nach einem oder mehreren der Ansprüche 1 bis 12, umfassend zumindest die folgenden Schritte:

- Schneiden und Reinigen der Substrate,
- Bereitstellen der Ansteuerelektrodenstruktur und der gemeinsamen Elektrodenstruktur auf den jeweiligen Substraten, wobei die gemeinsame Elektrodenstruktur als Elektrodenschicht auf der gesamten Substratoberfläche bereitgestellt wird,
- Auftragen einer dielektrischen Schicht auf die Ansteuerelektrodenstruktur,
- Bereitstellen der Orientierungselektrodenstruktur auf der dielektrischen Schicht, wobei das sich ergebende strukturierte Substrat, das das Substrat selber, die Ansteuerelektrodenstruktur, die dielektrische Schicht und

die Orientierungselektrodenstruktur umfasst, eine strukturierte Substratanordnung des FFS-Typs bildet,
- Bereitstellen einer Orientierungsschicht auf der Orientierungselektrodenstruktur und/oder gemeinsamen Elektrodenstruktur,
- Zusammensetzen der Zelle mit einem Klebstoff, der UV- oder wärmehärtbar ist, mit Abstandhaltern,
- Füllen der Zelle mit dem cholesterischen flüssigkristallinen Medium,
- Erhalten der ULH-Textur durch Anlegen eines elektrischen Feldes an das FK-Medium zwischen der Ansteuerelektrodenstruktur und der Orientierungselektrodenstruktur, die durch die dielektrische Shicht getrennt sind, während man langsam aus der isotropen Phase in die cholesterische Phase abkühlt.

**14.** Verwendung des Lichtmodulationselements nach einem oder mehreren der Ansprüche 1 bis 12 in optischen oder elektrooptischen Vorrichtungen.

**15.** Optische oder elektrooptische Vorrichtung enthaltend ein Lichtmodulationselement nach einem oder mehreren der Ansprüche 1 bis 12.

**16.** Optische oder elektrooptische Vorrichtung nach Anspruch 15, **dadurch gekennzeichnet, dass** es sich um eine elektrooptische Anzeige, Flüssigkristallanzeige (LCD), Vorrichtung der nichtlinearen Optik (NLO) oder optische Datenspeichervorrichtung handelt.

**17.** Optische oder elektrooptische Vorrichtung nach Anspruch 15 oder 16, die mindestens eine elektrische Schaltung enthält, die in der Lage ist, die Ansteuerelektrode in Kombination mit der gemeinsamen Elektrode des Lichtmodulationselements anzusteuern, um das Lichtmodulationselement nach einem oder mehreren der Ansprüche 1 bis 12 anzusteuern.

**18.** Optische oder elektrooptische Vorrichtung nach einem oder mehreren der Ansprüche 15 bis 17, die eine zusätzliche elektrische Schaltung enthält, die in der Lage ist, die Orientierungselektrode in Kombination mit der Ansteuerelektrode des Lichtmodulationselements nach einem oder mehreren der Ansprüche 1 bis 12 anzusteuern, um das cholesterische Flüssigkristallmedium in der ULH-Textur zu orientieren.

**19.** Optische oder elektrooptische Vorrichtung nach einem oder mehreren der Ansprüche 15 bis 18, die mindestens eine elektrische Schaltung enthält, die in der Lage ist, das Lichtmodulationselement mit der Orientierungselektrode in Kombination mit der gemeinsamen Elektrode anzusteuern, und die zusätzlich in der Lage ist, das Lichtmodulationselement mit der Ansteuerelektrode in Kombination mit der gemeinsamen Elektrode anzusteuern.

## Revendications

**1.** Élément de modulation de la lumière utilisant le mode ULH, comprenant un milieu cristallin liquide cholestérique qui est pris en sandwich entre deux substrats (1), lesquels substrats sont maintenus selon une séparation définie l'un par rapport à l'autre au moyen d'espaceurs,
dans lequel les substrats sont respectivement munis d'une structure d'électrode(s) commune(s) (2) qui est appliquée en tant que couche d'électrode(s) sur la totalité de la surface de substrat et d'une structure d'électrode(s) de pilotage (3),
dans lequel le substrat qui est muni de la structure d'électrode(s) de pilotage est de façon additionnelle muni d'une structure d'électrode(s) d'alignement (4), laquelle est séparée de la structure d'électrode(s) de pilotage sur le même substrat par une couche diélectrique (5),
d'où il résulte que le substrat structuré résultant, qui comprend le substrat lui-même, la structure d'électrode(s) de pilotage, la couche diélectrique et la structure d'électrode(s) d'alignement, forme un réseau de substrat structuré du type FFS,
dans lequel l'élément de modulation de la lumière comprend au moins une couche d'alignement (6) qui est directement adjacente au milieu cristallin liquide.

**2.** Élément de modulation de la lumière selon la revendication 1, dans lequel la structure d'électrode(s) d'alignement comprend des électrodes en bande sensiblement parallèles périodiques selon un espacement entre chaque électrode qui s'inscrit à l'intérieur de la plage qui va de 500 nm à 10 $\mu$m, et une largeur de chaque électrode en bande s'inscrit à l'intérieur de la plage qui va de 500 nm à 10 $\mu$m, et dans lequel la hauteur de chaque électrode en bande s'inscrit à l'intérieur de la plage qui va de 10 nm à 10 $\mu$m.

3. Élément de modulation de la lumière selon la revendication 1 ou 2, dans lequel l'au moins une couche d'alignement est appliquée sur la structure d'électrode(s) d'alignement.

4. Élément de modulation de la lumière selon une ou plusieurs des revendications 1 à 3, dans lequel l'au moins une couche d'alignement est appliquée sur la structure d'électrode(s) commune(s).

5. Élément de modulation de la lumière selon une ou plusieurs des revendications 1 à 4, dans lequel au moins une couche d'alignement est frottée.

6. Élément de modulation de la lumière selon une ou plusieurs des revendications 1 à 5, dans lequel la direction de frottement de la couche d'alignement, laquelle couche est appliquée sur la structure d'électrode(s) d'alignement, s'inscrit à l'intérieur de la plage qui est définie par +/- 45° par rapport à l'axe longitudinal des bandes de la structure d'électrode(s) d'alignement et la direction de frottement de la couche d'alignement opposée, laquelle couche est appliquée sur la structure d'électrode(s) commune(s), est sensiblement en antiparallèle par rapport à la direction mentionnée en premier.

7. Élément de modulation de la lumière selon une ou plusieurs des revendications 1 à 6, dans lequel les substrats sont agencés selon une séparation l'un par rapport à l'autre qui s'inscrit à l'intérieur de la plage qui va d'approximativement 1 $\mu$m à approximativement 50 $\mu$m.

8. Élément de modulation de la lumière selon une ou plusieurs des revendications 1 à 7, comprenant deux polariseurs ou plus dont au moins l'un est agencé sur un côté de la couche du milieu cristallin liquide et dont au moins l'un est agencé sur le côté opposé de la couche du milieu cristallin liquide.

9. Élément de modulation de la lumière selon une ou plusieurs des revendications 1 à 8, dans lequel le milieu cristallin liquide cholestérique comprend au moins un composé bimésogène et au moins un composé chiral.

10. Élément de modulation de la lumière selon une ou plusieurs des revendications 1 à 9, dans lequel le milieu cristallin liquide cholestérique comprend au moins un composé bimésogène qui est sélectionné parmi le groupe de composés des formules A-I à A-III,

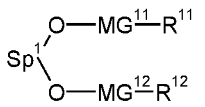

A-I

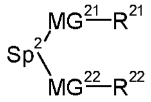

A-II

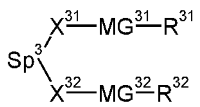

A-III

dans lesquelles

$R^{11}$ et $R^{12}$, $R^{21}$ et $R^{22}$, et $R^{31}$ et $R^{32}$ sont chacun, de manière indépendante, H, F, Cl, CN, NCS ou un groupe alkyle en chaîne droite ou ramifié qui comporte de 1 à 25 atome(s) de C, lequel peut être non substitué, mono- ou polysubstitué par halogène ou par CN, étant entendu qu'il est également possible qu'un ou plusieurs groupe(s) $CH_2$ non adjacents soit/soient remplacé(s), pour chaque occurrence de manière indépendante des autres occurrences, par -O-, -S-, -NH-, -N($CH_3$)-, -CO-, -COO-, -OCO-, -O-CO-O-, -S-CO-, -CO-S-, -CH=CH-, -CH=CF-, -CF=CF- ou -C≡C- de telle sorte que des atomes d'oxygène ne soient pas liés directement les uns aux autres,
$MG^{11}$ et $MG^{12}$, $MG^{21}$ et $MG^{22}$, et $MG^{31}$ et $MG^{32}$ sont, chacun de manière indépendante, un groupe mésogène,
$Sp^1$, $Sp^2$ et $Sp^3$ sont, chacun de manière indépendante, un groupe d'espaceur qui comprend de 5 à 40 atomes de C, dans lequel un ou plusieurs groupe(s) $CH_2$ non adjacents, à l'exception des groupes $CH_2$ de $Sp^1$ qui sont liés à O-$MG^{11}$ et/ou à O-$MG^{12}$, de $Sp^2$ qui sont liés à $MG^{21}$ et/ou à $MG^{22}$ et de $Sp^3$ qui sont liés à $X^{31}$ et à $X^{32}$,

peut/peuvent également être remplacé(s) par -O-, -S-, -NH-, -N($CH_3$)-, -CO-, -O-CO-, -S-CO-, -O-COO-, -CO-S-, -CO-O-, -CH(halogène)-, -CH(CN)-, -CH=CH-ou -C≡C-, cependant de telle sorte que deux atomes de O ne soient pas adjacents l'un à l'autre, que deux groupes -CH=CH- ne soient pas adjacents l'un à l'autre, et que deux groupes qui sont sélectionnés parmi -O-CO-, -S-CO-, -O-COO-, -CO-S-, -CO-O- et -CH=CH- ne soient pas adjacents l'un à l'autre, et

$X^{31}$ et $X^{32}$ sont, de manière indépendante l'un de l'autre, un groupe de liaison qui est sélectionné parmi -CO-O-, -O-CO-, -CH=CH-, -C=C- ou -S-, et, à titre d'alternative, l'un d'eux peut également être soit -O-, soit une liaison simple et à nouveau, à titre d'alternative, l'un d'eux peut être -O- et l'autre peut être une liaison simple.

**11.** Élément de modulation de la lumière selon une ou plusieurs des revendications 1 à 10, dans lequel le milieu cristallin liquide cholestérique comprend un ou plusieurs composé(s) chiral/chiraux, lequel/lesquels est/sont sélectionné(s) parmi le groupe de composés des formules C-I à C-III,

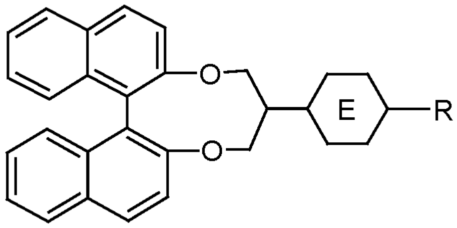

C-I

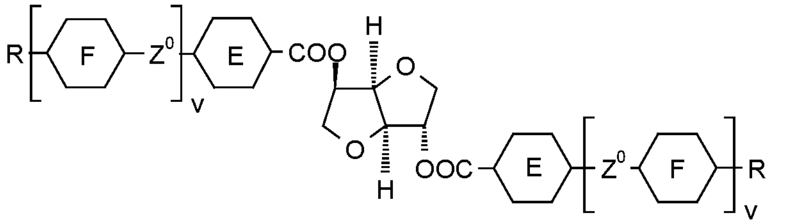

C-II

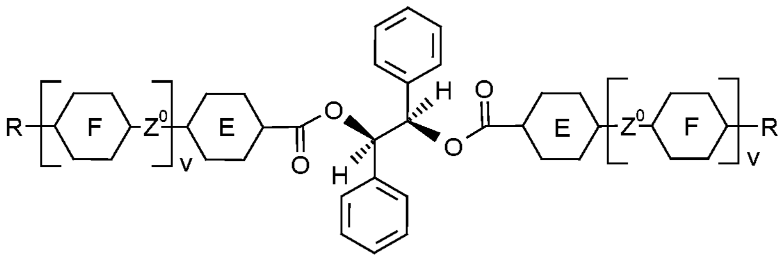

C-III

y compris les énantiomères (S,S) respectifs, et
dans lesquelles

E et F sont chacun, de manière indépendante, 1,4-phénylène ou trans-1,4-cyclohexylène,
v est 0 ou 1,
$Z^0$ est -COO-, -OCO-, -$CH_2CH_2$- ou une liaison simple, et
R est alkyle, alcoxy ou alkanoyle qui comporte de 1 à 12 atome(s) de C.

**12.** Élément de modulation de la lumière selon une ou plusieurs des revendications 1 à 11, dans lequel le milieu cristallin liquide cholestérique comprend un ou plusieurs composé(s) cristallin(s) liquide(s) polymérisable(s) qui est/sont sélectionné(s) parmi le groupe de composés de la formule D,

$$P\text{-}Sp\text{-}MG\text{-}R^0 \qquad D$$

dans laquelle

P est un groupe polymérisable,

Sp est un groupe d'espaceur ou une liaison simple,
MG est un groupe mésogène en forme de tige, lequel est sélectionné à partir de la formule M,
M est $-(A^{D21}-Z^{D21})_k-A^{D22}-(Z^{D22}-A^{D23})_l-$,
$A^{D21}$ à $A^{D23}$ sont pour chaque occurrence, de manière indépendante les uns des autres, un groupe aryle, hétéroaryle, hétérocyclique ou alicyclique qui est en option substitué par un ou plusieurs groupe(s) L identiques ou différents,
$Z^{D21}$ et $Z^{D22}$ sont pour chaque occurrence, de manière indépendante l'un de l'autre, -O-, -S-, -CO-, -COO-, -OCO-, -S-CO-, -CO-S-, -O-COO-, $-CO-NR^{01}-$, $-NR^{01}-CO-$, $-NR^{01}-CO-NR^{02}$, $-NR^{01}-CO-O-$, $-O-CO-NR^{01}-$, $-OCH_2-$, $-CH_2O-$, $-SCH_2-$, $-CH_2S-$, $-CF_2O-$, $-OCF_2-$, $-CF_2S-$, $-SCF_2-$, $-CH_2CH_2-$, $-(CH_2)_4-$, $-CF_2CH_2-$, $-CH_2CF_2-$, $-CF_2CF_2-$, -CH=N-, -N=CH-, -N=N-, $-CH=CR^{01}-$, $-CY^{01}=CY^{02}-$, -C≡C-, -CH=CH-COO-, -OCO-CH=CH-, ou une liaison simple,
L est pour chaque occurrence, de manière indépendante des autres, F ou Cl,
$R^0$ est H, alkyle, alcoxy, thioalkyle, alkylcarbonyle, al-coxycarbonyle, alkylcarbonyloxy ou alcoxycarbonyloxy qui comporte de 1 à 20 atome(s) de C, ou est $Y^0$ ou P-Sp-,
$Y^0$ est F, Cl, CN, $NO_2$, $OCH_3$, OCN, SCN, alkylcarbonyle, alcoxycarbonyle, alkylcarbonyloxy ou alcoxy-carbonyloxy en option fluoré qui comporte de 1 à 4 atome(s) de C, ou alkyle ou alcoxy mono-, oligo-ou polyfluoré qui comporte de 1 à 4 atome(s) de C,
$Y^{01}$ et $Y^{02}$ représentent chacun, de manière indépendante l'un de l'autre, H, F, Cl ou CN,
$R^{01}$ et $R^{02}$ présentent chacun et de manière indépendante la signification qui a été définie ci-avant pour $R^0$, et
k et l sont chacun et de manière indépendante 0, 1, 2, 3 ou 4.

**13.** Procédé de fabrication d'un élément de modulation de la lumière selon une ou plusieurs des revendications 1 à 12, comprenant au moins les étapes qui suivent :

- la découpe et le nettoyage des substrats,
- l'application de la structure d'électrode(s) de pilotage et de la structure d'électrode(s) commune(s) respectivement sur chacun des substrats, d'où il résulte que la structure d'électrode(s) commune(s) est constituée en tant que couche d'électrode(s) sur la totalité de la surface de substrat,
- le dépôt d'une couche diélectrique sur la structure d'électrode(s) de pilotage,
- l'application de la structure d'électrode(s) d'alignement sur la couche diélectrique, d'où il résulte que le substrat structuré résultant, qui comprend le substrat lui-même, la structure d'électrode(s) de pilotage, la couche diélectrique et la structure d'électrode(s) d'alignement, forme un réseau de substrat structuré du type FFS,
- l'application d'une couche d'alignement sur la structure d'électrode(s) d'alignement et/ou sur la structure d'électrode(s) commune(s),
- l'assemblage de la cellule en utilisant un adhésif qui peut être durci au moyen d'UV ou qui peut être durci thermiquement, avec des espaceurs,
- le remplissage de la cellule avec le milieu cristallin liquide cholestérique, et
- l'obtention de la texture ULH, en appliquant un champ électrique sur le milieu LC entre la structure d'électrode(s) de pilotage et la structure d'électrode(s) d'alignement, lesquelles structures sont séparées par la couche diélectrique, tout en réalisant un refroidissement lent depuis la phase isotrope jusqu'à la phase cholestérique.

**14.** Utilisation de l'élément de modulation de la lumière selon une ou plusieurs des revendications 1 à 12 dans les dispositifs optiques ou électrooptiques.

**15.** Dispositif optique ou électrooptique comprenant un élément de modulation de la lumière selon une ou plusieurs des revendications 1 à 12.

**16.** Dispositif optique ou électrooptique selon la revendication 15, **caractérisé en ce qu'**il s'agit d'un affichage électrooptique, d'un affichage à cristaux liquides (LCD), d'un dispositif optique non linéaire (NLO), ou d'un dispositif de stockage d'information optique.

**17.** Dispositif optique ou électrooptique selon la revendication 15 ou 16, comprenant au moins un circuit électrique, lequel permet de piloter l'électrode de pilotage en combinaison avec l'électrode commune de l'élément de modulation de la lumière afin de piloter l'élément de modulation de la lumière selon une ou plusieurs des revendications 1 à 12.

**18.** Dispositif optique ou électrooptique selon une ou plusieurs des revendications 15 à 17, comprenant un circuit électrique additionnel, lequel permet de piloter l'électrode d'alignement en combinaison avec l'électrode de pilotage de l'élément de modulation de la lumière selon une ou plusieurs des revendications 1 à 12, afin d'aligner le milieu

cristallin liquide cholestérique dans la texture ULH.

**19.** Dispositif optique ou électrooptique selon une ou plusieurs des revendications 15 à 18, comprenant au moins un circuit électrique, lequel permet de piloter l'élément de modulation de la lumière à l'aide de l'électrode d'alignement en combinaison avec l'électrode commune et lequel permet de façon additionnelle de piloter l'élément de modulation de la lumière à l'aide de l'électrode de pilotage en combinaison avec l'électrode commune.

Fig. 1

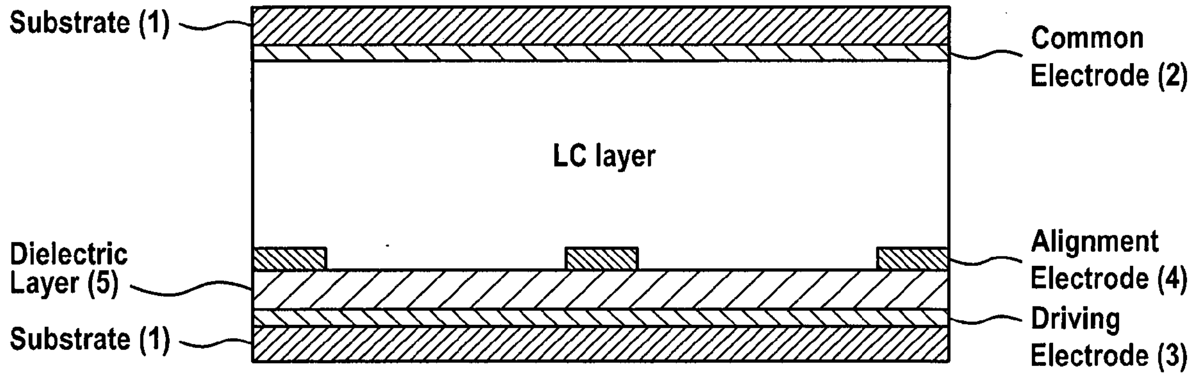
Substrate (1)
Common Electrode (2)
LC layer
Dielectric Layer (5)
Alignment Electrode (4)
Substrate (1)
Driving Electrode (3)

Fig. 2

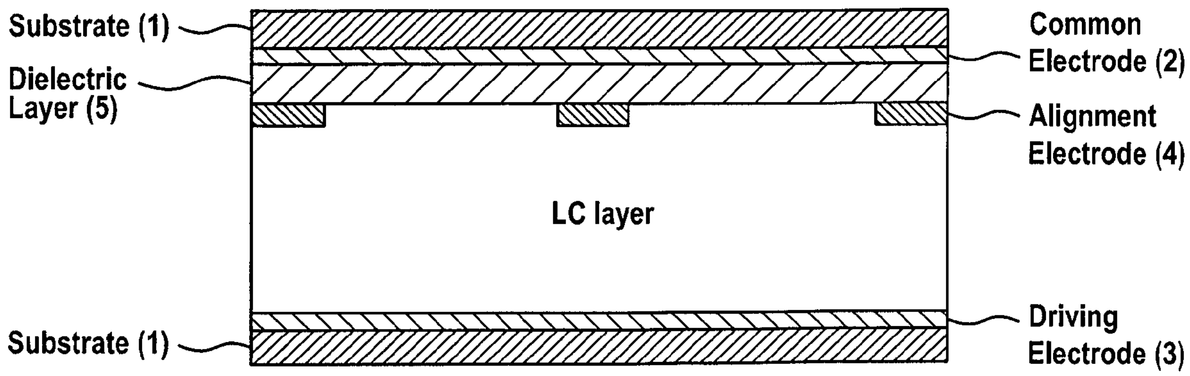
Substrate (1)
Common Electrode (2)
Dielectric Layer (5)
Alignment Electrode (4)
LC layer
Substrate (1)
Driving Electrode (3)

Fig. 3

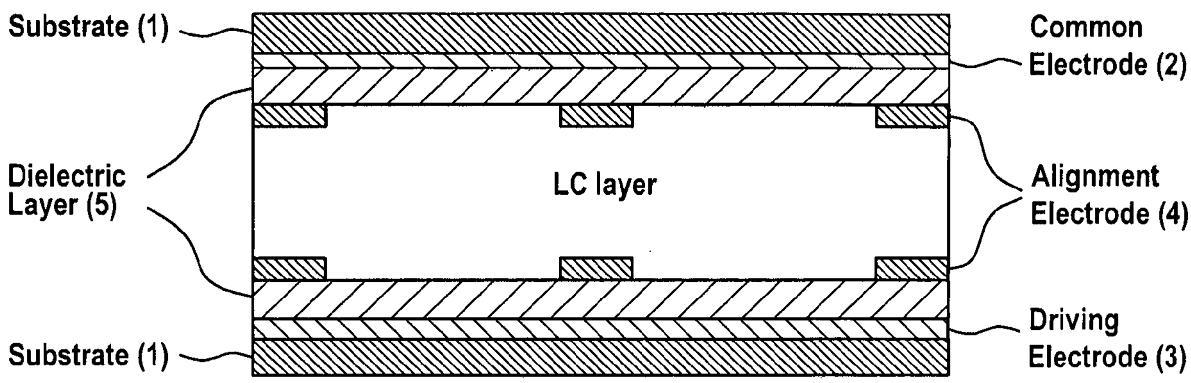
Substrate (1)
Common Electrode (2)
Dielectric Layer (5)
LC layer
Alignment Electrode (4)
Driving Electrode (3)
Substrate (1)

Fig. 4

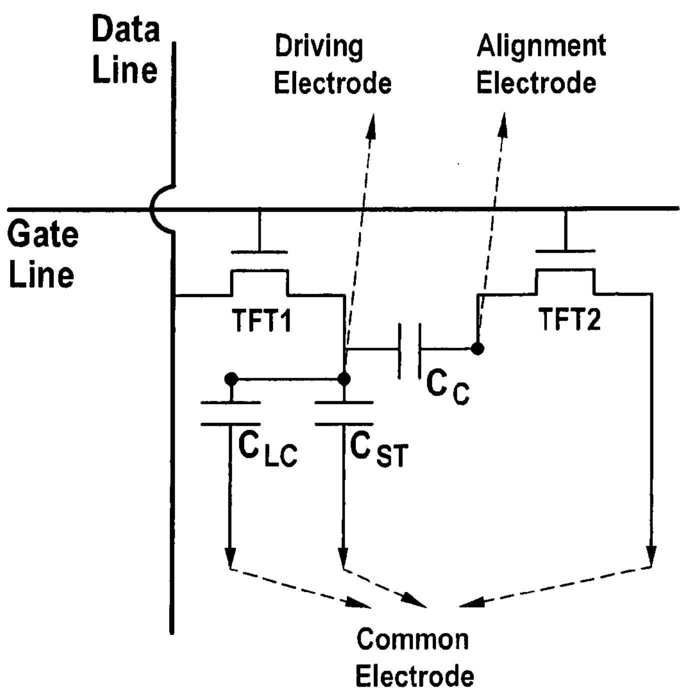
Data Line
Driving Electrode
Alignment Electrode
Gate Line
TFT1
TFT2
$C_C$
$C_{LC}$
$C_{ST}$
Common Electrode

Fig. 5

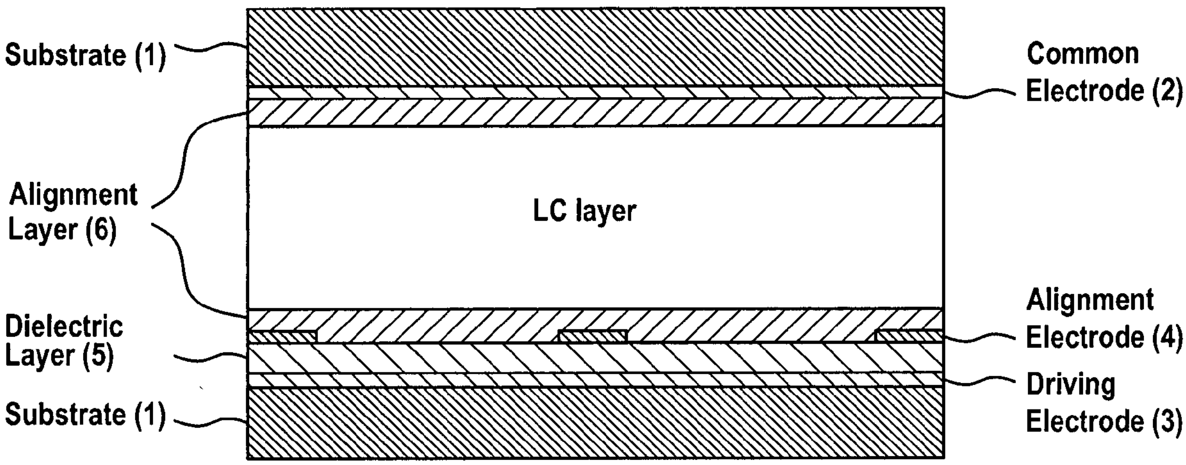
Substrate (1)
Common Electrode (2)
Alignment Layer (6)
LC layer
Alignment Electrode (4)
Dielectric Layer (5)
Driving Electrode (3)
Substrate (1)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 4000451
- EP 0588568 A
- US 20050162585 A1
- US 7038745 B
- US 6099758 A
- GB 2356629 A
- EP 0971016 A
- WO 9800428 A
- GB 2328207 A
- WO 9322397 A
- EP 0261712 A
- DE 19504224
- WO 9522586 A
- WO 9700600 A
- US 5518652 A
- US 5750051 A
- US 5770107 A
- US 6514578 B
- US 7060200 B1
- US 20060172090 A1


### Non-patent literature cited in the description


- **MEYER et al.** *Liquid Crystals,* 1987, vol. 58, 15
- **CHANDRASEKHAR.** Liquid Crystals. Cambridge University Press, 1992
- **P.G. DEGENNES et al.** The Physics of Liquid Crystals. Oxford Science Publications, 1995
- Periodic anchoring condition for alignment of a short pitch cholesteric liquid crystal in uniform lying helix texture. *Appl. Phys. Lett.,* 2010, vol. 96, 113503
- Short pitch cholesteric electro-optical device based on periodic polymer structures. *Appl. Phys. Lett.,* 2009, vol. 95, 011102
- Effect of polymer concentration on stabilized large-tilt-angle flexoelectro-optic switching. *J. Appl. Phys.,* 2006, vol. 99, 023511
- Alignment of cholesteric liquid crystals using periodic anchoring. *J. Appl. Phys.,* 1999, vol. 86 (7
- Alignment of the Uniform Lying Helix Structure in Cholesteric Liquid Crystals. *Jap. J. Appl. Phys.,* 2009, vol. 48, 101302
- **CARBONE et al.** *Mol. Cryst. Liq. Cryst.,* 2011, vol. 544, 37-49
- **GARDINER et al.** *Applied. Phys. Lett.,* 2012, vol. 100, 063501
- **H.J. COLES et al.** *J. Appl. Phys.,* 2006, vol. 99, 034104
- **C. TSCHIERSKE ; G. PELZL ; S. DIELE.** *Angew. Chem.,* 2004, vol. 116, 6340-6368
- **COLES et al.** *Physical Review E,* 2012, vol. 85, 012701
- **HORI, K. ; LIMURO, M. ; NAKAO, A. ; TORIUMI, H.** *J. Mol. Struc.,* 2004, vol. 699, 23-29
- **JOO-HOON PARK et al.** Liquid Crystalline Properties of Dimers Having o-, m- and p- Positional Molecular structures. *Bill. Korean Chem. Soc.,* 2012, vol. 33 (5), 1647-1652
- **COLES, H.J. ; MUSGRAVE, B. ; COLES, M.J. ; WILLMOTT, J.** *J. Mater. Chem.,* 2001, vol. 11, 2709-2716
- **LAGERWALL et al.** *Liquid Crystals,* 1998, vol. 24, 329-334
- Merck Liquid Crystals, Physical Properties of Liquid Crystals. Merck KGaA, November 1997